# EUROPEAN PATENT SPECIFICATION

(11) **EP 4 239 913 B1**
(45) Date of publication and mention of the grant of the patent: **31.12.2025**
(21) Application number: 23159467.2
(22) Date of filing: 01.03.2023
(51) Int. Cl.: H04B 17/30, H04B 17/318, H04W 24/10, H04W 52/02, H04W 52/16, H04W 52/36

(54) **MEASUREMENT REPORTING FOR ENERGY SAVING STATE**
MESSMELDUNG FÜR ENERGIESPARZUSTAND
RAPPORT DE MESURE POUR ÉTAT D'ÉCONOMIE D'ÉNERGIE

(30) Priority: 01.03.2022 US 202263315394 P
(43) Date of publication of application: 06.09.2023
(73) Proprietor: Comcast Cable Communications, LLC, Philadelphia, PA 19103 (US)
(72) Inventor: ZHOU, Hua, Philadelphia, 19103 (US); CIRIK, Ali Cagatay, Philadelphia, 19103 (US); DINAN, Esmael Hejazi, Philadelphia, 19103 (US); JEON, Hyoungsuk, Philadelphia, 19103 (US); DASHTAKI, Mohammad Ghadir Khoshkholgh, Philadelphia, 19103 (US); CHAE, Hyukjin, Philadelphia, 19103 (US); KIM, Taehun, Philadelphia, 19103 (US)
(74) Representative: V.O.

(56) References cited:
- WO-A1-2015/079479
- WO-A1-2023/113674

## Description

### CROSS-REFERENCE TO RELATED APPLICATIONS

This application claims the benefit of U.S. Provisional Application No. 63/315,394, filed on March 1, 2022.

### BACKGROUND

A base station and a wireless device communicate using beams. The wireless device measures reference signals of beams and reports the measurements to the base station. The base station transmits messages to the wireless device based on the reported measurements.

WO 2015/079479 A1 (NEC CORP [JP]) 4 June 2015, discloses a base station in energy saving state notifying UEs of the transition and supplying modified RSRP measurement parameters for cell reselection.

### SUMMARY

The following summary presents a simplified summary of certain features. The summary is not an extensive overview and is not intended to identify key or critical elements.

A wireless device may communicate with a base station. The wireless device may measure a reference signal of one or more beams. Measurements of a group of the reference signals may be determined to satisfy a first threshold. An average measurement of the group of reference signals may be determined and/or reported to the base station for configuring communications between the wireless device and the base station. The base station may determine to reduce power of transmissions, for example, during an energy saving state. As a result of the reduction in transmission power, a sufficient quantity of reference signal measurements by the wireless device may not satisfy the first threshold such that subsequent reporting may not indicate to the base station an accurate indication of cell/beam measurements. A configuration for the wireless device may be used, for example, if the base station enters a power saving state, in order to provide cell/beam measurements with improved accuracy. For example, one or more of a power offset, a second threshold (e.g., lower than the first threshold), and/or other configuration parameter(s) may be used for cell/beam measurements by the wireless device if the base station reduces its transmission power. By making adjustments to cell/beam measurements if the base station reduces its transmission power, advantages may be achieved such as improved accuracy of cell/beam measurements, reduced signaling overhead, and/or increased efficiency in communications such as by reduced handover and/or reduced radio link failure.

These and other features and advantages are described in greater detail below.

### BRIEF DESCRIPTION OF THE DRAWINGS

Some features are shown by way of example, and not by limitation, in the accompanying drawings. In the drawings, like numerals reference similar elements.
FIG. 1A and FIG. 1B show example communication networks.
FIG. 2A shows an example user plane.
FIG. 2B shows an example control plane configuration.
FIG. 3 shows example of protocol layers.
FIG. 4A shows an example downlink data flow for a user plane configuration.
FIG. 4B shows an example format of a Medium Access Control (MAC) subheader in a MAC Protocol Data Unit (PDU).
FIG. 5A shows an example mapping for downlink channels.
FIG. 5B shows an example mapping for uplink channels.
FIG. 6 shows example radio resource control (RRC) states and RRC state transitions.
FIG. 7 shows an example configuration of a frame.
FIG. 8 shows an example resource configuration of one or more carriers.
FIG. 9 shows an example configuration of bandwidth parts (BWPs).
FIG. 10A shows example carrier aggregation configurations based on component carriers.
FIG. 10B shows example group of cells.
FIG. 11A shows an example mapping of one or more synchronization signal/physical broadcast channel (SS/PBCH) blocks.
FIG. 11B shows an example mapping of one or more channel state information reference signals (CSI-RSs).
FIG. 12A shows examples of downlink beam management procedures.
FIG. 12B shows examples of uplink beam management procedures.
FIG. 13A shows an example four-step random access procedure.
FIG. 13B shows an example two-step random access procedure.
FIG. 13C shows an example two-step random access procedure.
FIG. 14A shows an example of control resource set (CORESET) configurations.
FIG. 14B shows an example of a control channel element to resource element group (CCE-to-REG) mapping.
FIG. 15A shows an example of communications between a wireless device and a base station.
FIG. 15B shows example elements of a computing device that may be used to implement any of the various devices described herein
FIG. 16A, FIG. 16B, FIG. 16C, and FIG. 16D show examples of uplink and downlink signal transmission.
FIG. 17A, FIG. 17B, and FIG. 17C show example MAC subheaders.
FIG. 18A and FIG. 18B show example MAC PDUs.
FIG. 19 shows example logical channel identifier (LCID) values.
FIG. 20 shows example LCID values.
FIG. 21A and FIG. 21B show example secondary cell (SCell) Activation/Deactivation MAC control elements (CEs).
FIG. 22 shows an example of BWP activation/deactivation.
FIG. 23 shows examples of various downlink control information (DCI) formats.
FIG. 24A shows an example master information block (MIB) message.
FIG. 24B shows an example configuration of a CORESET.
FIG. 24C shows an example of configuration of a search space.
FIG. 25 shows an example of a system information block (SIB) message.
FIG. 26 shows example RRC configuration parameters.
FIG. 27 shows an example configuration of a search space.
FIG. 28 shows example dormancy management.
FIG. 29A and FIG. 29B show example power saving operations.
FIG. 30A shows an example DCI format.
FIG. 30B shows an example search space set (SSS) group switching.
FIG. 31 shows an example PDCCH skipping-based power saving operation.
FIG. 32 shows example SSB configurations.
FIG. 33 shows example SSB transmissions in a cell by a base station.
FIG. 34 shows example indications of SSB location in an SSB burst.
FIG. 35 shows an example of uplink transmission power determination based pathloss measurement.
FIG. 36 shows an example of RRC configuration of beam/cell measurement.
FIG. 37 shows an example of filter coefficients for layer 3 filtering for channel quality measurement.
FIG. 38 shows an example of RRC configuration of beam/cell measurement report.
FIG. 39 shows an example of transmission power determination for different downlink signals.
FIG. 40 shows an example of beam/cell measurement in energy saving.
FIG. 41 shows an example of beam/cell measurement in energy saving.
FIG. 42 shows an example of beam/cell measurement in energy saving.
FIG. 43 shows an example of beam/cell measurement in energy saving.
FIG. 44 shows an example flowchart of beam/cell measurement in energy saving.
FIG. 45 shows an example of beam/cell measurement in energy saving.
FIG. 46 shows an example of beam/cell measurement in energy saving.
FIG. 47 shows an example of beam/cell measurement in energy saving.
FIG. 48 shows an example of search space configuration for energy saving indication of a base station.

### DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems, which may be used in the technical field of multicarrier communication systems. More particularly, the technology disclosed herein may relate to signaling for resource conservation.

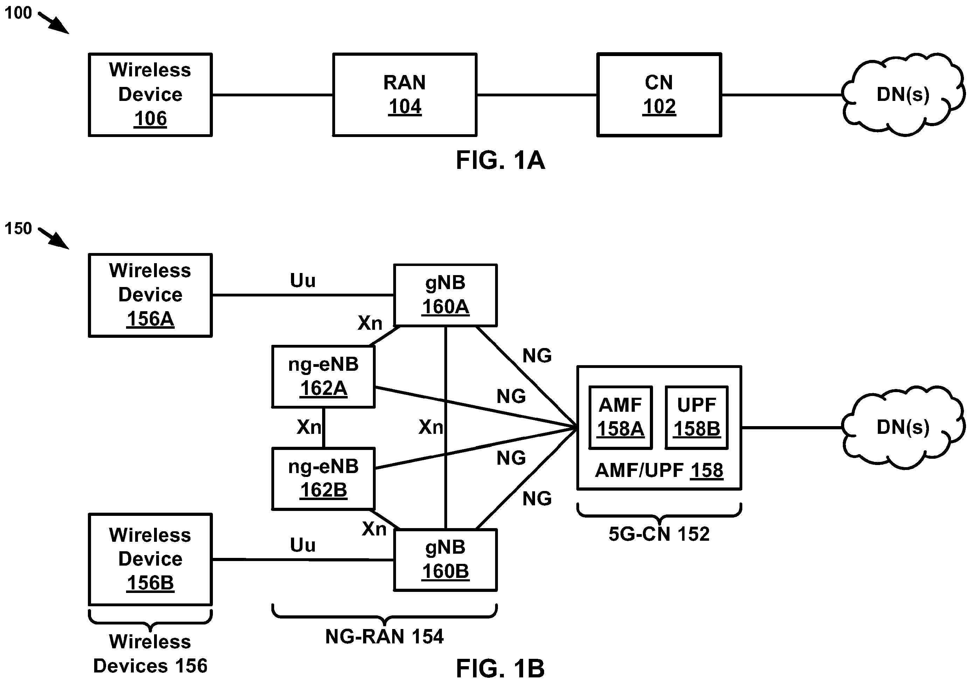

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet). private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle road side unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode UE reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

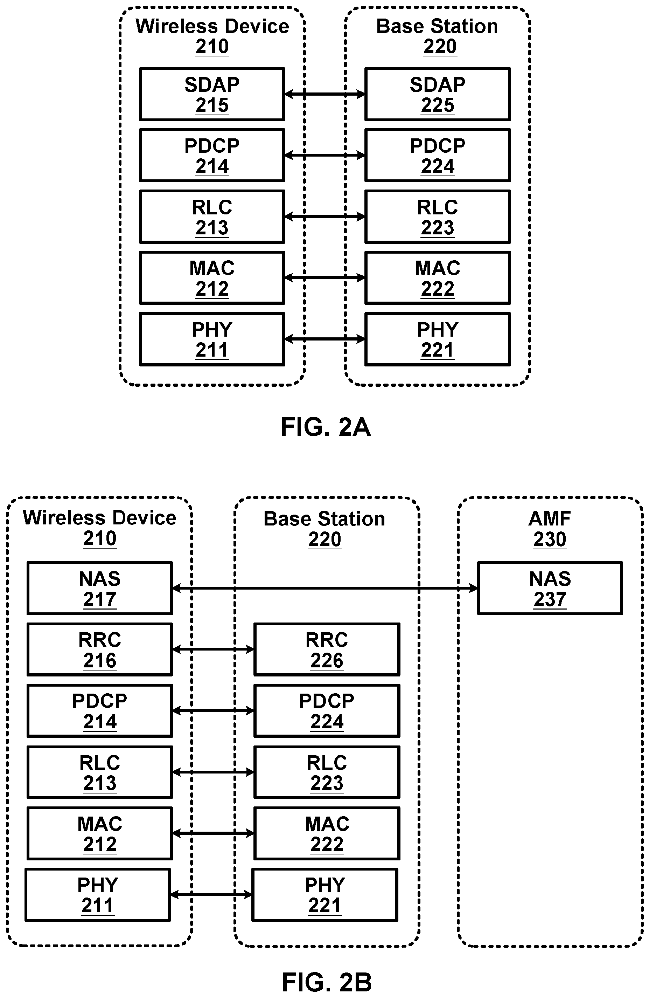

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

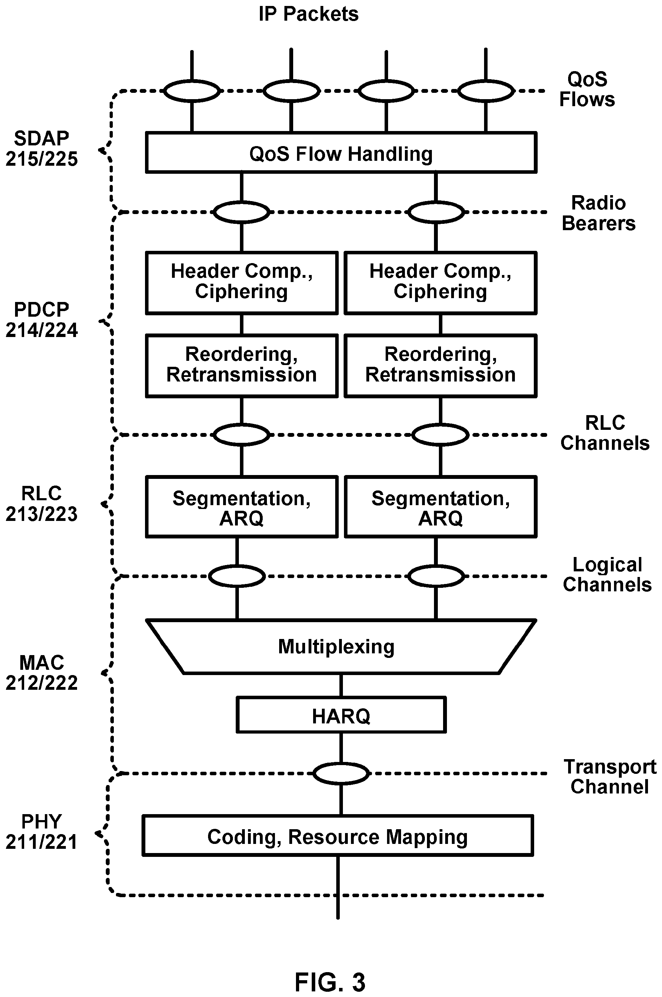

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/de-mapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM); and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

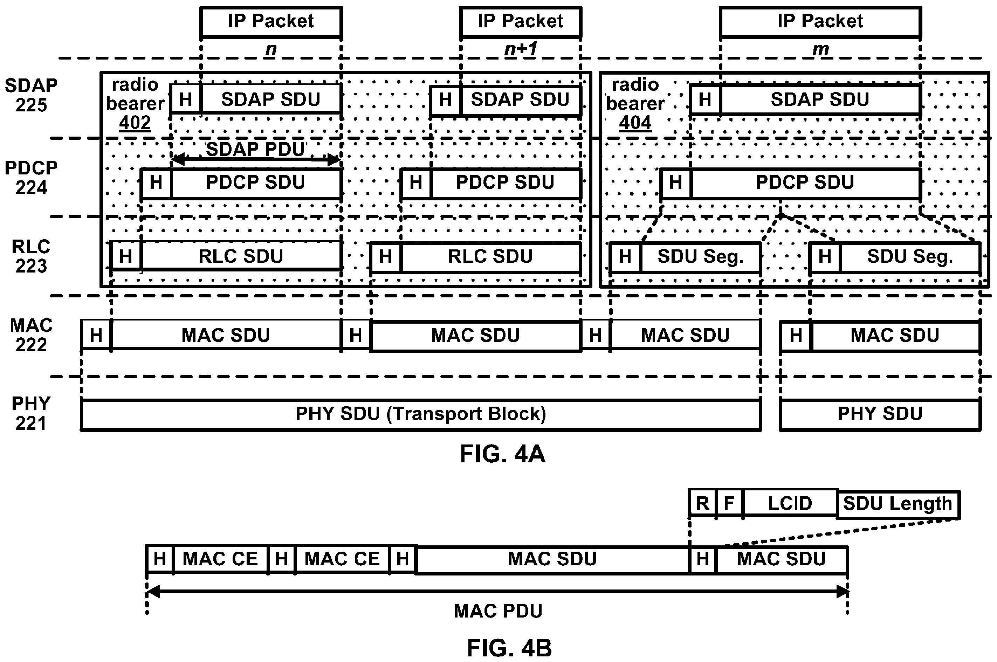

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a number of RLC PDUs (MAC SDUs). The MAC 222 may attach a MAC subheader to an RLC PDU (MAC SDU) to form a TB. The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

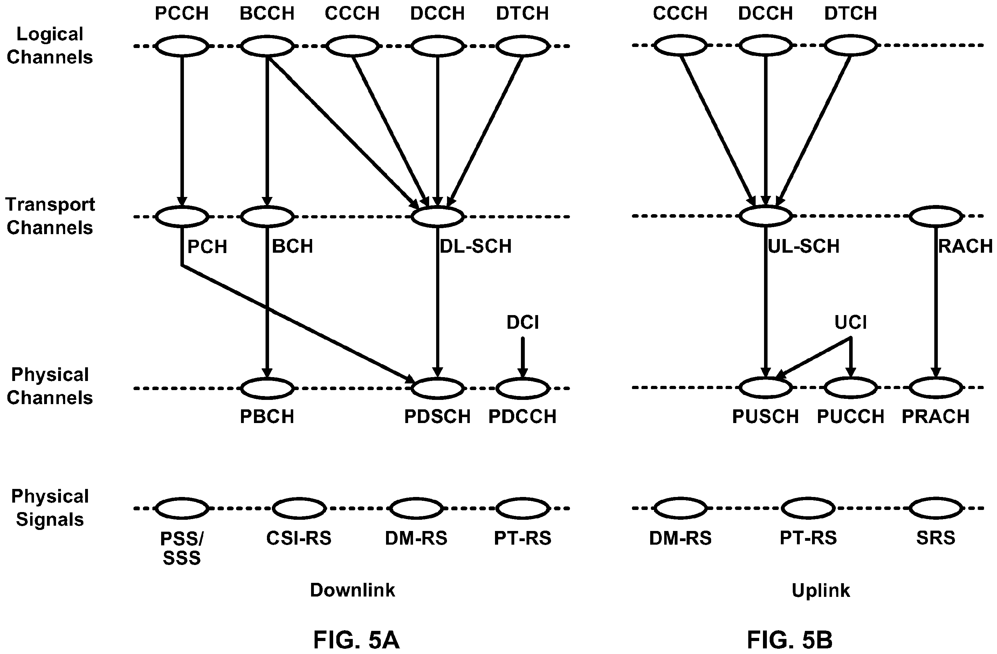

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), pre-coding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

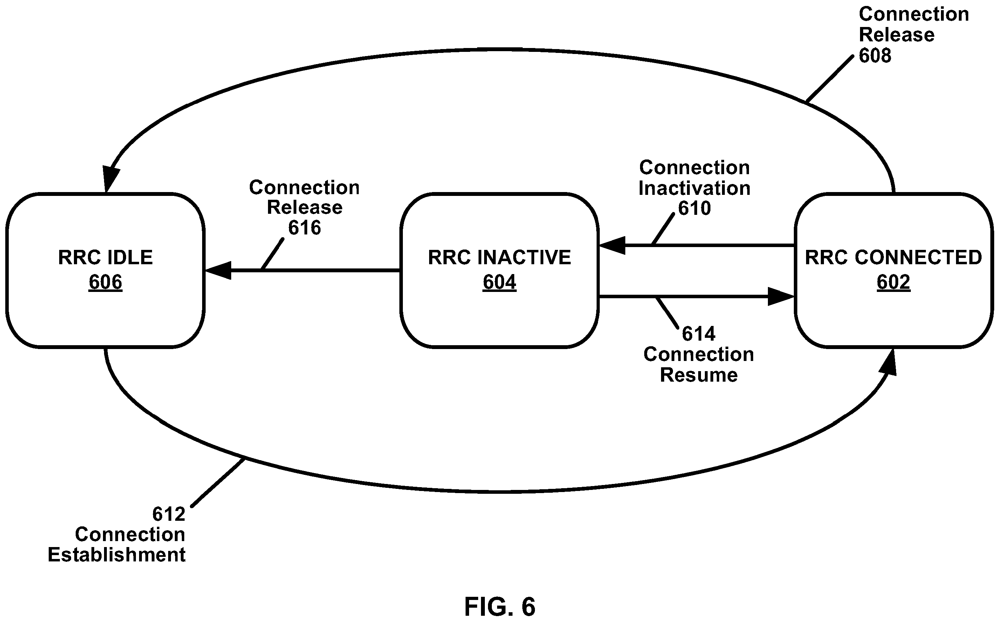

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split in two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

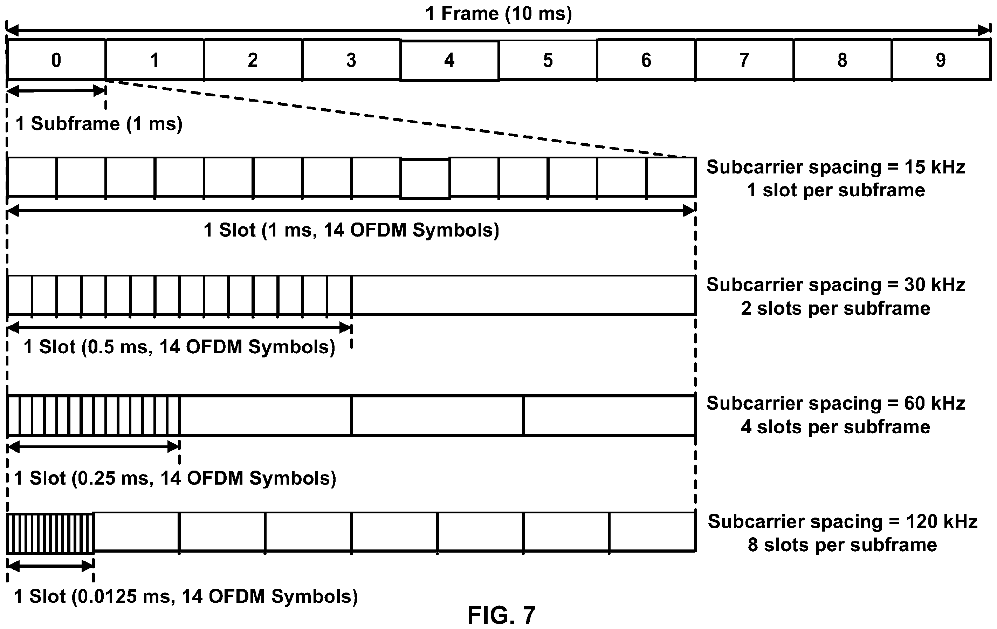

FIG. 7 shows an example configuration of a frame. The frame may comprise, for example, an NR radio frame into which OFDM symbols may be grouped. A frame (e.g., an NR radio frame) may be identified/indicated by a system frame number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 µs, for example, for a numerology in an NR configuration or any other radio configurations. Numerologies may be defined with the following subcarrier spacing/cyclic prefix duration combinations: 15 kHz/4.7 µs; 30 kHz/2.3 µs; 60 kHz/1.2 µs; 120 kHz/0.59 µs; 240 kHz/0.29 µs, and/or any other subcarrier spacing/cyclic prefix duration combinations.

A slot may have a fixed number/quantity of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

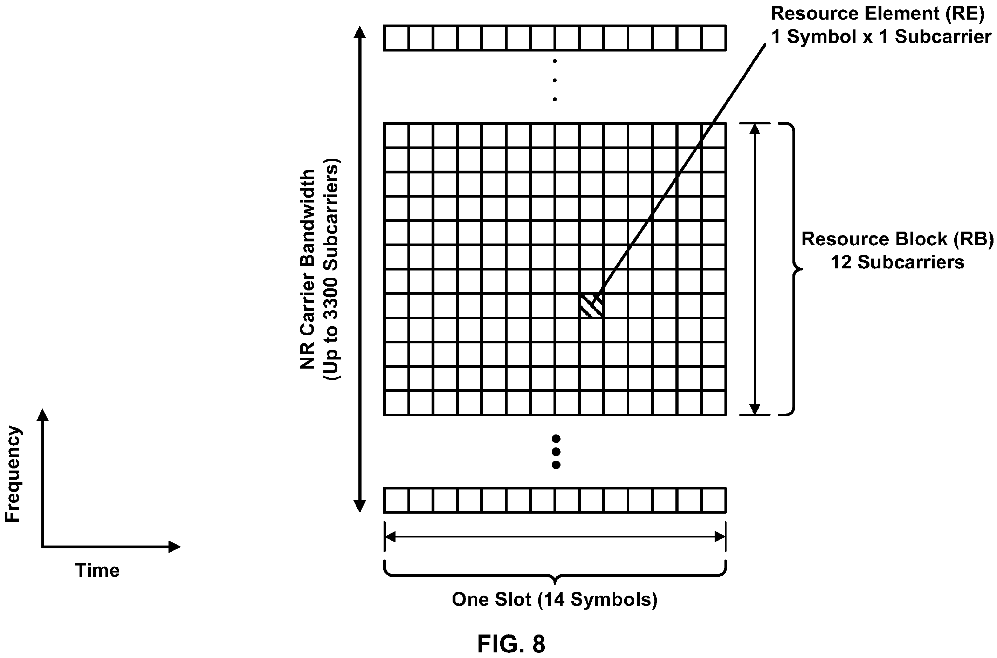

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275 × 12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

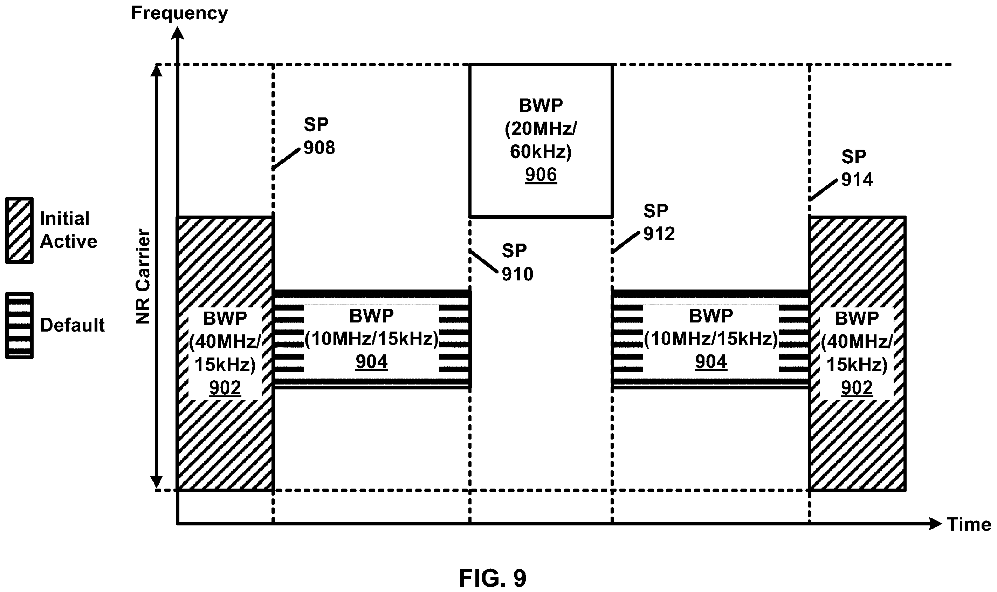

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response receiving DCI indicating BWP 904 as a new active BWP. The wireless device may switch at a switching point 914 from an active BWP 904 to the BWP 902, for example, after or in response receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a number/quantity of serving cells for the wireless device (e.g., one serving cell for a CC), for example, if CA is configured/used. The CCs may have multiple configurations in the frequency domain.

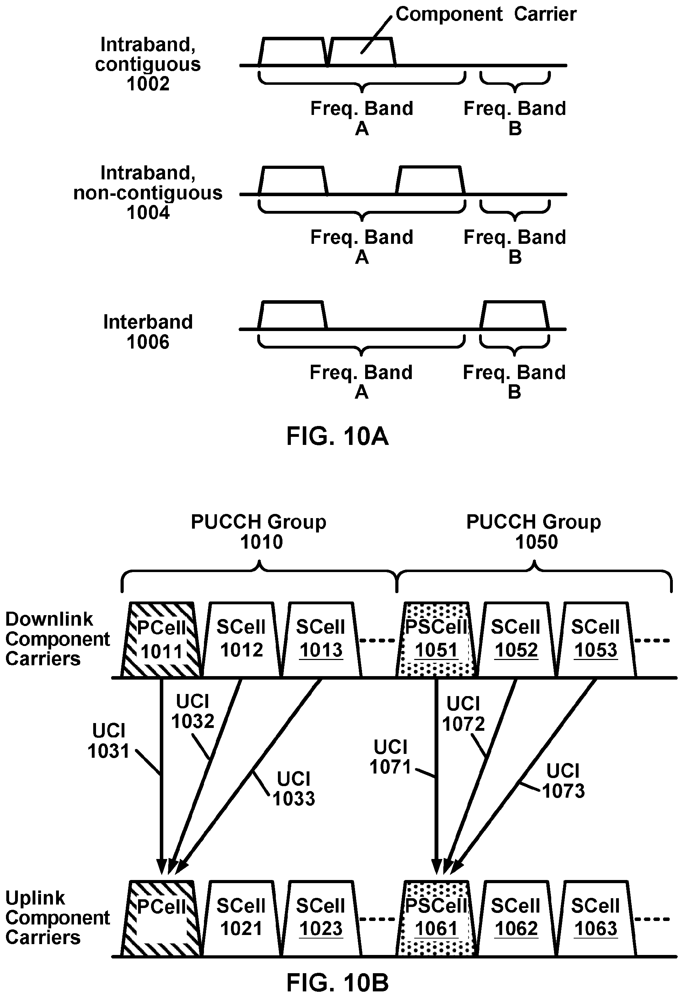

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

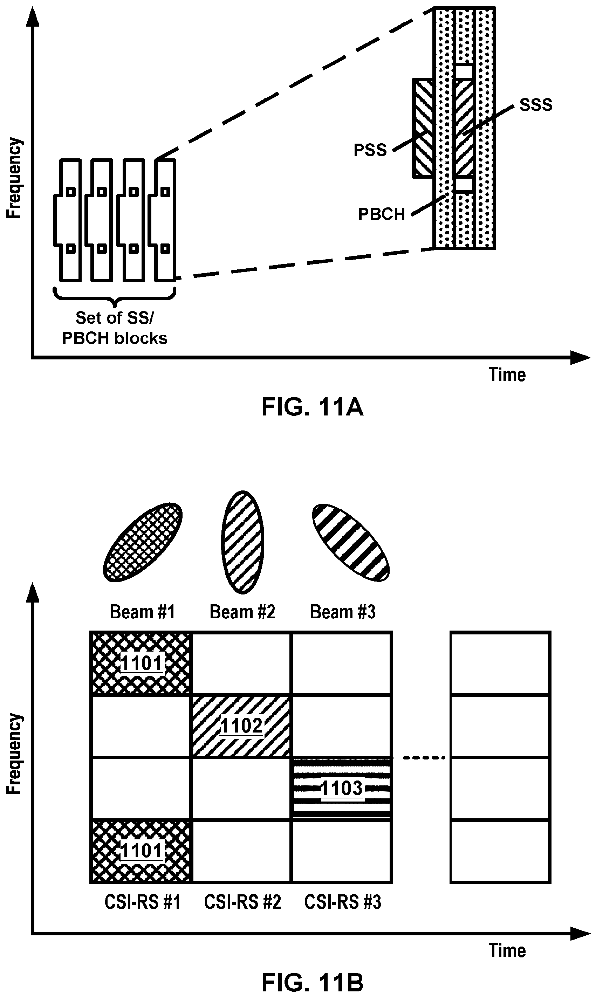

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1.The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a number/quantity (e.g. a maximum number/quantity) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DMRSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI.A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a number/quantity (e.g. the maximum number/quantity) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DMRSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in a SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., QCL-scramblingidentity, crs-portscount, mbsfn-subframeconfiglist, csi-rs-configZPid, qcl-csi-rs-configNZPid), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication (TCI) states comprising a number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

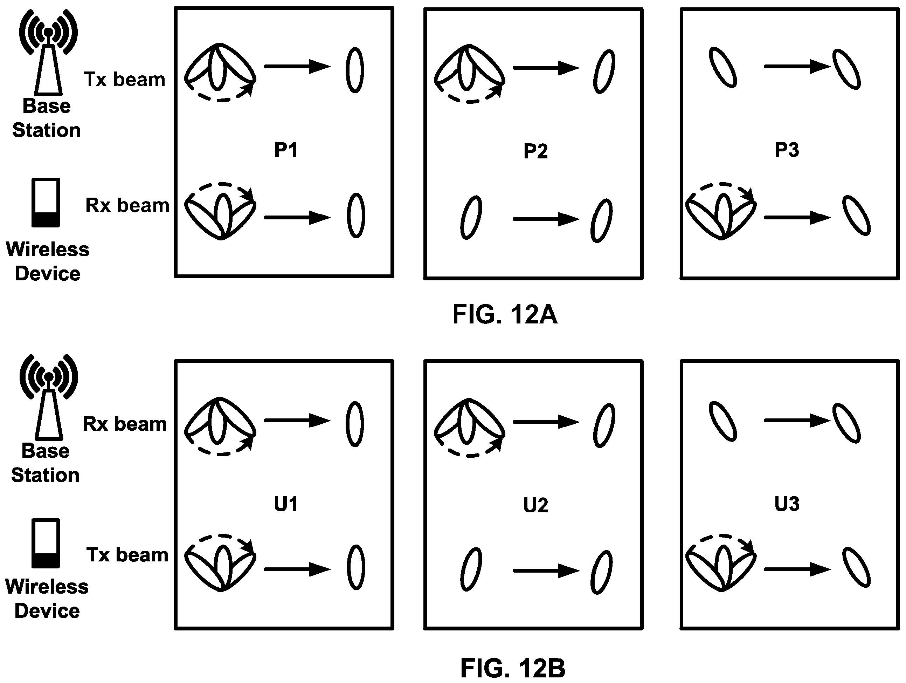

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station and the Rx beams of a wireless device are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station to perform a measurement on Tx beams of a wireless device (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

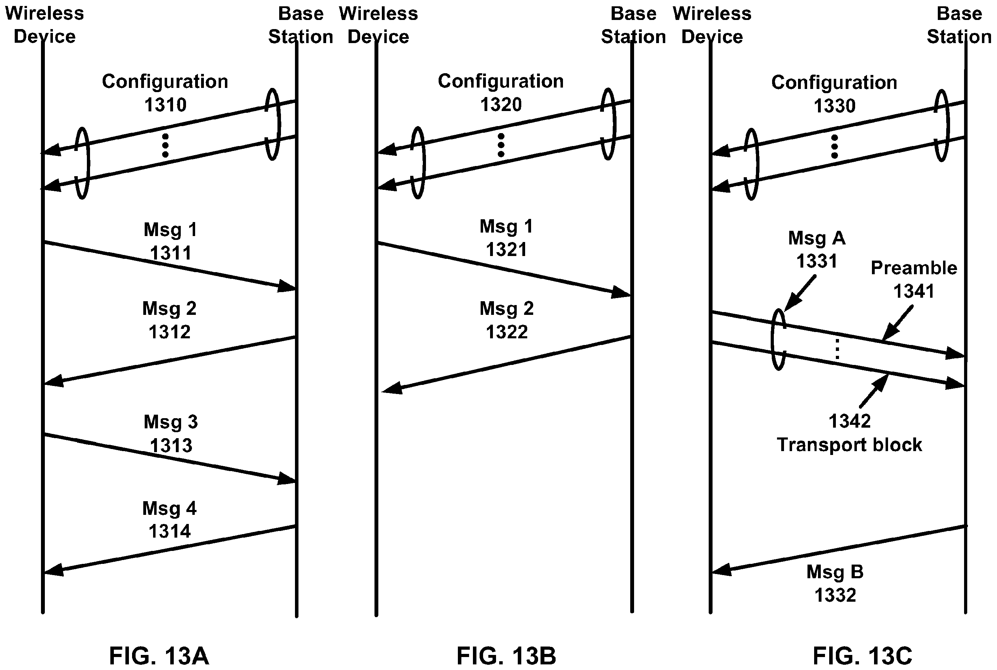

FIG. 13A shows an example four-step random access procedure. The four-step random access procedure may comprise a four-step contention-based random access procedure. A base station may send/transmit a configuration message 1310 to a wireless device, for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., RACH-configGeneral); cell-specific parameters (e.g., RACH-ConfigCommon); and/or dedicated parameters (e.g., RACH-configDedicated). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC_CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., prach-ConfigIndex). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., rsrp-ThresholdSSB and/or rsrp-ThresholdCSI-RS). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs). The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., ra-ssb-OccasionMskIndex and/or ra-OccasionList) may indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., PREAMBLE_POWER_RAMPING_STEP) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., PREAMBLE_TRANSMISSION_COUNTER). The wireless device may determine that a random access procedure has been completed unsuccessfully, for example, if the quantity/number of preamble transmissions exceeds a threshold configured by the one or more RACH parameters (e.g., preambleTransMax) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., ra-ResponseWindow) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type 1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows: $RA - RNTI = 1 + s_id + 14 \times t_id + 14 \times 80 \times f_id + 14 \times 80 \times 8 \times ul_carrier_id$ where s_id may be an index of a first OFDM symbol of the PRACH occasion (e.g., 0 ≤ s_id < 14), t_id may be an index of a first slot of the PRACH occasion in a system frame (e.g., 0 ≤ t_id < 80), f_id may be an index of the PRACH occasion in the frequency domain (e.g., 0 ≤ f_id < 8), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station may, prior to initiation of the procedure, send/transmit a configuration message 1320 to the wireless device. The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., ra-PreambleIndex).

The wireless device may start a time window (e.g., ra-ResponseWindow) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., recoverySearchSpaceId). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station may, prior to initiation of the procedure, send/transmit a configuration message 1330 to the wireless device. The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIG. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a number of contiguous control channel elements (CCEs), for example, based on a payload size of the DCI and/or a coverage of the base station. The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

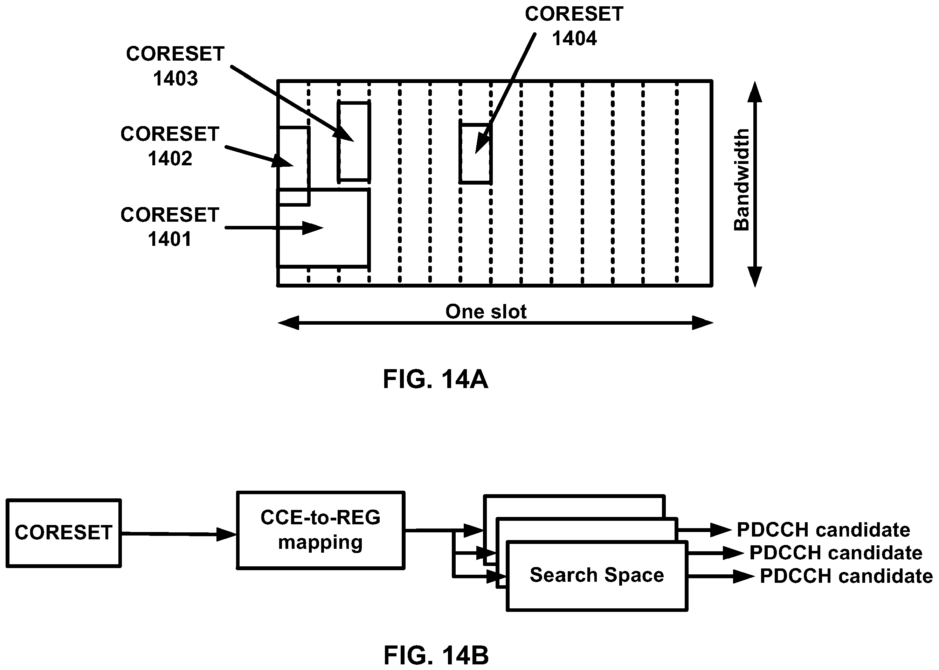

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a number of PDCCH candidates to be monitored per aggregation level; a PDCCH monitoring periodicity and a PDCCH monitoring pattern; one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the number of CCEs, the number of PDCCH candidates in common search spaces, and/or the number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a number of OFDM symbols (e.g., between four and fourteen OFDM symbols) and may comprise two or fewer bits. The wireless device may use PUCCH format 1, for example, if the transmission is over/via four or more symbols and the number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., pucch-Resourceid), and/or a number (e.g. a maximum number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets. The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

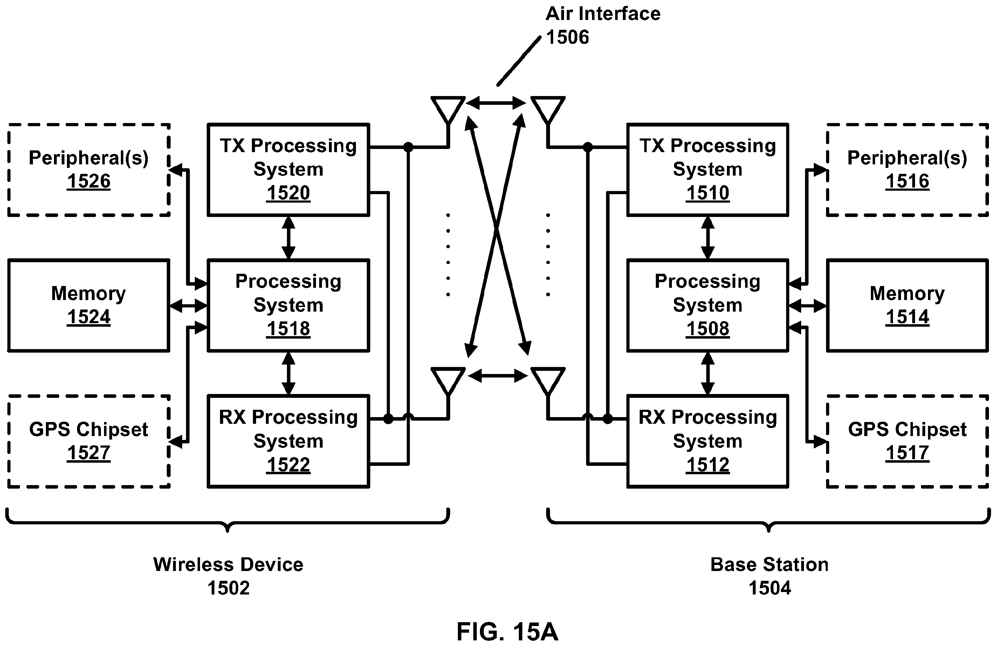

FIG. 15A shows an example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

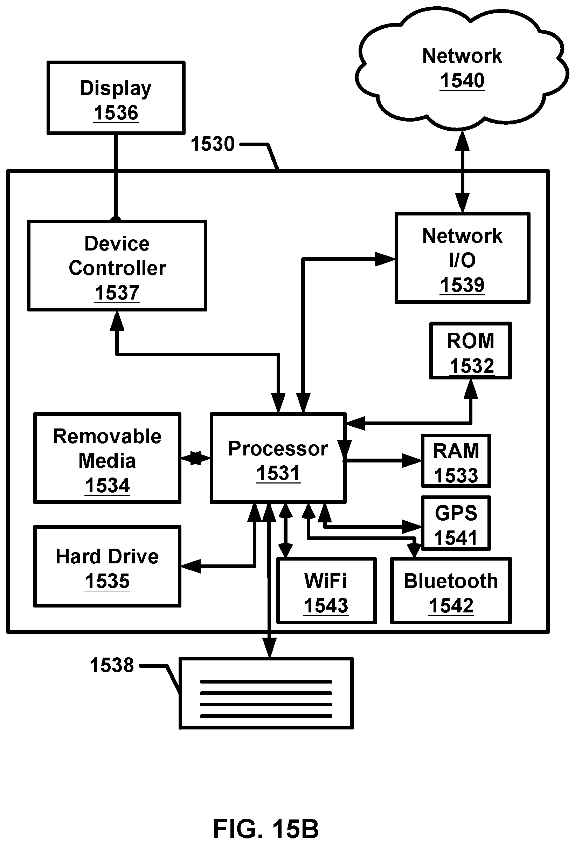

FIG. 15B shows example elements of a computing device that may be used to implement any of the various devices described herein, including, for example, the base station 160A, 160B, 162A, 162B, 220, and/or 1504, the wireless device 106, 156A, 156B, 210, and/or 1502, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

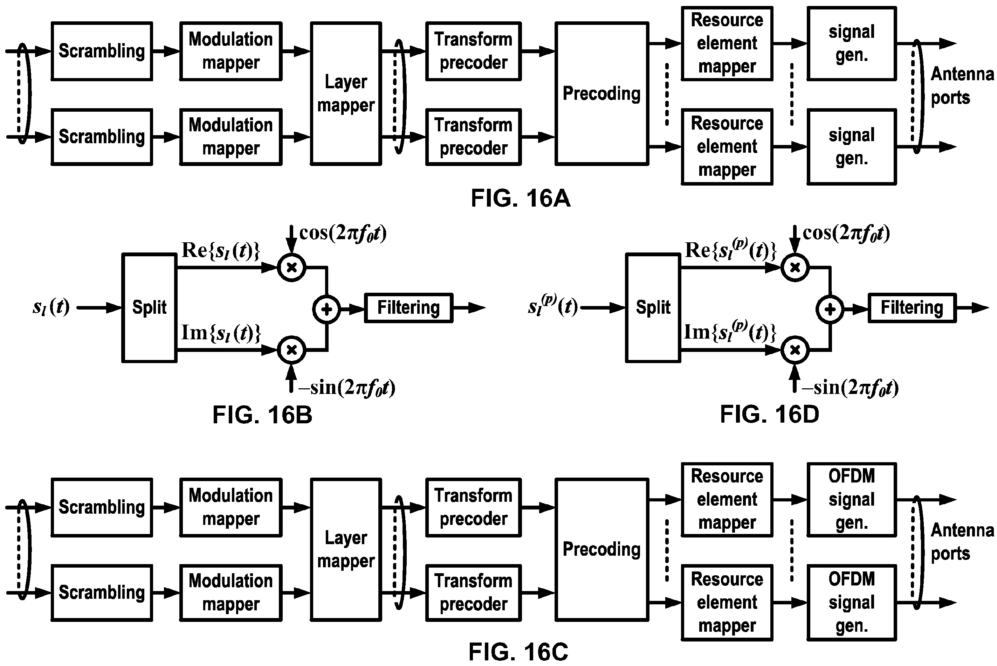

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, once it is started and continue running until it is stopped or until it expires. A timer may be started, for example, if it is not running or restarted if it is running. A timer may be associated with a value (e.g., the timer may be started or restarted from a value or may be started from zero and expire once it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

A base station may communicate with a wireless device via a wireless network (e.g., a communication network). The communications may use/employ one or more radio technologies (e.g., new radio technologies, legacy radio technologies, and/or a combination thereof). The one or more radio technologies may comprise at least one of: one or multiple technologies related to a physical layer; one or multiple technologies related to a medium access control layer; and/or one or multiple technologies related to a radio resource control layer. One or more enhanced radio technologies described herein may improve performance of a wireless network. System throughput, transmission efficiencies of a wireless network, and/or data rate of transmission may be improved, for example, based on one or more configurations described herein. Battery consumption of a wireless device may be reduced, for example, based on one or more configurations described herein. Latency of data transmission between a base station and a wireless device may be improved, for example, based on one or more configurations described herein. A network coverage of a wireless network may increase, for example, based on one or more configurations described herein.

A base station may send/transmit one or more MAC PDUs to a wireless device. A MAC PDU may be a bit string that is byte aligned (e.g., aligned to a multiple of eight bits) in length. Bit strings may be represented by one or more tables in which the most significant bit may be the leftmost bit of the first line of a table, and the least significant bit may be the rightmost bit on the last line of the table. The bit string may be read from left to right and then in the reading order of the lines (e.g., from the topmost line of the table to the bottommost line of the table). The bit order of a parameter field within a MAC PDU may be represented with the first and most significant bit in the leftmost bit and the last and least significant bit in the rightmost bit.

A MAC SDU may be a bit string that is byte aligned (e.g., aligned to a multiple of eight bits) in length. A MAC SDU may be comprised in a MAC PDU from the first bit onward. A MAC CE may be a bit string that is byte aligned (e.g., aligned to a multiple of eight bits) in length. A MAC subheader may be a bit string that is byte aligned (e.g., aligned to a multiple of eight bits) in length. A MAC subheader may be placed immediately in front of a corresponding MAC SDU, MAC CE, or padding. A wireless device (e.g., the MAC entity of the wireless device) may ignore a value of reserved bits in a downlink (DL) MAC PDU.

A MAC PDU may comprise one or more MAC subPDUs. A MAC subPDU of the one or more MAC subPDUs may comprise: a MAC subheader only (including padding); a MAC subheader and a MAC SDU; a MAC subheader and a MAC CE; a MAC subheader and padding, and/or a combination thereof. The MAC SDU may be of variable size. A MAC subheader may correspond to a MAC SDU, a MAC CE, or padding.

A MAC subheader may comprise: an R field with a one-bit length; an F field with a one-bit length; an LCID field with a multi-bit length; an L field with a multi-bit length; and/or a combination thereof, for example, if the MAC subheader corresponds to a MAC SDU, a variable-sized MAC CE, or padding.

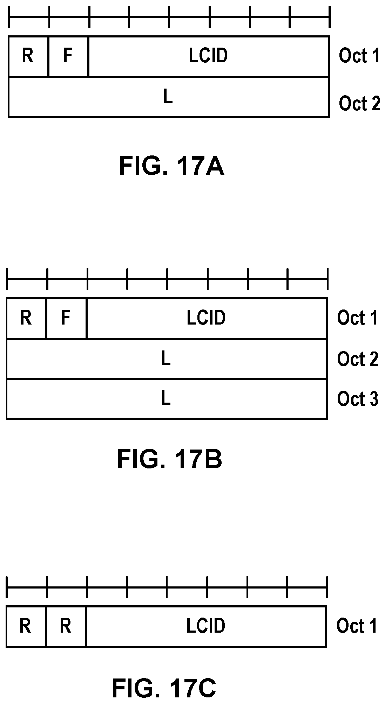

FIG. 17A shows an example of a MAC subheader. The MAC subheader may comprise an R field, an F field, an LCID field, and/or an L field. The LCID field may be six bits in length (or any other quantity of bits). The L field may be eight bits in length (or any other quantity of bits). Each of the R field and the F field may be one bit in length (or any other quantity of bits). FIG. 17B shows an example of a MAC subheader. The MAC subheader may comprise an R field, an F field, an LCID field, and/or an L field. Similar to the MAC subheader shown in FIG. 17A, the LCID field may be six bits in length (or any other quantity of bits), the R field may be one bit in length (or any other quantity of bits), and the F field may be one bit in length (or any other quantity of bits). The L field may be sixteen bits in length (or any other quantity of bits, such as greater than sixteen bits in length). A MAC subheader may comprise: an R field with a two-bit length (or any other quantity of bits) and/or an LCID field with a multi-bit length (or single bit length), for example, if the MAC subheader corresponds to a fixed sized MAC CE or padding. FIG. 17C shows an example of a MAC subheader. In the example MAC subheader shown in FIG. 17C, the LCID field may be six bits in length (or any other quantity of bits), and the R field may be two bits in length (or any other quantity of bits).

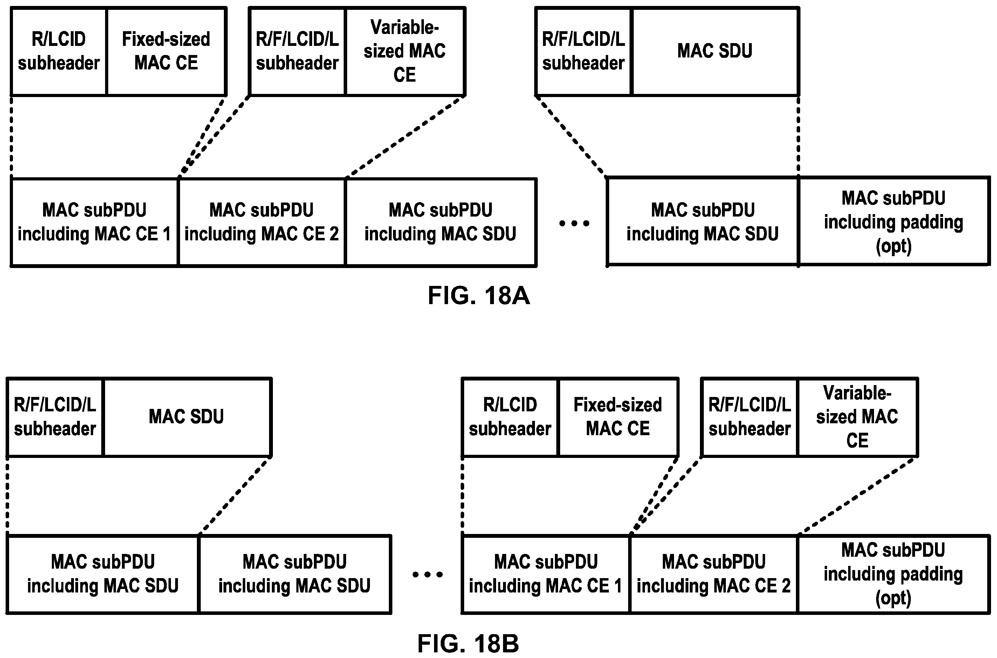

FIG. 18A shows an example of a MAC PDU (e.g., a DL MAC PDU). Multiple MAC CEs, such as MAC CE 1 and 2 shown in FIG. 18A, may be placed together (e.g., located within the same MAC PDU). A MAC subPDU comprising a MAC CE may be placed (e.g., located within a MAC PDU) before any MAC subPDU comprising a MAC SDU or a MAC subPDU comprising padding. MAC CE 1 may be a fixed-sized MAC CE that follows a first-type MAC subheader. The first-type MAC subheader may comprise an R field and an LCID field (e.g., similar to the MAC CE shown in FIG. 17C). MAC CE 2 may be a variable-sized MAC CE that follows a second-type MAC subheader. The second-type MAC subheader may comprise an R field, an F field, an LCID field and an L field (e.g., similar to the MAC CEs shown in FIG. 17A or FIG. 17B). The size of a MAC SDU that follows the second-type MAC subheader may vary.

FIG. 18B shows an example of a MAC PDU (e.g., a UL MAC PDU). Multiple MAC CEs, such as MAC CE 1 and 2 shown in FIG. 18B, may be placed together (e.g., located within the same MAC PDU). A MAC subPDU comprising a MAC CE may be placed (e.g., located within a MAC PDU) after all MAC subPDUs comprising a MAC SDU. The MAC subPDU and/or the MAC subPDU comprising a MAC CE may be placed (e.g., located within a MAC PDU) before a MAC subPDU comprising padding. Similar to the MAC CEs shown in FIG. 18A, MAC CE 1 shown in FIG. 18B may be a fixed-sized MAC CE that follows a first-type MAC subheader. The first-type MAC subheader may comprise an R field and an LCID field (e.g., similar to the MAC CE shown in FIG. 17C). Similar to the MAC CEs shown in FIG. 18A, MAC CE 2 shown in FIG. 18B may be a variable-sized MAC CE that follows a second-type MAC subheader. The second-type MAC subheader may comprise an R field, an F field, an LCID field and an L field (e.g., similar to the MAC CEs shown in FIG. 17A or FIG. 17B). The size of a MAC SDU that follows the second-type MAC subheader may vary.

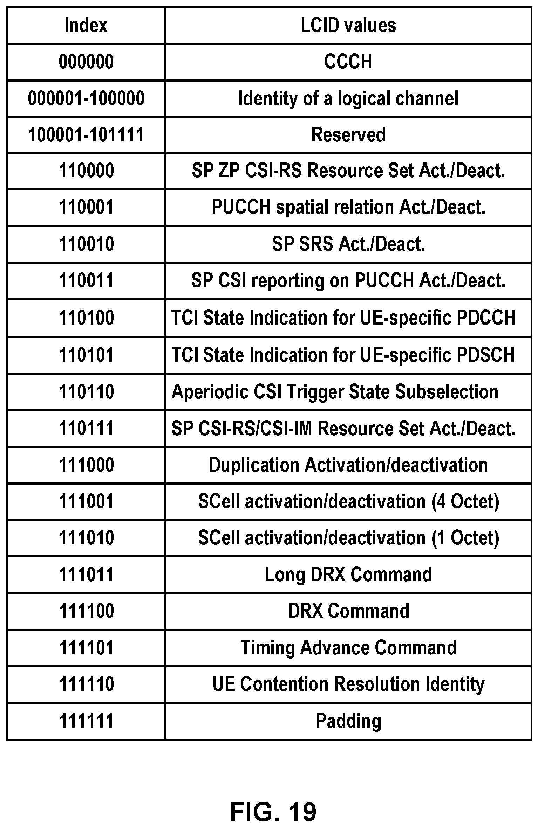

A base station (e.g., the MAC entity of a base station) may send/transmit one or more MAC CEs to a wireless device (e.g., a MAC entity of a wireless device). FIG. 19 shows example LCID values. The LCID values may be associated with one or more MAC CEs. The LCID values may be associated with a downlink channel, such as a DL-SCH. The one or more MAC CEs may comprise at least one of: an semi-persistent zero power CSI-RS (SP ZP CSI-RS) Resource Set Activation/Deactivation MAC CE, a PUCCH spatial relation Activation/Deactivation MAC CE, an SP SRS Activation/Deactivation MAC CE, an SP CSI reporting on PUCCH Activation/Deactivation MAC CE, a TCI State Indication for wireless device-specific (e.g., UE-specific) PDCCH MAC CE, a TCI State Indication for wireless device-specific (e.g., UE-specific) PDSCH MAC CE, an Aperiodic CSI Trigger State Subselection MAC CE, an SP CSI-RS/CSI interference measurement (CSI-IM) Resource Set Activation/Deactivation MAC CE, a wireless device (e.g., UE) contention resolution identity MAC CE, a timing advance command MAC CE, a DRX command MAC CE, a Long DRX command MAC CE, an SCell activation/deactivation MAC CE (e.g., 1 Octet), an SCell activation/deactivation MAC CE (e.g., 4 Octet), and/or a duplication activation/deactivation MAC CE. A MAC CE, such as a MAC CE sent/transmitted by a base station (e.g., a MAC entity of a base station) to a wireless device (e.g., a MAC entity of a wireless device), may be associated with (e.g., correspond to) an LCID in the MAC subheader corresponding to the MAC CE. Different MAC CEs may correspond to a different LCID in the MAC subheader corresponding to the corresponding MAC CE. An LCID having an index value "111011" in a MAC subheader may indicate that a MAC CE associated with the MAC subheader is a long DRX command MAC CE, for example, for a MAC CE associated with the downlink.

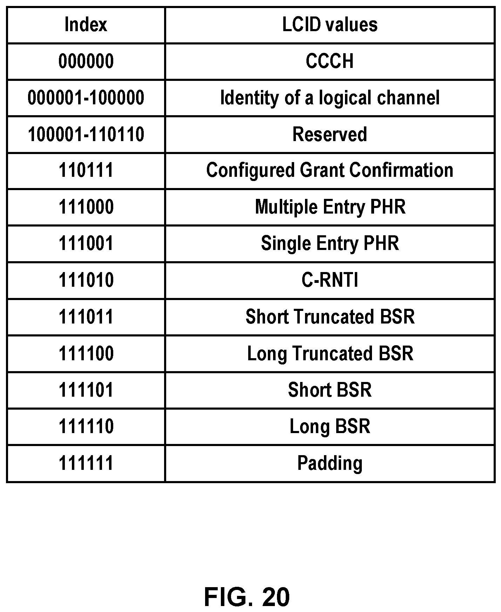

A wireless device (e.g., a MAC entity of a wireless device) may send/transmit to a base station (e.g., a MAC entity of a base station) one or more MAC CEs. FIG. 20 shows an example LCID values that may be associated with the one or more MAC CEs. The LCID values may be associated with an uplink channel, such as a UL-SCH. The one or more MAC CEs may comprise at least one of: a short buffer status report (BSR) MAC CE, a long BSR MAC CE, a C-RNTI MAC CE, a configured grant confirmation MAC CE, a single entry power headroom report (PHR) MAC CE, a multiple entry PHR MAC CE, a short truncated BSR, and/or a long truncated BSR. A MAC CE may be associated with (e.g., correspond to) an LCID in the MAC subheader corresponding to the MAC CE. Different MAC CEs may correspond to a different LCID in the MAC subheader corresponding to the MAC CE. An LCID having an index value "111011" in a MAC subheader may indicate that a MAC CE associated with the MAC subheader is a short-truncated command MAC CE, for example, for a MAC CE associated with the uplink.

Two or more component carriers (CCs) may be aggregated, such as in carrier aggregation (CA). A wireless device may simultaneously receive and/or transmit data via one or more CCs, for example, depending on capabilities of the wireless device (e.g., using the technique of CA). A wireless device may support CA for contiguous CCs and/or for non-contiguous CCs. CCs may be organized into cells. CCs may be organized into one PCell and one or more SCells.

A wireless device may have an RRC connection (e.g., one RRC connection) with a network, for example, if the wireless device is configured with CA. During an RRC connection establishment/re-establishment/handover, a cell providing/sending/configuring NAS mobility information may be a serving cell. During an RRC connection re-establishment/handover procedure, a cell providing/sending/configuring a security input may be a serving cell. The serving cell may be a PCell. A base station may send/transmit, to a wireless device, one or more messages comprising configuration parameters of a plurality of SCells, for example, depending on capabilities of the wireless device.

A base station and/or a wireless device may use/employ an activation/deactivation mechanism of an SCell, for example, if configured with CA. The base station and/or the wireless device may use/employ an activation/deactivation mechanism of an SCell, for example, to improve battery use and/or power consumption of the wireless device. A base station may activate or deactivate at least one of one or more SCells, for example, if a wireless device is configured with the one or more SCells. An SCell may be deactivated unless an SCell state associated with the SCell is set to an activated state (e.g., "activated") or a dormant state (e.g., "dormant"), for example, after configuring the SCell.

A wireless device may activate/deactivate an SCell. A wireless device may activate/deactivate a cell, for example, based on (e.g., after or in response to) receiving an SCell Activation/Deactivation MAC CE. The SCell Activation/Deactivation MAC CE may comprise one or more fields associated with one or more SCells, respectively, to indicate activation or deactivation of the one or more SCells. The SCell Activation/Deactivation MAC CE may correspond to one octet comprising seven fields associated with up to seven SCells, respectively, for example, if the aggregated cell has less than eight SCells. The SCell Activation/Deactivation MAC CE may comprise an R field. The SCell Activation/Deactivation MAC CE may comprise a plurality of octets comprising more than seven fields associated with more than seven SCells, for example, if the aggregated cell has more than seven SCells.

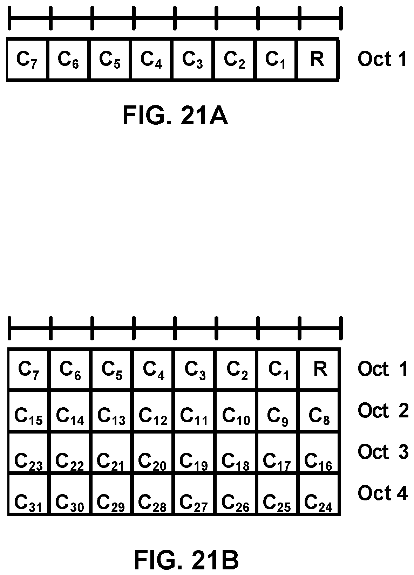

FIG. 21A shows an example SCell Activation/Deactivation MAC CE of one octet. A first MAC PDU subheader comprising a first LCID (e.g., '111010' as shown in FIG. 19) may indicate/identify the SCell Activation/Deactivation MAC CE of one octet. The SCell Activation/Deactivation MAC CE of one octet may have a fixed size. The SCell Activation/Deactivation MAC CE of one octet may comprise a single octet. The single octet may comprise a first quantity/number of C-fields (e.g., seven or any other quantity/number) and a second quantity/number of R-fields (e.g., one or any other quantity/number).

FIG. 21B shows an example SCell Activation/Deactivation MAC CE of four octets. A second MAC PDU subheader comprising a second LCID (e.g., '111001' as shown in FIG. 19) may indicate/identify the SCell Activation/Deactivation MAC CE of four octets. The SCell Activation/Deactivation MAC CE of four octets may have a fixed size. The SCell Activation/Deactivation MAC CE of four octets may comprise four octets. The four octets may comprise a third quantity/number of C-fields (e.g., 31 or any other quantity/number) and a fourth quantity/number of R-fields (e.g., 1 or any other quantity/number).

As shown in FIG. 21A and/or FIG. 21B, a Ci field may indicate an activation/deactivation status of an SCell with/corresponding to an SCell index i, for example, if an SCell with/corresponding to SCell index i is configured. An SCell with an SCell index i may be activated, for example, if the Ci field is set to one. An SCell with an SCell index i may be deactivated, for example, if the Ci field is set to zero. The wireless device may ignore the Ci field, for example, if there is no SCell configured with SCell index i. An R field may indicate a reserved bit. The R field may be set to zero or any other value (e.g., for other purposes).

A base station may configure a wireless device with uplink (UL) bandwidth parts (BWPs) and downlink (DL) BWPs to enable bandwidth adaptation (BA) on a PCell. The base station may further configure the wireless device with at least DL BWP(s) (i.e., there may be no UL BWPs in the UL) to enable BA on an SCell, for example, if carrier aggregation is configured. An initial active BWP may be a first BWP used for initial access, for example, for a PCell. A first active BWP may be a second BWP configured for the wireless device to operate on a SCell upon the SCell being activated. A base station and/or a wireless device may independently switch a DL BWP and an UL BWP, for example, in paired spectrum (e.g., FDD). A base station and/or a wireless device may simultaneously switch a DL BWP and an UL BWP, for example, in unpaired spectrum (e.g., TDD).

A base station and/or a wireless device may switch a BWP between configured BWPs using a DCI message or a BWP inactivity timer. The base station and/or the wireless device may switch an active BWP to a default BWP based on (e.g., after or in response to) an expiry of the BWP inactivity timer associated with the serving cell, for example, if the BWP inactivity timer is configured for a serving cell. The default BWP may be configured by the network. One UL BWP for an uplink carrier (e.g., each uplink carrier) and one DL BWP may be active at a time in an active serving cell, for example, if FDD systems are configured with BA. One DL/UL BWP pair may be active at a time in an active serving cell, for example, for TDD systems. Operating on the one UL BWP and the one DL BWP (or the one DL/UL pair) may improve wireless device battery consumption. BWPs other than the one active UL BWP and the one active DL BWP that the wireless device may work on may be deactivated. The wireless device may not monitor PDCCH transmission, for example, on deactivated BWPs. The wireless device may not send (e.g., transmit) on PUCCH, PRACH, and UL-SCH, for example, on deactivated BWPs.

A serving cell may be configured with at most a first number/quantity (e.g., four) of BWPs. There may be one active BWP at any point in time, for example, for an activated serving cell. A BWP switching for a serving cell may be used to activate an inactive BWP and deactivate an active BWP at a time. The BWP switching may be controlled by a PDCCH transmission indicating a downlink assignment or an uplink grant. The BWP switching may be controlled by a BWP inactivity timer (e.g., bwp-InactivityTimer). The BWP switching may be controlled by a wireless device (e.g., a MAC entity of the wireless device) based on (e.g., after or in response to) initiating a Random Access procedure. One BWP may be initially active without receiving a PDCCH transmission indicating a downlink assignment or an uplink grant, for example, upon addition of an SpCell or activation of an SCell. The active BWP for a serving cell may be indicated by configuration parameter(s) (e.g., parameters of RRC message) and/or PDCCH transmission. A DL BWP may be paired with a UL BWP for unpaired spectrum, and BWP switching may be common for both UL and DL.

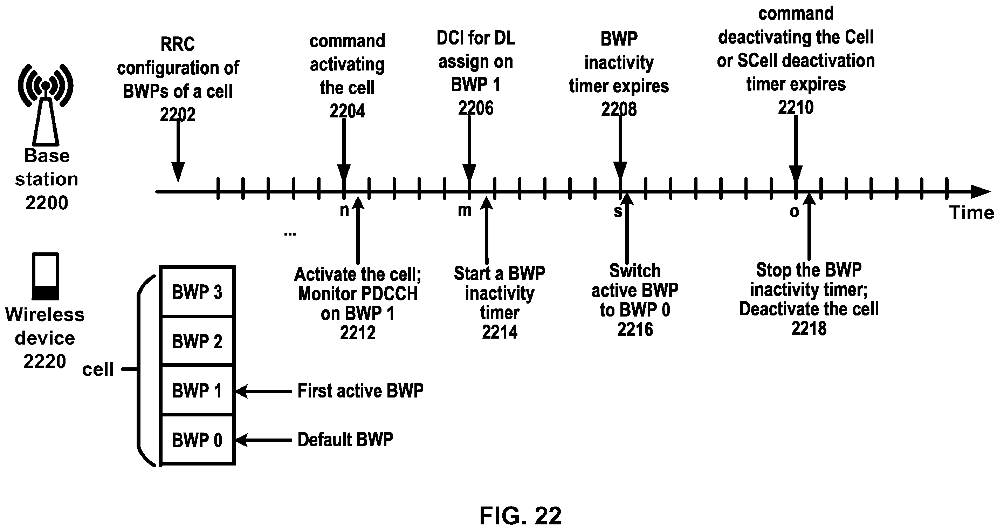

FIG. 22 shows an example of BWP activation/deactivation. The BWP activation/deactivation may be on a cell (e.g., PCell or SCell). The BWP activation/deactivation may be associated with BWP switching (e.g., BWP switching may comprise the BWP activation/deactivation). A wireless device 2220 may receive (e.g., detect) at step 2202, (e.g., from a base station 2200), at least one message (e.g., RRC message) comprising parameters of a cell and one or more BWPs associated with the cell. The RRC message may comprise at least one of: RRC connection reconfiguration message (e.g., RRCReconfiguration), RRC connection reestablishment message (e.g., RRCRestablishment), and/or RRC connection setup message (e.g., RRCSetup). Among the one or more BWPs, at least one BWP may be configured as the first active BWP (e.g., BWP 1), one BWP as the default BWP (e.g., BWP 0). The wireless device 2220 may receive (e.g., detect) a command at step 2204 (e.g., RRC message, MAC CE or DCI message) to activate the cell at an nth slot. The wireless device 2220 may not receive (e.g., detect) a command activating a cell, for example, a PCell. The wireless device 2220 may activate the PCell at step 2212, for example, after the wireless device 2220 receives/detects RRC message comprising configuration parameters of the PCell. The wireless device 2220 may start monitoring a PDCCH transmission on BWP 1 based on (e.g., after or in response to) activating the PCell at step 2212.

The wireless device 2220 may start (or restart) at step 2214, a BWP inactivity timer (e.g., bwp-InactivityTimer) at an mth slot based on (e.g., after or in response to) receiving a DCI message 2206 indicating DL assignment on BWP 1. The wireless device 2220 may switch back at step 2216 to the default BWP (e.g., BWP 0) as an active BWP, for example, if the BWP inactivity timer expires at step 2208, at sth slot. At step 2210, the wireless device 2220 may deactivate the cell and/or stop the BWP inactivity timer, for example, if a secondary cell deactivation timer (e.g., sCellDeactivationTimer) expires at step 2210 (e.g., if the cell is a SCell). The wireless device 2220 may not deactivate the cell and may not apply or use a secondary cell deactivation timer (e.g., sCellDeactivationTimer) on the PCell, for example, based on the cell being a PCell.

A wireless device (e.g., a MAC entity of the wireless device) may apply or use various operations on an active BWP for an activated serving cell configured with a BWP. The various operations may comprise at least one of: sending (e.g., transmitting) on UL-SCH, sending (e.g., transmitting) on RACH, monitoring a PDCCH transmission, sending (e.g., transmitting) PUCCH, receiving DL-SCH, and/or (re-) initializing any suspended configured uplink grants of configured grant Type 1 according to a stored configuration, if any.

A wireless device (e.g., a MAC entity of the wireless device) may not perform certain operations, for example, on an inactive BWP for an activated serving cell (e.g., each activated serving cell) configured with a BWP. The certain operations may include at least one of sending (e.g., transmit) on UL-SCH, sending (e.g., transmit) on RACH, monitoring a PDCCH transmission, sending (e.g., transmit) PUCCH, sending (e.g., transmit) SRS, or receiving DL-SCH. The wireless device (e.g., the MAC entity of the wireless device) may clear any configured downlink assignment and configured uplink grant of configured grant Type 2, and/or suspend any configured uplink grant of configured Type 1, for example, on the inactive BWP for the activated serving cell (e.g., each activated serving cell) configured with the BWP.

A wireless device may perform a BWP switching of a serving cell to a BWP indicated by a PDCCH transmission, for example, if a wireless device (e.g., a MAC entity of the wireless device) receives/detects the PDCCH transmission for the BWP switching and a random access procedure associated with the serving cell is not ongoing. A bandwidth part indicator field value may indicate the active DL BWP, from the configured DL BWP set, for DL receptions, for example, if the bandwidth part indicator field is configured in DCI format 1_1. A bandwidth part indicator field value may indicate the active UL BWP, from the configured UL BWP set, for UL transmissions, for example, if the bandwidth part indicator field is configured in DCI format 0_1.

A wireless device may be provided by a higher layer parameter such as a default DL BWP (e.g., Default-DL-BWP) among the configured DL BWPs, for example, for a primary cell. A default DL BWP is the initial active DL BWP, for example, if a wireless device is not provided with the default DL BWP by the higher layer parameter (e.g., Default-DL-BWP). A wireless device may be provided with a higher layer parameter such as a value of a timer for the primary cell (e.g., bwp-InactivityTimer)The wireless device may increment the timer, if running, every interval of 1 millisecond for frequency range 1 or every 0.5 milliseconds for frequency range 2, for example, if the wireless device may not detect a DCI format 1_1 for paired spectrum operation or if the wireless device may not detect a DCI format 1_1 or DCI format 0_1 for unpaired spectrum operation during the interval.

Procedures of a wireless device on the secondary cell may be same as on the primary cell using a timer value for a secondary cell and the default DL BWP for the secondary cell, for example, if the wireless device is configured for the secondary cell with a higher layer parameter (e.g., Default-DL-BWP) indicating a default DL BWP among the configured DL BWPs and the wireless device is configured with a higher layer parameter (e.g., bwp-InactivityTimer) indicating the timer value. A wireless device may use an indicated DL BWP and an indicated UL BWP on a secondary cell respectively as a first active DL BWP and a first active UL BWP on the secondary cell or carrier, for example, if the wireless device is configured by a higher layer parameter (e.g., Active-BWP-DL-SCell) associated with the first active DL BWP and by a higher layer parameter (e.g., Active-BWP-UL-SCell) associated with the first active UL BWP on the secondary cell or carrier.

A set of PDCCH candidates for a wireless device to monitor may be referred to as PDCCH search space sets. A search space set may comprise a CSS set or a USS set. A wireless device may monitor PDCCH transmission candidates in one or more of the following search spaces sets: a Type0-PDCCH CSS set configured by pdcch-ConfigSIB1 in MIB or by searchSpaceSIB1 in PDCCH-ConfigCommon or by searchSpaceZero in PDCCH-ConfigCommon for a DCI format with CRC scrambled by a SI-RNTI on the primary cell of the MCG, a Type0A-PDCCH CSS set configured by searchSpaceOtherSystemInformation in PDCCH-ConfigCommon for a DCI format with CRC scrambled by a SI-RNTI on the primary cell of the MCG, a Type1-PDCCH CSS set configured by ra-SearchSpace in PDCCH-ConfigCommon for a DCI format with CRC scrambled by a RA-RNTI, a MsgB-RNTI, or a TC-RNTI on the primary cell, a Type2-PDCCH CSS set configured by pagingSearchSpace in PDCCH-ConfigCommon for a DCI format with CRC scrambled by a P-RNTI on the primary cell of the MCG, a Type3-PDCCH CSS set configured by SearchSpace in PDCCH-Config with searchSpaceType = common for DCI formats with CRC scrambled by INT-RNTI, SFI-RNTI, TPC-PUSCH-RNTI, TPC-PUCCH-RNTI, TPC-SRS-RNTI, CI-RNTI, or PS-RNTI and, for the primary cell, C-RNTI, MCS-C-RNTI, or CS-RNTI(s), and a USS set configured by SearchSpace in PDCCH-Config with searchSpaceType = ue-Specific for DCI formats with CRC scrambled by C-RNTI, MCS-C-RNTI, SP-CSI-RNTI, CS-RNTI(s), SL-RNTI, SL-CS-RNTI, or SL-L-CS-RNTI.

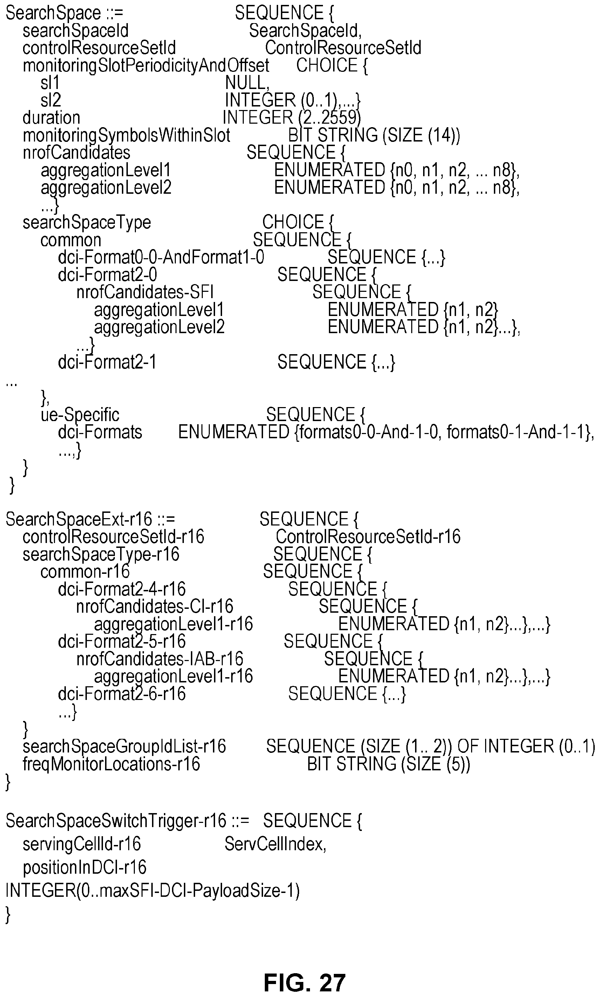

A wireless device may determine a PDCCH transmission monitoring occasion on an active DL BWP based on one or more PDCCH transmission configuration parameters (e.g., as described with respect to FIG. 27) comprising at least one of: a PDCCH transmission monitoring periodicity, a PDCCH transmission monitoring offset, or a PDCCH transmission monitoring pattern within a slot. For a search space set (SS s), the wireless device may determine that a PDCCH transmission monitoring occasion(s) exists in a slot with number/quantity in a frame with number/quantity *n_{f}* if $\left({n}_{f}⋅{N}_{slot}^{frame , μ}+{n}_{s , f}^{μ}-{o}_{s}\right) mod {k}_{s} = 0$. ${N}_{slot}^{frame , μ}$ is a number/quantity of slots in a frame if numerology *µ* is configured. *oₛ* is a slot offset indicated in the PDCCH transmission configuration parameters. *kₛ* is a PDCCH transmission monitoring periodicity indicated in the PDCCH transmission configuration parameters. The wireless device may monitor PDCCH transmission candidates for the search space set for *Tₛ* consecutive slots, starting from slot ${n}_{s , f}^{μ}$, and may not monitor PDCCH transmission candidates for search space set s for the next *kₛ - Tₛ* consecutive slots. A USS at CCE aggregation level *L* ∈ {1, 2, 4, 8, 16} may be defined by a set of PDCCH transmission candidates for CCE aggregation level *L*.

A wireless device may decide, for a search space set s associated with CORESET *p*, CCE indexes for aggregation level *L* corresponding to PDCCH transmission candidate *m_{s,n_{CI}}* of the search space set in slot ${n}_{s , f}^{μ}$ for an active DL BWP of a serving cell corresponding to carrier indicator field value *n_{CI}* as $L ⋅ \left\{\left({Y}_{p , {n}_{s , f}^{μ}}+\left⌊\frac{{m}_{s , {n}_{CI}} ⋅ {N}_{CCE , p}}{L ⋅ {M}_{s , max}^{\left(L\right)}}\right⌋+{n}_{CI}\right)mod\left⌊{N}_{CCE , p}/L\right⌋\right\} + i$ , where, ${Y}_{p , {n}_{s , f}^{μ}} = 0$ for any CSS; ${Y}_{p , {n}_{s , f}^{μ}} = \left({A}_{p}⋅{Y}_{p , {n}_{s , f}^{μ} - 1}\right) mod D$ for a USS, *Y*_{*p,*-1} = *n*_{RNTI} *≠* 0, *Aₚ* = 39827 for *p mod* 3 = 0, *Aₚ* = 39829 for *p mod* 3 = 1, *Aₚ* = 39839 for *p mod* 3 = 2, and D = 65537; i = 0, ··· , *L* - 1; *N*_{CCE,*p*} is the number/quantity of CCEs, numbered/quantified from 0 to *N*_{CCE,}*ₚ -* 1, in CORESET *p*; *n_{CI}* is the carrier indicator field value if the wireless device is configured with a carrier indicator field by *CrossCarrierSchedulingConfig* for the serving cell on which PDCCH transmission is monitored; otherwise, including for any CSS, *n_{CI}* = 0; ${m}_{s , {n}_{CI}} = 0 , … , {M}_{s , {n}_{CI}}^{\left(L\right)} - 1$, where ${M}_{s , {n}_{CI}}^{\left(L\right)}$ is the number/quantity of PDCCH transmission candidates the wireless device is configured to monitor for aggregation level L of a search space set s for a serving cell corresponding to *n_{CI}*; for any CSS, ${M}_{s , max}^{\left(L\right)} = {M}_{s , 0}^{\left(L\right)}$; for a USS, ${M}_{s , max}^{\left(L\right)}$ is the maximum of ${M}_{s , {n}_{CI}}^{\left(L\right)}$ over configured *n_{CI}* values for a CCE aggregation level *L* of search space set *s*; and the RNTI value used for *n*_{RNTI} is the C-RNTI.

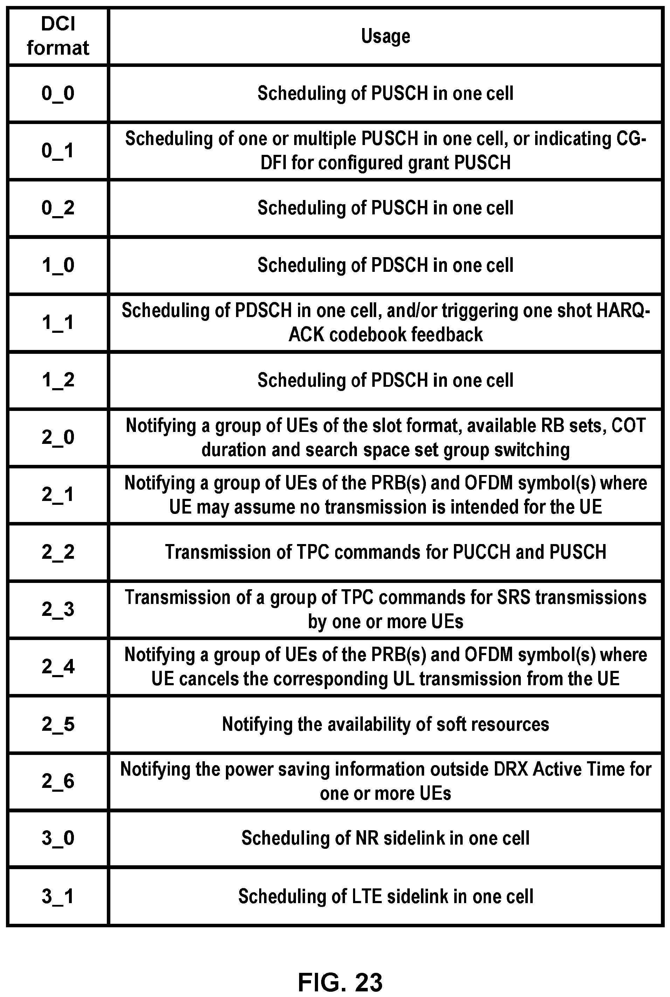

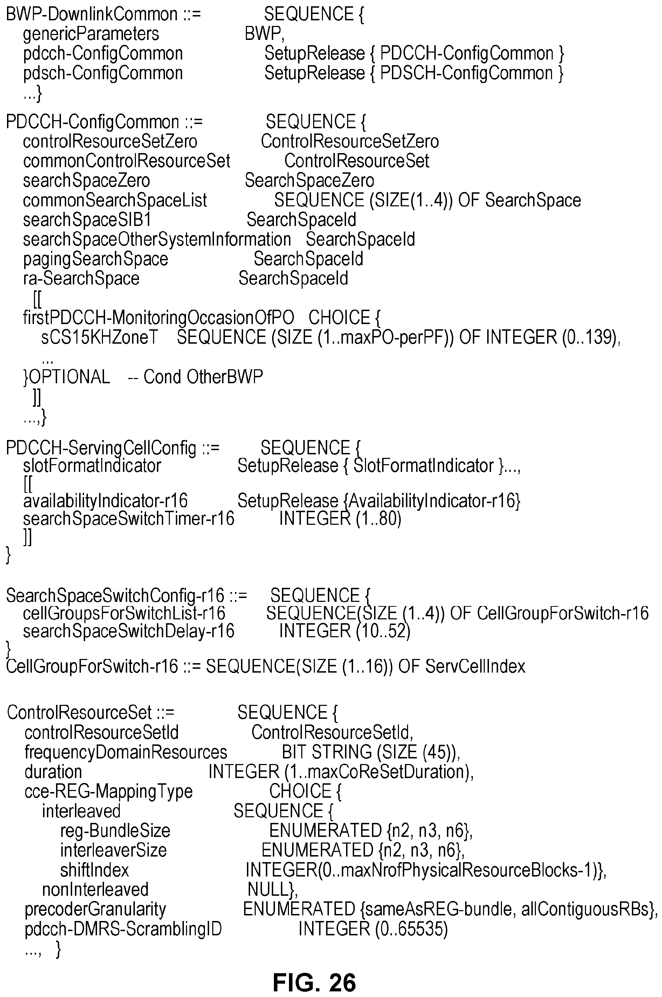

A wireless device may monitor a set of PDCCH transmission candidates according to configuration parameters of a search space set comprising a plurality of search spaces. The wireless device may monitor a set of PDCCH transmission candidates in one or more CORESETs for detecting one or more DCI messages. A CORESET may be configured, for example, as described with respect to FIG. 26. Monitoring may comprise decoding one or more PDCCH transmission candidates of the set of the PDCCH transmission candidates according to the monitored DCI formats. Monitoring may comprise decoding a DCI content of one or more PDCCH transmission candidates with possible (or configured) PDCCH transmission locations, possible (or configured) PDCCH transmission formats (e.g., number/quantity of CCEs, number/quantity of PDCCH transmission candidates in common search spaces, and/or number/quantity of PDCCH transmission candidates in the UE-specific search spaces) and possible (or configured) DCI formats. The decoding may be referred to as blind decoding. The possible DCI formats may be based on examples of FIG. 23.

FIG. 23 shows examples of various DCI formats. The various DCI formats may be used, for example, by a base station to send (e.g., transmit) control information (e.g., to a wireless device and/or to be used by the wireless device) for PDCCH transmission monitoring. Different DCI formats may comprise different DCI fields and/or have different DCI payload sizes. Different DCI formats may have different signaling purposes. DCI format 0_0 may be used to schedule PUSCH transmission in one cell. DCI format 0_1 may be used to schedule one or multiple PUSCH transmissions in one cell or indicate CG-DFI (configured grant-Downlink Feedback Information) for configured grant PUSCH transmission, etc. The DCI format(s), that the wireless device may monitor for reception via a search space, may be configured.

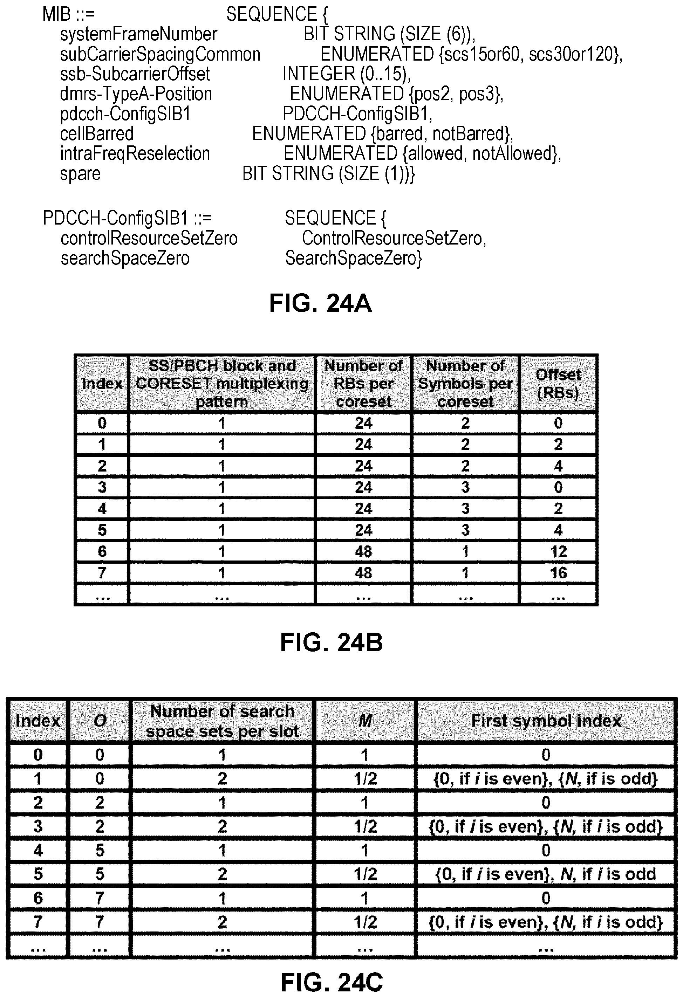

FIG. 24A shows an example MIB message. FIG. 24A shows example configuration parameters of a MIB of a cell. The cell may be a PCell (or any other cell). A wireless device may receive a MIB via a PBCH. The wireless device may receive the MIB, for example, based on receiving a PSS and/or an SSS. The configuration parameters of a MIB may comprise/indicate a SFN (e.g., indicated via a higher layer parameter systemFrameNumber), subcarrier spacing indication (e.g., indicated via a higher layer parameter subCarrierSpacingCommon), a frequency domain offset (e.g., indicated via a higher layer parameter ssb-SubcarrierOffset) between SSB and overall resource block grid in number of subcarriers, a parameter indicating whether the cell is barred (e.g., indicated via a higher layer parameter cellBarred), a DMRS position indication (e.g., indicated via a higher layer parameter dmrs-TypeA-Position) indicating position of DMRS, parameters of a CORESET and a search space of a PDCCH (e.g., indicated via a higher layer parameter pdcch-ConfigSIB1) comprising a common CORESET, a common search space and necessary PDCCH parameters, etc. Each of the higher layer parameters may be indicated via one or bits. For example, the SFN may be indicated using 6 bits (or any other quantity of bits).

A configuration parameter (e.g., pdcch-ConfigSIB1) may comprise a first parameter (e.g., controlResourceSetZero) indicating a common CORESET of an initial BWP of the cell. The common CORESET may be associated with an indicator/index (e.g., 0, or any other indicator). For example, the common CORESET may be CORESET 0. The first parameter may be an integer between 0 and 15 (or any other integer). Each integer (e.g., between 0 and 15, or any other integer) may indicate/identify a configuration of CORESET 0.

FIG. 24B shows an example configuration of a CORESET. The CORESET may be CORESET 0 (or any other CORESET). A wireless device may determine an SSB and CORESET 0 multiplexing pattern, a quantity/number of RBs for CORESET 0, a quantity/number of symbols for CORESET 0, an RB offset for CORESET 0, for example, based on a value of the first parameter (e.g., controlResourceSetZero).

A higher layer parameter (e.g., pdcch-ConfigSIB1) may comprise a second parameter (e.g., searchSpaceZero). The second parameter may indicate a common search space of the initial BWP of the cell. The common search space may be associated with an indicator/index (e.g., 0, or any other indicator). For example, the common search space may be search space 0. The second parameter may be an integer between 0 and 15 (or any other integer). Each integer (e.g., between 0 and 15, or any other integer) may identify a configuration of search space 0.

FIG. 24C shows an example configuration of a search space. The search space may be search space 0 (or any other search space). A wireless device may determine one or more parameters (e.g., O, M) for slot determination for PDCCH monitoring, a first symbol indicator/index for PDCCH monitoring, and/or a quantity of search spaces per slot, for example, based on a value of the second parameter (e.g., searchSpaceZero). For example, for operation without shared spectrum channel access and for the SS/PBCH block and CORESET multiplexing pattern 1, the wireless device may monitor PDCCH (e.g., in the Type0-PDCCH CSS set) over two slots. For SS/PBCH block with index i, the wireless device may determine an index of slot *n*₀ as ${n}_{0} = \left(O⋅{2}^{μ}+\left⌊i⋅M\right⌋\right) {modN}_{slot}^{frame , μ}$. Slot *n*₀ is may be in a frame with a SFN SFN_{C} that satisfies the condition SFN_{c}mod2 = 0 (e.g., if $\left⌊\left(O⋅{2}^{μ}+\left⌊i⋅M\right⌋\right)/{N}_{slot}^{frame , μ}\right⌋ mod 2 = 0$), or in a frame with a SFN that SFN_{C} satisfies the condition SFN_{c}mod2 = 1 (e.g., if $\left.\left⌊\left(O⋅{2}^{μ}+\left⌊i⋅M\right⌋\right)/{N}_{slot}^{frame , μ}\right⌋mod2=1\right)$, where *µ* ∈ {0,1,2,3,5,6} based on the SCS for PDCCH receptions in the CORESET.

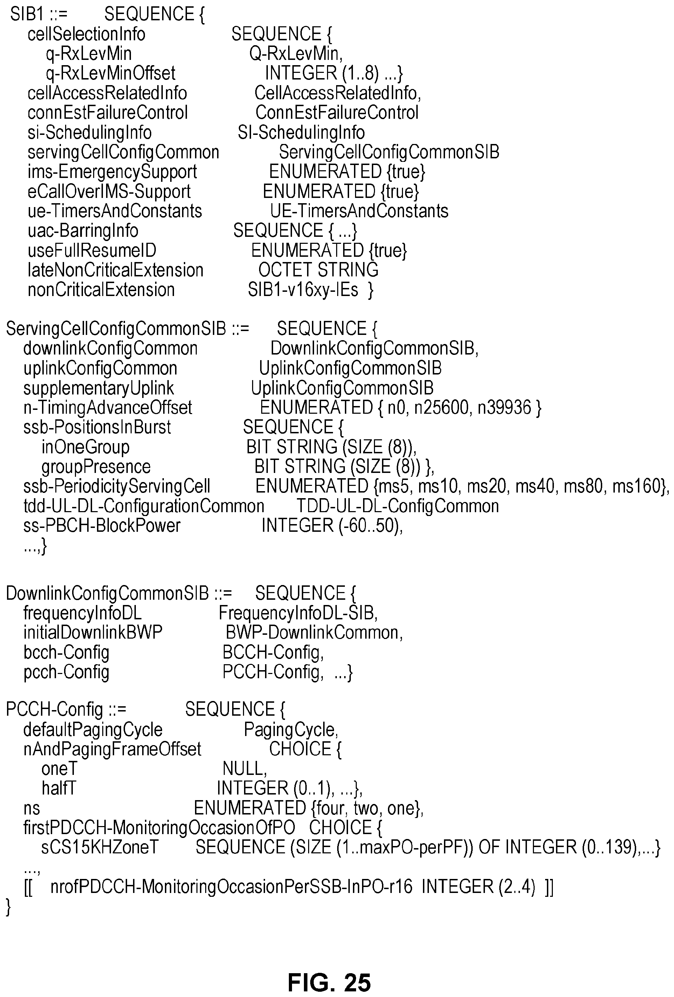

A wireless device may monitor a PDCCH for receiving DCI. The wireless device may monitor a search space 0 of a CORESET 0 for receiving the DCI. The DCI may schedule a SIB1. For example, a SIB 1 message may be similar to as described with respect to FIG. 25. The wireless device may receive the DCI with CRC scrambled with a system information radio network temporary identifier (SI-RNTI) dedicated for receiving the SIB1.

FIG. 25 shows an example SIB. The SIB may comprise one or more configuration parameters (e.g., RRC configuration parameters). A SIB (e.g., SIB1) may be sent/transmitted to one or more wireless devices. For example, the SIB may be broadcasted to multiple wireless devices. The SIB may contain information for evaluating/determining whether a wireless device is allowed to access a cell, information of paging configuration, and/or scheduling configuration of other system information. A SIB may comprise radio resource configuration information that may be common for multiple wireless devices and barring information applied to a unified access control. A base station may send/transmit, to a wireless device (or a plurality of wireless devices), one or more SIB information messages. As shown in FIG. 25, parameters of the one or more SIB information messages may comprise: one or more parameters for cell selection related to a serving cell (e.g., cellSelectionInfo), one or more configuration parameters of a serving cell (e.g., in ServingCellConfigCommonSIB information element (IE)), and/or one or more other parameters. The ServingCellConfigCommonSIB IE may comprise at least one of: common downlink parameters (e.g., in DownlinkConfigCommonSIB IE) of the serving cell, common uplink parameters (e.g., in UplinkConfigCommonSIB IE) of the serving cell, and/or other parameters.

A DownlinkConfigCommonSIB IE may comprise parameters of an initial downlink BWP (e.g., indicated via initialDownlinkBWP IE) of the serving cell (e.g., SpCell). The parameters of the initial downlink BWP may be comprised in a BWP-DownlinkCommon IE (e.g., as shown in FIG. 26). The BWP-DownlinkCommon IE may be used to configure common parameters of a downlink BWP of the serving cell. The base station may configure a parameter (e.g., locationAndBandwidth) such that the initial downlink BWP may comprise an entire CORESET (e.g., CORESET 0) of the serving cell in the frequency domain. The wireless device may apply the parameter locationAndBandwidth based on reception of the parameter. The wireless device may use/apply the parameter locationAndBandwidth to determine the frequency position of signals in relation to the frequency as indicated via locationAndBandwidth. The wireless device may keep CORESET 0, for example, until after reception of an RRC setup message (e.g., RRCSetup), RRC resume message (e.g., RRCResume) and/or an RRC re-establishment message (e.g., RRCReestablishment).

The DownlinkConfigCommonSIB IE may comprise parameters of a paging channel configuration. The parameters may comprise a paging cycle value (T, e.g., indicated by defaultPagingCycle IE), a parameter indicating total number (N) of paging frames (PFs) (e.g., indicated by nAndPagingFrameOffset IE) and paging frame offset in a paging DRX cycle (e.g., indicated by parameter PF_offset), a quantity/number (Ns) for total paging occasions (POs) per PF, a first PDCCH monitoring occasion indication parameter (e.g., firstPDCCH-MonitoringOccasionofPO IE) indicating a first PDCCH monitoring occasion for paging of each PO of a PF. The wireless device may monitor a PDCCH for receiving a paging message, for example, based on parameters of a PCCH configuration.

A parameter (e.g., first-PDCCH-MonitoringOccasionOfPO) may be signaled in SIB1 for paging in initial DL BWP. The parameter first-PDCCH-MonitoringOccasionOfPO may be signaled in the corresponding BWP configuration, for example, for paging in a DL BWP other than the initial DL BWP.

FIG. 26 shows example RRC configuration parameters. The configuration parameters may be RRC configuration parameters for a downlink BWP of a serving cell. The configuration parameters may be indicated via a higher layer parameter BWP-DownlinkCommon IE. Abase station may send/transmit to a wireless device (or a plurality of wireless devices) one or more configuration parameters of a downlink BWP (e.g., initial downlink BWP) of a serving cell. The one or more configuration parameters of the downlink BWP may comprise: one or more generic BWP parameters of the downlink BWP, one or more cell-specific parameters for PDCCH of the downlink BWP (e.g., in pdcch-ConfigCommon IE), one or more cell specific parameters for the PDSCH of the BWP (e.g., in pdsch-ConfigCommon IE), and/or one or more other parameters. A pdcch-ConfigCommon IE may comprise parameters of CORESET 0 (e.g., indicated via parameter controlResourceSetZero) which may be used in any common or wireless device-specific search spaces. A value of the controlResourceSetZero may be interpreted in the same manner as the corresponding bits in MIB parameter pdcch-ConfigSIB1. A pdcch-ConfigCommon IE may comprise parameters (e.g., in commonControlResourceSet) of an additional common control resource set which may be configured and used for any common or wireless device-specific search space. The network may use a parameter ControlResourceSetId other than 0 for this ControlResourceSet, for example, if the network configures commonControlResourceSet. The network may configure the commonControlResourceSet in SIB1 such that the SIB1 is contained within the bandwidth of CORESET 0. A pdcch-ConfigCommon IE may comprise parameters (e.g., in commonSearchSpaceList) of a list of additional common search spaces. Parameters of a search space may be implemented based on example of FIG. 27. A pdcch-ConfigCommon IE may indicate, from a list of search spaces, a search space for paging (e.g., via parameter pagingSearchSpace), a search space for random access procedure (e.g., via parameter ra-SearchSpace), a search space for SIB1 message (e.g., via parameter searchSpaceSIB1), a common search space0 (e.g., via parameter searchSpaceZero), and/or one or more other search spaces.

A CORESET may be associated with a CORESET indicator/index (e.g., indicated via parameter ControlResourceSetId). A CORESET may be implemented based on examples described with respect to FIG. 14A and/or FIG. 14B. The CORESET index 0 may identify a common CORESET configured in MIB and in ServingCellConfigCommon (e.g., indicated via controlResourceSetZero). The CORESET index 0 may not be used in the ControlResourceSet IE. The CORESET index with other values may identify CORESETs configured by dedicated signaling or in SIB1. The controlResourceSetId may be unique among the BWPs of a serving cell. A CORESET may be associated with coresetPoolIndex indicating an index of a CORESET pool for the CORESET. A CORESET may be associated with a time duration parameter (e.g., duration) indicating contiguous time duration of the CORESET (e.g., in terms of a quantity/number of symbols). Configuration parameters of a CORESET may comprise at least one of: frequency resource indication (e.g., frequencyDomainResources), a CCE-REG mapping type indicator (e.g., cce-REG-MappingType), a plurality of TCI states, and/or an indicator indicating whether a TCI is present in a DCI, etc. The frequency resource indication (e.g., comprising a quantity/number of bits, such as 45 bits, or any other quantity of bits) may indicate frequency domain resources. Each bit of the frequency resource indication may correspond to a group of RBs (e.g., 6 RBs, or any other quantity of RBs), with the grouping starting from the first RB group in a BWP of a cell (e.g., SpCell, SCell). For example, the first (e.g., left-most, most significant) bit may correspond to the first RB group in the BWP, with the other bits sequentially corresponding to other RB groups. A bit that is set to 1 may indicate that an RB group, corresponding to the bit, is contained in the frequency domain resource of the CORESET. Bits corresponding to a group of RBs not fully contained in the BWP within which the CORESET is configured may be set to zero.

FIG. 27 shows an example configuration of a search space. The configuration of the search space may be within a SearchSpace IE. One or more search space configuration parameters of a search space may comprise at least one of: a search space ID (e.g., searchSpaceId), a CORESET indicator (ID) (e.g., controlResourceSetld), a monitoring slot periodicity and offset parameter (e.g., monitoringSlotPeriodicityAndOffset), a search space time duration value (e.g., duration), a monitoring symbol indication (e.g., monitoringSymbolsWithinSlot), a quantity/number of candidates for an aggregation level (e.g., nrofCandidates), and/or a search space type indicating a common search space type or a wireless device-specific search space type (e.g., searchSpaceType). The monitoring slot periodicity and offset parameter may indicate slots (e.g., in a radio frame) and slot offset (e.g., related to a starting of a radio frame) for PDCCH monitoring. The monitoring symbol indication may indicate symbol(s), of a slot, in which a wireless device may monitor a PDCCH on the search space. The control resource set ID may indicate/identify a CORESET on which a search space may be located.

A wireless device, in an RRC idle state (e.g., RRC_IDLE) or in an RRC inactive state (e.g., RRC_INACTIVE), may periodically monitor POs for receiving paging message(s) for the wireless device. The wireless device, in an RRC idle state or an RRC inactive state and before monitoring the POs, may wake up at a time before each PO for preparation and/or to activate (e.g., turn on) all components in preparation of data reception (e.g., warm up stage). The gap between the waking up and the PO may be set to be sufficient to accommodate all the processing requirements. The wireless device may perform, after the warming up, timing acquisition from SSB and coarse synchronization, frequency and time tracking, time and frequency offset compensation, and/or calibration of local oscillator. The wireless device, after warm up, may monitor a PDCCH for a paging DCI via one or more PDCCH monitoring occasions. The wireless device may monitor the PDCCH. for example, based on configuration parameters of the PCCH configuration (e.g., as configured in SIB1). The configuration parameters of the PCCH configuration may be as described with respect to FIG. 25.

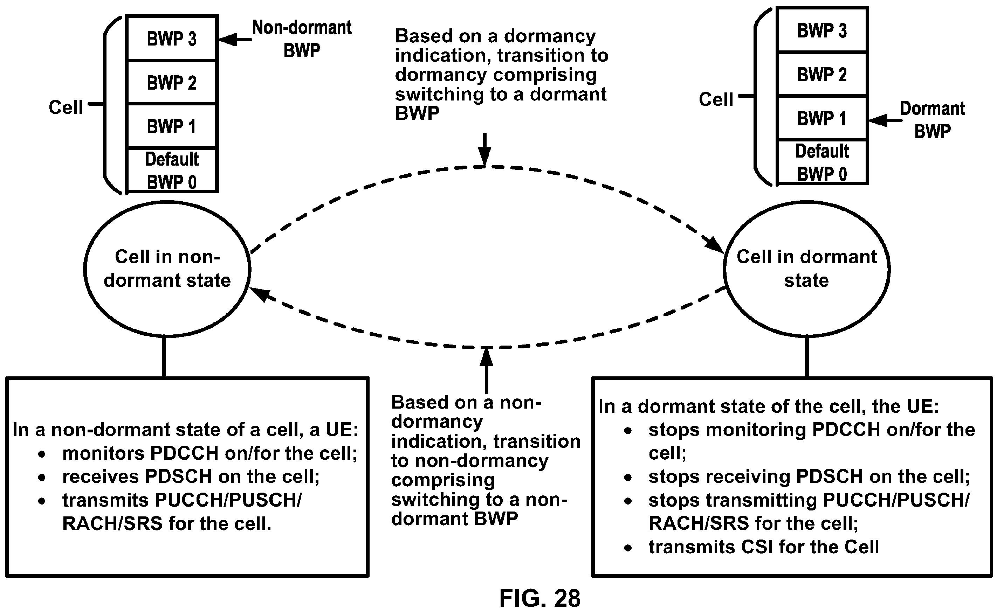

FIG. 28 shows example cell dormancy management. Cell dormancy management may comprise transitioning between a dormant state and a non-dormant state. The example transitioning may be for operations on an SCell. A base station may send/transmit, to a wireless device, one or more RRC messages. The one or more RRC messages may comprise configuration parameters of the SCell. The SCell may comprise a plurality of BWPs. Among the plurality of BWPs, a first BWP (e.g., BWP 3) may be configured as a non-dormant BWP, and/or a second BWP (e.g., BWP 1) may be configured as a dormant BWP. A default BWP (e.g., BWP 0) may be configured in the plurality of BWPs. The non-dormant BWP may be a BWP which the wireless device may activate, for example, based on/in response to transitioning the SCell from a dormant state to a non-dormant state. The dormant BWP may be a BWP which the wireless device may switch to based on/in response to transitioning the SCell from a non-dormant state to a dormant state. The configuration parameters may indicate one or more search spaces and/or CORESETs configured on the non-dormant BWP. The configuration parameters may indicate no search spaces or no CORESETs for the dormant BWP. The configuration parameter may indicate CSI reporting configuration parameters for the dormant BWP.

An active BWP for the SCell may be a dormant BWP, a non-dormant BWP, or a default BWP. A default BWP may be different from a dormant BWP. The configuration parameters may indicate one or more search spaces and/or one or more CORESETs configured on the default BWP. A wireless device may switch to the default BWP as an active BWP, for example, if a BWP inactivity timer expires or based on receiving a DCI indicating switching to the default BWP. The wireless device may perform (e.g., if the default BWP is an active BWP), at least one of: monitoring PDCCH on the default BWP of the SCell, receiving a PDSCH transmission via the default BWP of the SCell, sending a PUSCH transmission via the default BWP of the SCell, sending an SRS via the default BWP of the SCell, and/or sending a CSI report (e.g., in a periodic, aperiodic, and/or semi-persistent manner) for the default BWP of the SCell. The wireless device may switch to the dormant BWP as an active BWP of the SCell, for example, if receiving a dormancy/non-dormancy indication indicating a dormant state for a SCell. The wireless device may (e.g., based on/in response to switching to the dormant BWP) perform at least one of: refraining from monitoring a PDCCH on the dormant BWP of the SCell (or for the SCell if the SCell is cross-carrier scheduled by another cell), refraining from receiving a PDSCH transmission via the dormant BWP of the SCell, refraining from sending a PUSCH transmission via the dormant BWP of the SCell, refraining from sending SRS via the dormant BWP of the SCell, and/or sending a CSI report (e.g., periodic, aperiodic, and/or semi-persistent CSI report) for the dormant BWP of the SCell.

A base station may send/transmit, to a wireless device, DCI via a PDCCH resource. The DCI may comprise a dormancy/non-dormancy indication indicating a dormant state or a non-dormant state for the SCell. The wireless device may (e.g., based on the dormancy/non-dormancy indication indicating a dormant state for the SCell): transition the SCell to the dormant state (e.g., if the SCell is in a non-dormant state before receiving the DCI), or maintain the SCell in the dormant state (e.g., if the SCell is in the dormant state before receiving the DCI). Transitioning the SCell to the dormant state may comprise switching to the dormant BWP (e.g., configured by the base station) of the SCell. The wireless device may (e.g., based on the dormancy/non-dormant indication indicating a non-dormant state for the SCell): transition the SCell to the non-dormant state (e.g., if the SCell is in a dormant state before receiving the DCI), or maintain the SCell in the non-dormant state (e.g., if the SCell is in the non-dormant state before receiving the DCI). Transitioning the SCell to the non-dormant state may comprise switching to a non-dormant BWP (e.g., configured by the base station) of the SCell.

The wireless device may switch to the non-dormant BWP (e.g., BWP 3), configured by the base station, as an active BWP of the SCell, for example, based on transitioning the SCell from a dormant state to a non-dormant state. The wireless device may perform (e.g., based on the switching to the non-dormant BWP as the active BWP of the SCell) at least one of: monitoring PDCCH on the active BWP of the SCell (or monitoring PDCCH for the SCell if the SCell is configured to be cross-carrier scheduled by another cell), receiving a PDSCH transmission via the active BWP of the SCell, and/or sending a PUCCH transmission, a PUSCH transmission, a RACH transmission and/or an SRS transmission via the active BWP (e.g., if the active BWP is an uplink BWP).

The wireless device may switch to the dormant BWP (e.g., BWP 1 of the SCell), configured by the base station, for example, based on transitioning the SCell from a non-dormant state to a dormant state. The wireless device may perform (e.g., based on the switching to the dormant BWP of the SCell) at least one of: refraining from monitoring PDCCH on the dormant BWP of the SCell (or refraining from monitoring PDCCH for the SCell if a the SCell is configured to be cross-carrier scheduled by another cell), refraining from receiving a PDSCH transmission via the dormant BWP of the SCell, refraining from sending a PUCCH transmission, a PUSCH transmission, a RACH transmission, and/or an SRS transmission via the dormant BWP (e.g., if the dormant BWP is an uplink BWP), and/or sending a CSI report for the dormant BWP of the SCell (e.g., based on the CSI reporting configuration parameters configured on the dormant BWP of the SCell).

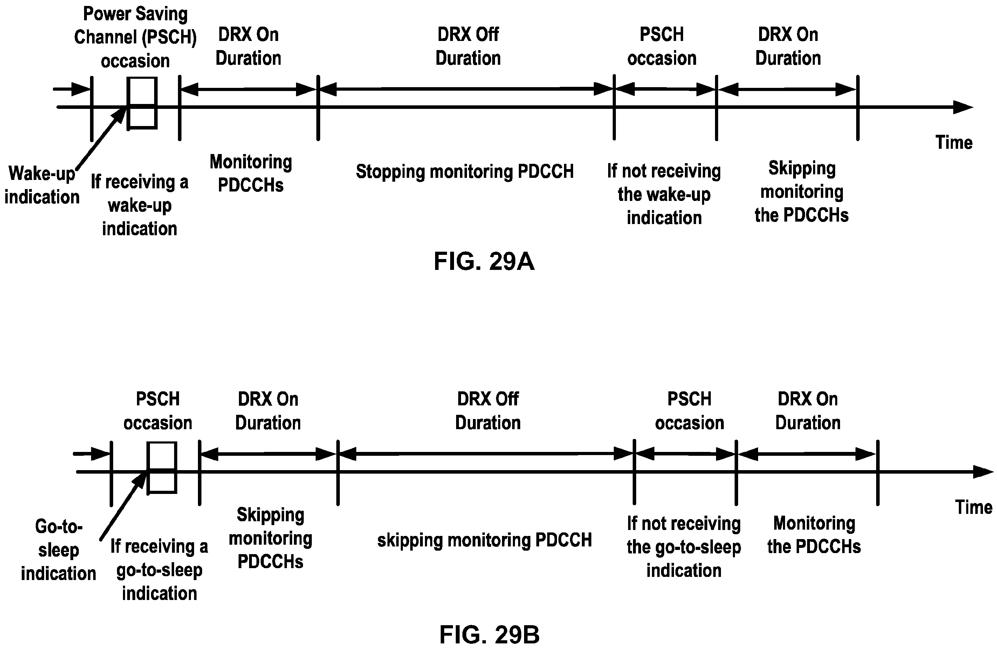

FIG. 29A shows an example power saving operation. The example power saving operation of FIG. 29A may be based on a wake-up indication. A base station may send/transmit one or more messages comprising parameters of a wake-up duration (e.g., a power saving duration, or a power saving channel (PSCH) occasion), to a wireless device. The wake-up duration may be located at (e.g., start from) a time that is a quantity/number of slots (or symbols) before a DRX ON duration of a DRX cycle. The quantity/number of slots (or symbols) may be a gap between a wake-up duration and a DRX ON duration. The quantity of slots may be configured in the one or more RRC messages or may be predefined as a fixed value. The gap may be used for at least one of: synchronization with the base station, measuring reference signals, and/or retuning RF parameters. The gap may be determined based on a capability of the wireless device and/or the base station. The parameters of the wake-up duration may be pre-defined without RRC configuration. The wake-up mechanism may be based on a wake-up indication (e.g., via a PSCH). The parameters of the wake-up duration may comprise at least one of: a PSCH channel format (e.g., numerology, DCI format, PDCCH format), a periodicity of the PSCH, a control resource set, and/or a search space of the PSCH. The wireless device may monitor the PSCH for receiving the wake-up signal during the wake-up duration, for example, if configured with the parameters of the wake-up duration. The wireless device may monitor the PSCH for detecting a wake-up indication during the PSCH occasion/wake-up duration, for example, if configured with the parameters of the PSCH occasion. The wireless device may wake up to monitor PDCCHs in a DRX active time (e.g., comprising DRX ON duration) of a next DRX cycle according to the DRX configuration, for example, based on/in response to receiving the wake-up signal/channel (or a wake-up indication via the PSCH). The wireless device may monitor PDCCHs in the DRX active time (e.g., when drx-onDurationTimer is running), for example, based on/in response to receiving the wake-up indication via the PSCH. The wireless device may go back to sleep if the wireless device does not receive PDCCH transmissions in the DRX active time. The wireless device may stay in a sleep state during the DRX OFF duration of the DRX cycle. The wireless device may skip monitoring PDCCHs in the DRX active time, for example, if the wireless device doesn't receive the wake-up signal/channel (or a wake-up indication via the PSCH) during the wake-up duration (or the PSCH occasion). The wireless device may skip monitoring PDCCHs in the DRX active time, for example, if the wireless device receives, during the wake-up duration (or the PSCH occasion), an indication indicating skipping PDCCH monitoring.

FIG. 29B shows an example of a power saving operation. The power saving operation of FIG. 29B may be based on go-to-sleep indication. The wireless device may go back to sleep and skip monitoring PDCCHs during the DRX active time (e.g., during a next DRX ON duration of a DRX cycle), for example, based on/in response to receiving a go-to-sleep indication via the PSCH. The wireless device may monitor PDCCH during the DRX active time, according to the configuration parameters of the DRX operation, for example, if the wireless device doesn't receive the go-to-sleep indication via the PSCH during the wake-up duration. The power saving mechanisms of FIG. 29A and 29B may reduce power consumption for PDCCH monitoring during the DRX active time.

A power saving operation may be based on combining the operations described with respect to FIG. 29A and FIG. 29B. A base station may send/transmit a power saving indication, in DCI via a PSCH, indicating whether the wireless device may wake up for a next DRX ON duration or skip the next DRX ON duration. The wireless device may receive the DCI via the PSCH. The wireless device may wake up for next DRX ON duration, for example, based on/in response to the power saving indication indicating that the wireless device may wake up for next DRX ON duration. The wireless device may monitor PDCCH in the next DRX ON duration in response to the waking up. The wireless device may go to sleep during or skip the next DRX ON duration, for example, based on/in response to the power saving indication indicating the wireless device may skip (or go to sleep) for next DRX ON duration. The wireless device may skip monitoring PDCCH in the next DRX ON duration, for example, based on/in response to the power saving indication indicating the wireless device may go to sleep for next DRX ON duration. Various examples described with respect to FIG. 28, FIG. 29A, and/or FIG. 29B may be extended and/or combined to further improve power consumption of a wireless device and/or signaling overhead of a base station.

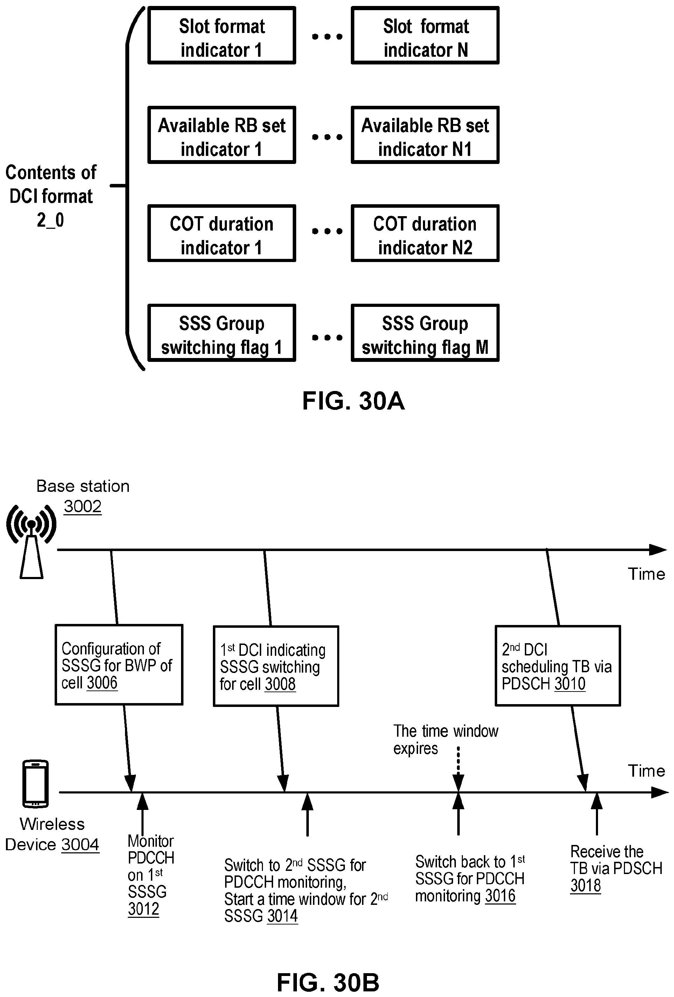

FIG. 30A shows an example DCI format. The DCI format may correspond to DCI format 2_0 and may comprise one or more search space set groups (or SSSGs) switching indications (or SSSG switching flags). The DCI format 2_0 may comprise one or more slot format indicators (e.g., slot format indicator 1, slot format indicator 2, ... slot format indicator N), one or more available RB set indicators, one or more channel occupancy time (COT) duration indications, and/or one or more SSSG switching flags. Each of the one or more SSSG switching flags may correspond to a respective cell group of a plurality of cell groups. Each cell group of the plurality of cell groups may comprise one or more cells. An SSSG switching flag, of the one or more SSSG switching flags, corresponding to a cell group, may indicate switching from a first SSSG to a second SSSG for each cell of the cell group, for example, if the SSSG switching flag is set to a first value. The SSSG switching flag may indicate switching from the second SSSG to the first SSSG for each cell of the cell group, for example, if the SSSG switching flag is set to a second value.

FIG. 30B shows an example SSSG switching. The SSSG switching may be based on DCI (e.g., corresponding to DCI format 2_0, or other DCI formats as described with respect to FIG. 23). A wireless device 3004 may receive configuration 3006 of SSSG for a BWP of a cell. The configuration 3006 may comprise a plurality of parameters. The configuration 3006 may be via RRC messaging and/or SIB1 messaging.

The wireless device 3004 may be provided/indicated with a group indicator/index for a search space set (e.g., a Type3-PDCCH CSS set, a USS set, or any other type of search space set) by a parameter (e.g., searchSpaceGroupIdList, as described with respect to FIG. 27) for PDCCH monitoring on a serving cell.

The wireless device 3004 may or may not be provided/indicated with the parameter searchSpaceGroupIdList for a search space set. The SSSG switching as described with respect to FIG. 30B may not be applicable for PDCCH monitoring on the search space, for example, if the search space set is not configured with searchSpaceGroupIdList. The wireless device 3004 may monitor the search space set on a BWP, without switching away from the search space set, for PDCCH monitoring, for example, if the search space set is not configured with searchSpaceGroupIdList.

SSSG switching as shown in FIG. 30B may apply to all serving cells within each group, for example, if the wireless device 3004 is provided/indicated with parameter cellGroupsForSwitchList (e.g., as described with respect to FIG. 26), indicating one or more groups of serving cells. The SSSG switching as described with respect to FIG. 30B may apply only to a serving cell for which the wireless device 3004 is provided/indicated with parameter searchSpaceGroupIdList, for example, if the wireless device 3004 is not provided/indicated with the parameter cellGroupsForSwitchList. The wireless device 3004 may reset PDCCH monitoring according to search space sets with a specific group index (e.g., group index 0), if provided/indicated with searchSpaceGroupIdList, for example, if a wireless device 3004 is provided/indicated with parameter searchSpaceGroupIdList.

The wireless device 3004 may be provided/indicated with parameter searchSpaceSwitchDelay (e.g., as shown in FIG. 26) with a quantity/number of symbols P_{switch} based on wireless device processing capability (e.g., wireless device processing capability 1, wireless device processing capability 2, etc.) and sub-carrier spacing (SCS) configuration µ. Wireless device processing capability 1 for SCS configuration µ may apply unless the wireless device 3004 indicates support for wireless device processing capability 2. For example, P_{switch} may be 25 for wireless device capability 1 and µ=0, P_{switch} may be 25 for wireless device capability 1 and µ=1, P_{switch} may be 25 for wireless device capability 1 and µ=2, P_{switch} may be 10 for wireless device capability 2 and µ=0, P_{switch} may be 12 for wireless device capability 2 and µ=1, and P_{switch} may be 22 for wireless device capability 2 and µ=2, etc.

The wireless device 3004 may be provided/indicated with parameter searchSpaceSwitchTimer (in units of slots, e.g., as shown in FIG. 26). The parameter searchSpaceSwitchTimer may be with a timer value for a serving cell for which the wireless device 3004 is provided with the parameter searchSpaceGroupIdList or may be for a set of serving cells indicated by parameter cellGroupsForSwitchList (e.g., if provided). The wireless device 3004 may decrement the timer value by one after each slot based on a reference SCS configuration that is a smallest SCS configuration µ among all configured downlink BWPs in the serving cell, or in the set of serving cells. The wireless device 3004 may maintain the reference SCS configuration during the timer decrement procedure.

Parameter searchSpaceSwitchTimer may be defined as a value in unit of slots. The parameter searchSpaceSwitchTimer may indicate a time duration for monitoring PDCCH in the active downlink BWP of the serving cell before moving to a default search space group (e.g., search space group 0). The timer value may be based on SCS. A valid timer value may be one of {1, ..., 20}, for example, if SCS is 15 kHz. A valid timer value may be one of {1, ..., 40}, for example, if SCS is 30 kHz. A valid timer value may be one of {1, ..., 80}, for example, if SCS is 60 kHz. The base station may configure a same timer value for all serving cells in a same cell group as indicated by parameter CellGroupForSwitch.

The wireless device 3004 may monitor (e.g., step 3012) PDCCH on a first SSSG (e.g., search space sets with group index 0) based on configuration of SSSG of a BWP of a cell (e.g., via configuration 3006). The wireless device 3004 may be provided/indicated with SearchSpaceSwitchTrigger indicating a location of a SSSG switching flag field for a serving cell as present in DCI (e.g., DCI corresponding to a DCI format 2_0). The parameter SearchSpaceSwitchTrigger may be configured as shown in FIG. 27.

The wireless device 3004 may receive DCI 3008 (e.g., with DCI format 2_0). The DCI 3008 may indicate a SSSG switching for the cell, for example, if a value of the SSSG switching flag field in the DCI 3008 is 1 (or any other predefined value). The wireless device 3004 may switch (e.g., step 3014) to a second SSSG for PDCCH monitoring. The wireless device 3004 may start monitoring PDCCH on the second SSSG (e.g., search space sets with group index 1) and stop monitoring PDCCH on the first SSSG (or the search space sets with group index 0) for the serving cell. The wireless device 3004 may start monitoring PDCCH on the second SSSG (e.g., search space sets with group index 1) and stop monitoring PDCCH on the first SSSG at a first slot that is at least P_{switch} symbols after a last symbol of the PDCCH comprising the DCI. The wireless device 3004 may start window (e.g., start a search space switching timer), for example, based on switching to the second SSSG. The wireless device 3004 may set the timer value of the search space switching timer to the value provided/indicated by parameter searchSpaceSwitchTimer, for example, based on receiving the DCI.

The wireless device 3004 may monitor PDCCH on the second SSSG (e.g., search space sets with group index 1) based on configuration of SSSGs of a BWP of a cell. The wireless device 3004 may be indicated, via parameter SearchSpaceSwitchTrigger, a location of a SSSG switching flag field for a serving cell in DCI (e.g., corresponding to DCI format 2_0). The wireless device 3004 may receive DCI. The DCI may indicate SSSG switching for the cell, for example, if a value of the SSSG switching flag field in the DCI is 0. The wireless device 3004 may start monitoring PDCCH on search space sets with group index 0 and stop monitoring PDCCH on search space sets with group index 1 for the serving cell, for example, if a value of the SSSG switching flag field in the DCI is 0. The wireless device 3004 may start monitoring the PDCCH on search space sets with group index 0 and stop monitoring PDCCH on search space sets with group index 1 at a first slot that is at least P_{switch} symbols after the last symbol of the PDCCH comprising the DCI.

The wireless device 3004 may start monitoring PDCCH for the serving cell on the second SSSG (e.g., search space sets with group index 0), and stop monitoring PDCCH on the first SSSG (e.g., search space sets with group index 1), for example, if the wireless device 3004 initially monitors PDCCH for the serving cell on the first SSSG. The wireless device 3004 may start monitoring PDCCH for the serving cell on the second SSSG and stop monitoring PDCCH on the first SSSG at the beginning of the first slot that is at least P_{switch} symbols after a slot where the timer expires or after a last symbol of a remaining channel occupancy duration for the serving cell (e.g., as indicated by the DCI3008).

The wireless device 3004 may or may not be provided/indicated with parameter SearchSpaceSwitchTrigger for a serving cell. For example, the parameter SearchSpaceSwitchTrigger may be absent in configuration parameters corresponding to SlotFormatIndicator (e.g., wherein SlotFormatIndicator is configured for monitoring a Group-Common-PDCCH for Slot-Format-Indicators (SFI)). The DCI 3008 (e.g., corresponding to DCI format 2_0) may not comprise a SSSG switching flag field, for example, based on the parameter SearchSpaceSwitchTrigger not being provided. The wireless device 3004 may start monitoring PDCCH on the second SSSG (e.g., a search space sets with group index 1) and stop monitoring PDCCH according on the first SSSG (e.g., a search space set with group index 0) for the serving cell, for example, if the parameter SearchSpaceSwitchTrigger is not provided and if the wireless device 3004 detects DCI based on monitoring PDCCH on the first SSSG. The wireless device 3004 may start monitoring PDCCH on the second SSSG and stop monitoring PDCCH on the first SSSG at a first slot that is at least P_{switch} symbols after the last symbol of the PDCCH comprising the DCI. The wireless device 3004 may set (or restart) the timer value to the value provided by parameter searchSpaceSwitchTimer, for example, if the wireless device 3004 detects DCI based on monitoring PDCCH in any search space set.

The wireless device 3004 may or may not be provided/indicated with parameter SearchSpaceSwitchTrigger for a serving cell. The wireless device 3004 may start monitoring PDCCH for the serving cell according to the second SSSG (e.g., search space sets with group index 0), and stop monitoring PDCCH according to the first SSSG (e.g., a search space sets with group index 1), for the serving cell, for example, if the parameter SearchSpaceSwitchTrigger is not provided and if the wireless device 3004 initially monitors PDCCH for a serving cell according to the first SSSG. The wireless device 3004 may start monitoring PDCCH for the serving cell according to the second SSSG and stop monitoring PDCCH according to the first SSSG at the beginning of the first slot that is at least P_{switch} symbols after a slot where the timer expires. The wireless device 3004 may start monitoring PDCCH for the serving cell according to the second SSSG and stop monitoring PDCCH according to the first SSSG after a last symbol of a remaining channel occupancy duration for the serving cell that is indicated by DCI format 2_0, for example, if the wireless device 3004 is provided with a search space set to monitor PDCCH for detecting a DCI format 2_0.

The wireless device 3004 may switch back to the first SSSG for PDCCH monitoring (e.g., step 3016), for example, based on/after an expiration of the timer. The wireless device 3004 may start monitoring PDCCH on the first SSSG and stop monitoring PDCCH on the second SSSG, for example, based on expiration of the timer. The wireless device 3004 may receive second DCI 3010 based on the PDCCH monitoring. The second DCI 3010 may schedule a TB via a PDSCH. The wireless device 3004 may receive (e.g., step 3018) the TB via the PDSCH and based on the scheduling indicated via the second DCI 3010.

The wireless device 3004 may determine a slot and a symbol in a slot to start or stop PDCCH monitoring on search space sets for a serving cell for which the wireless device 3004 is provided/indicated with parameter searchSpaceGroupIdList. The wireless device 3004 may start or stop PDCCH monitoring on search space sets for a serving cell if parameter cellGroupsForSwitchList is provided/indicated for a set of serving cells, based on the smallest SCS configuration µ among all configured downlink BWPs. The downlink BWPs may be in the serving cell or in the set of serving cells and, if any, in the serving cell where the wireless device 3004 receives a PDCCH transmission and detects a corresponding DCI format 2_0 (e.g., triggering the start or stop of PDCCH monitoring on search space sets).

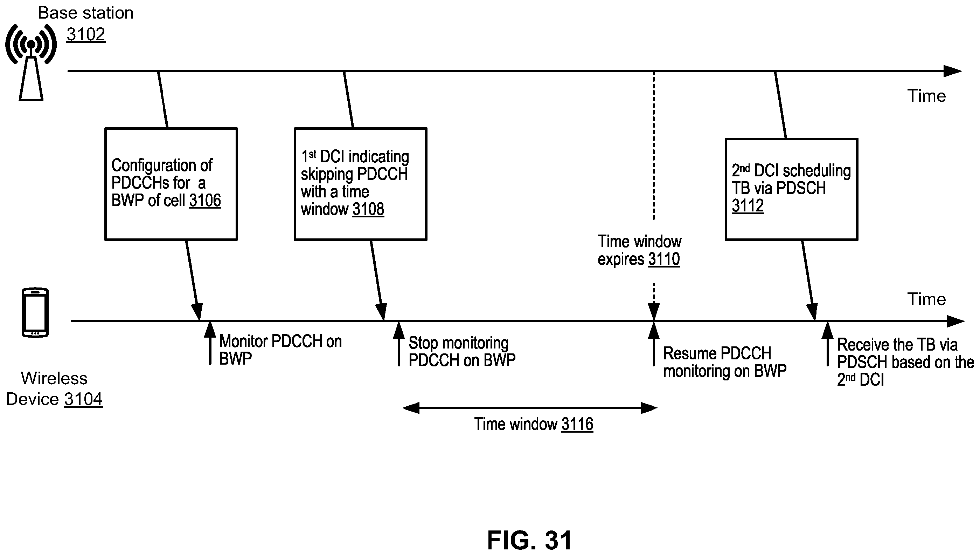

FIG. 31 shows an example PDCCH skipping-based power saving operation. A base station 3102 may send/transmit, to a wireless device 3104, one or more RRC messages comprising configuration parameters 3106. The configuration parameters 3106 may be for a PDCCH for a BWP of a cell (e.g., as described with respect to FIG. 26 and/or FIG. 27). The wireless device 3104 may monitor PDCCH on the BWP, for example, based on the configuration parameters 3106 of the PDCCH. The BWP may a downlink BWP which may be in an active state. The wireless device 3104 may activate the BWP as described with respect to FIG. 22.

The wireless device 3104 may receive first DCI 3108 indicating skipping the PDCCH (e.g., monitoring/receiving via the PDCCH) within a time window 3116. A time value (e.g., duration) for the time window 3116 may be indicated by the first DCI 3108 or configured by the one or more RRC messages. The wireless device 3104 may stop monitoring the PDCCH on the BWP, for example, based on/in response to receiving the first DCI 3108. Stopping monitoring PDCCH on the BWP may comprise stopping monitoring the PDCCH on one or more SSSGs configured on the BWP. The wireless device 3104 may maintain an active state of the BWP. The first DCI 3108 may not indicate an active BWP switching. The base station 3102 may not send/transmit a PDCCH transmission to the wireless device 3104, for example, within/during the time window 3116 (or when a timer associated with the time window 3116 is running).

A time window may expire at 3110. The wireless device 3104 may resume PDCCH monitoring on the BWP, for example, based on/after the expiration of the time window 3116 (e.g., at 3110). The wireless device 3104 may receive second DCI 3112 scheduling TB via a PDSCH, for example, based on resuming PDCCH monitoring. The wireless device 3104 may receive the TB via the PDSCH scheduled by the second DCI 3112. The base station 3102 may send/transmit the second DCI 3112 to the wireless device 3104, for example, based on/in response to expiration of the time window 3116.

A base station may send/transmit one or more SSBs (e.g., periodically) to a wireless device or a plurality of wireless devices. The wireless device (in RRC idle state, RRC inactive state, or RRC connected state) may use the one or more SSBs for time and frequency synchronization with a cell of the base station. An SSB, comprising a PSS, a SSS, a PBCH, and/or a PBCH DM-RS, may be sent/transmitted (e.g., as described with respect to FIG. 11A). An SSB may occupy a quantity/number (e.g., 4, or any other quantity) of OFDM symbols. The base station may send/transmit one or more SSBs in an SSB burst (e.g., to enable beam-sweeping for PSS/SSS and PBCH). An SSB burst may comprise a set of SSBs, with each SSB potentially being transmitted via a corresponding different beam. SSBs, in the SSB burst, may be transmitted using time-division multiplexing. An SSB burst may be within a time window (e.g., a 5 ms window, or a window of any other duration) and may be either located in first-half or in the second-half of a radio frame (e.g., with a duration of 10 ms, or any other duration). An SSB burst may be equivalently referred to as a transmission window (e.g., 5 ms, or any other time duration) in which the set of SSBs are transmitted.

The base station may indicate a transmission periodicity of SSB via an RRC message (e.g., a SIB1 message). For example, the transmission periodicity may be indicated using parameter ssb-PeriodicityServingCell as present in ServingCellConfigCommonSIB of a SIB1 message (e.g., as shown in FIG. 25). A candidate value of the transmission periodicity may be in a range of {5ms, 10ms, 20ms, 40ms, 80ms, 160ms}. The transmission periodicity may have any other value. A maximum quantity/number of candidate SSBs (Lₘₐₓ) within an SSB burst may depend on a carrier frequency/band of the cell. For example, Lₘₐₓ=4 if f_{c}<=3 GHz. Lₘₐₓ=8 if 3 GHz<f_{c}<=6GHz. Lₘₐₓ=64 if f_{c}>=6GHz, etc., wherein f_{c} may be the carrier frequency of the cell. A starting OFDM symbol indicator/index, of a candidate SSB (e.g., occupying 4 OFDM symbols) within an SSB burst (e.g.. comprised in a 5 ms time window), may depend on an SCS and a carrier frequency band of the cell.

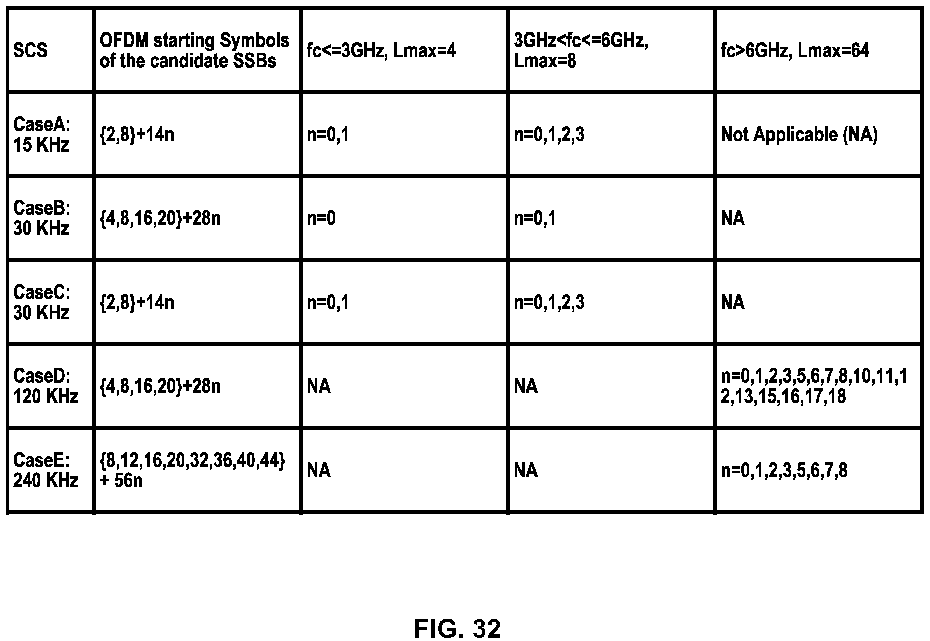

FIG. 32 shows example SSB configurations. FIG. 32 shows an example table for determination of a starting OFDM symbol index of candidate SSBs. OFDM starting symbols may be determined as a function of a SCS and carrier frequency. For example, starting OFDM symbol indexes of SSBs in an SSB burst, for a cell configured with 15 kHz SCS and carrier frequency fc<3GHz (e.g., Lₘₐₓ=4), may be 2, 8, 16, and 22. OFDM symbols in a half-frame may be indexed with the first symbol of the first slot being indexed as 0. Starting OFDM symbol indexes of SSBs in an SSB burst, for a cell configured with 15 kHz and carrier frequency 3GHz<fc<6GHz (Lₘₐₓ=8) may be 2, 8, 16, 22, 30, 36, 44 and 50. Starting OFDM symbol indexes for other SCSs and carrier frequencies may be similarly determined in accordance with the table shown in FIG. 32. The base station may send/transmit only one SSB by using the first SSB starting position, for example, if the base station is not transmitting the SSBs with beam forming.

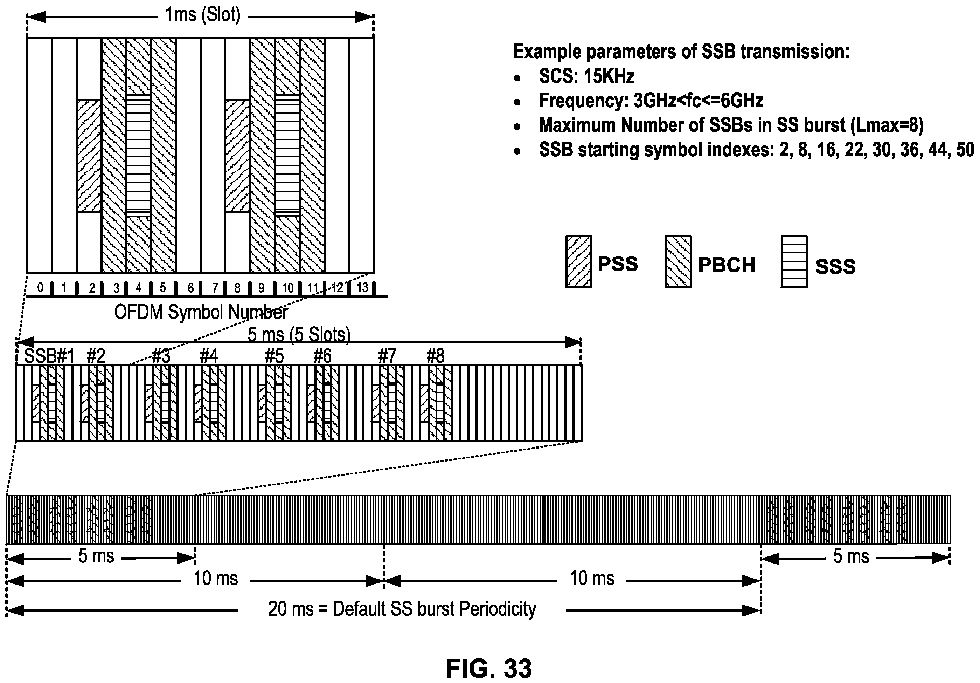

FIG. 33 shows an example SSB transmission in a cell by a base station. An SCS of the cell may be 15 kHz, and the cell may be configured with carrier frequency f_{c}, such that 3GHz<fc<=6GHz. A maximum quantity of candidate SSBs in an SSB burst may be 8 (Lₘₐₓ=8), for example, based on the value of f_{c}. Starting symbols for SSB transmission may be determined in accordance with the table shown in FIG. 32. SSB#1 may start at symbol 2 (of 70 symbols included in 5 ms half-frame), SSB#2 may start at symbol#8, SSB#3 may start at symbol#16, SSB#4 may start at symbol#22, SSB#5 may start at symbol#30, SSB#6 may start at symbol#36, SSB#7 may start at symbol#44, and SSB#8 may start at symbol 50. The SSB burst may be transmitted in the first half (and not the second half) of a radio frame (with 10 ms duration).

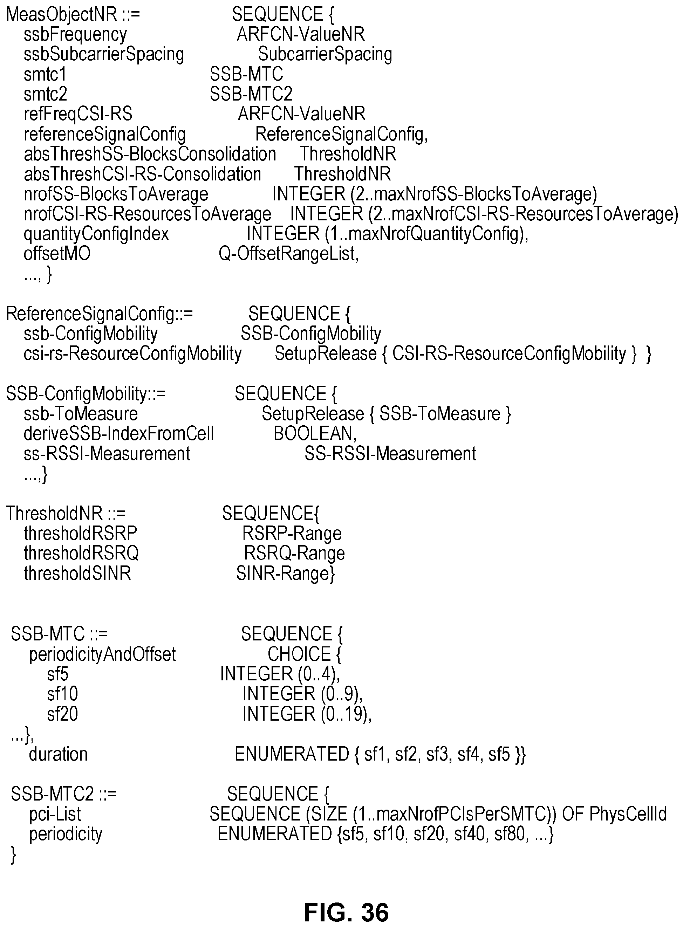

The SSB burst (and each SSB of the SSB burst) may be transmitted with a periodicity. A default periodicity of an SSB burst may be 20 ms (e.g., as shown in FIG. 36, or any other duration of time). The default transmission periodicity may be a periodicity, for example, before a wireless device may receive a SIB1 message for initial access of the cell. For example, the base station, with 20 ms transmission periodicity of SSB (or SSB burst), may transmit the SSB burst in the first 5 ms of each 20 ms period. The base station may not transmit the SSB burst in the rest 15 ms of the each 20 ms period.

A base station may transmit RRC messages (e.g., SIB1 messages) indicating cell specific configuration parameters of SSB transmission. The cell specific configuration parameters may comprise a value for a transmission periodicity (e.g., parameter ssb-PeriodicityServingCell) of an SSB burst and locations (e.g., presence) of SSBs (e.g., active SSBs), of a plurality of candidate SSBs, in the SSB burst. The plurality of candidate SSBs (e.g., starting symbols of candidate SSBs) may be determined as described with respect to FIG. 32. The cell specific configuration parameters may comprise a position indication of an SSB in an SSB burst (e.g., parameter ssb-PositionsInBurst). The position indication may comprise a first bitmap (e.g., groupPresence) and a second bitmap (e.g., inOneGroup) indicating locations/presence of SSBs in an SSB burst.

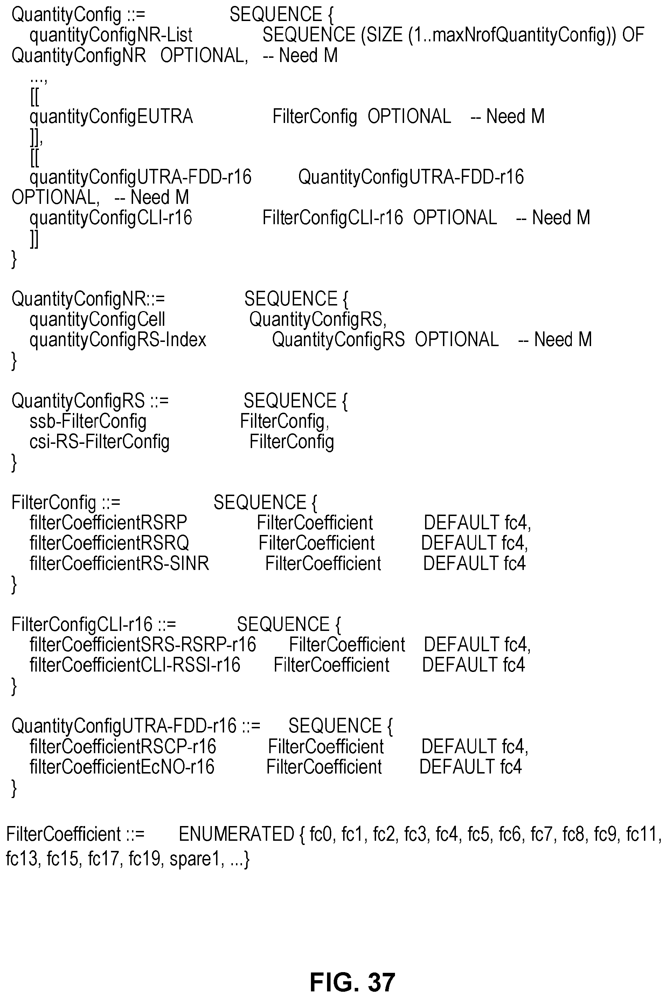

Carrier frequency f_{c} and SCS may determine a maximum quantity of candidate SSBs in an SSB burst (e.g., as described with respect to FIG. 32). The position indication (e.g., parameter ssb-PositionsInBurst) may indicate SSBs (e.g., active SSBs, positions of the active SSBs), of a plurality of candidate SSBs, that are sent/transmitted in the SSB burst (e.g., as further described with respect to FIG. 37). A base station may indicate the transmitted active SSBs and/or a quantity of the active SSBs, in an SSB burst, using the position indication (e.g., parameter ssb-PositionsInBurst). The position indication may be transmitted by the base station, for example, via an RRC message and/or DCI.

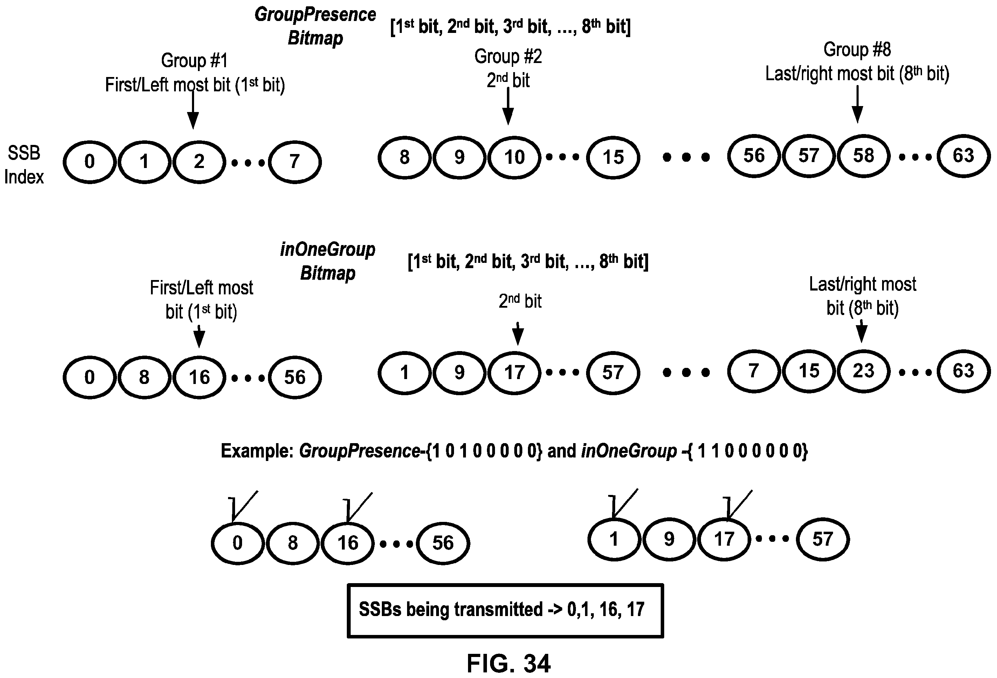

FIG. 34 shows an example indication of SSB location in an SSB burst. Indication of SSB location may be in form of an indication of a presence of an SSB group among a plurality of SSB groups. Each group may comprise a subset of a plurality of candidate SSBs (e.g., maximum possible quantity of candidate SSBs) in an SSB burst. For example, a maximum possible quantity of candidate SSBs in an SSB burst may be equal to 64 (e.g., for SCS =120 kHz or 240 kHz, and f_{c} > 6 GHz). The candidate SSBs in the SSB burst may comprise SSBs with indexes from 0 to 63. The candidate SSBs in an SSB burst may be divided into SSB groups.

A first bitmap (e.g., parameter groupPresence) may comprise a quantity of bits (e.g., 8, or any other quantity). The first bitmap may be configured/indicated by the SIB1 message. Each bit of the first bitmap may correspond to a respective group of SSB groups. As shown in FIG. 37, a first bit (e.g., left most bit of the first bitmap) may correspond to a first SSB group comprising 1^{st} SSB (with SSB index 0), 2^{nd} SSB (with SSB index 1), ... and 8^{th} SSB (with SSB index 7). A second bit (e.g., the second bit of the first bitmap) may correspond to a second SSB group comprising 9^{th} SSB (with SSB index 8), 10^{th} SSB (with SSB index 9), ... and 16th SSB (with SSB index 15). A last bit (e.g., right most bit of the first bitmap) may correspond to an 8^{th} SSB group comprising 57^{th} SSB (with SSB index 56), 58^{th} SSB (with SSB index 57), ... and 64^{th} SSB (with SSB index 63), etc. An SSB may belong/correspond to at most one SSB group of the first SSB groups. A bit, of the first bitmap, may indicate whether the base station transmit an SSB group, corresponding to the bit, in an SSB burst. The bit being set to a first value (e.g., 1) may indicate that the corresponding SSB group may be transmitted in the SSB burst by the base station. The bit being set to a second value (e.g., 0) may indicate that the corresponding SSB group is not transmitted in the SSB burst by the base station, or vice versa.

A second bitmap (e.g., parameter inOneGroup) may comprise a quantity of bits (e.g., 8, or any other quantity). Each bit of the second bitmap may correspond to a respective group of SSB groups. A first bit (e.g., left most bit of the second bitmap) may correspond to a first SSB group comprising 1^{st} SSB (with SSB index 0), 2^{nd} SSB (with SSB index 8), ... and 8^{th} SSB (with SSB index 56). A second bit (e.g., the second bit of the second bitmap) may correspond to a second SSB group comprising 1^{st} SSB (with SSB index 1), 2^{nd} SSB (with SSB index 9), ... and 8^{th} SSB (with SSB index 57). A last bit (e.g., right most bit of the second bitmap) may correspond to an 8^{th} SSB group comprising 1^{st} SSB (with SSB index 7), 2^{nd} SSB (with SSB index 15), ... and 8^{th} SSB (with SSB index 63), etc. An SSB may belong/correspond to at most one SSB group of the second SSB groups. A bit, of the second bitmap, may indicate whether the base station may transmit an SSB group, corresponding to the bit, in an SSB burst. The bit being set to a first value (e.g., 1) may indicate that the corresponding SSB group is transmitted in the SSB burst by the base station. the bit being setting to a second value (e.g., 0) may indicate that the corresponding SSB group is not sent/transmitted in the SSB burst by the base station, or vice versa.

The plurality of SSBs (e.g., with SSB index from 0 to 63) may be grouped, for the first bitmap, into first SSB groups. Each of the first SSB groups may comprise SSBs with continuous SSB indexes. A first SSB group of the first SSB groups may comprise SSBs with SSB indexes from 0 to 7, a second SSB group may comprise SSB indexes from 8 to 15, etc. The plurality of SSBs may be also grouped, for the second bitmap, into second SSB groups. Each of the second SSB groups may comprise SSBs with discontinuous SSB indexes. A first SSB group of the second SSB groups may comprise SSBs with SSB indexes {0, 8, 16, ...56}. A second SSB group of the second SSB groups comprises SSBs with SSB indexes {1, 9, 17, ...57}, etc. SSB index gap between two neighboring SSB indexes in a second SSB group may be equal to 8 (or any other value).

Not all bits of the first and the second bitmap may be considered for determining an SSB group is transmitted or not. A maximum quantity of SSBs within an SSB burst may be equal to four when fc ≤ 3 GHz (e.g., in accordance with FIG. 32). A wireless device may determine that the four leftmost bits of a bitmap (e.g., the first bitmap and/or the second bitmap) are valid. The wireless device may ignore the four rightmost bits of the first bitmap and/or the second bitmap.

As shown in FIG. 34, the first bitmap may be indicated, by the base station, as {1 0 1 0 0 0 0 0} and the second bitmap may be indicated as {1 1 0 0 0 0 0 0}. The base station may transmit SSBs with indexes {0 1 16 17} in an SSB burst, for example, based on the grouping configuration of the first SSB groups and the second SSB groups and further based on the first bitmap and the second bitmap.

A base station may send/transmit a MIB via PBCH. The MIB may indicate configuration parameters (e.g., for CORESET 0), for a wireless device monitoring a PDCCH, for scheduling a SIB1 message. The base station may transmit a MIB message with a transmission periodicity of 80 ms (or with any other first periodicity). The same MIB message may be repeated (according to SSB periodicity) within the 80 ms. Contents of the MIB message may be same over the 80 ms period. The same MIB may be transmitted over all SSBs within an SSB burst. The PBCH transmission (e.g., MIB) may indicate that there is no associated SIB1. A wireless device may be pointed to/indicated another frequency from where to search for an SSB that is associated with a SIB1 as well as a frequency range where the wireless device may assume no SSB associated with SIB1 is present, for example, if the PBCH transmission indicates that there is no associated SIB1. The indicated frequency range may be confined within a contiguous spectrum allocation of the same operator in which SSB is detected.

A base station may send/transmit a SIB1 message with a periodicity of 160 ms (or with any other second periodicity). The base station may transmit the same SIB1 message with variable transmission repetition periodicity within 160 ms. A default transmission repetition periodicity of SIB1 may be 20 ms (or any other third periodicity). The base station may determine an actual transmission repetition periodicity based on network implementation. SIB 1 repetition transmission period may be 20 ms, for example, for SSB and CORESET multiplexing pattern 1. SIB1 transmission repetition period may be the same as the SSB period, for example, for SSB and CORESET multiplexing patterns 2 or 3. SIB1 may comprise information regarding availability and scheduling (e.g., mapping of SIBs to system information (SI) message, periodicity, SI window size) of other SIBs and/or an indication whether one or more SIBs are only provided on demand. Configuration parameters needed by a wireless device to perform an SI request may be indicated in the SIB1 if the one or more SIBs are only provided on demand.

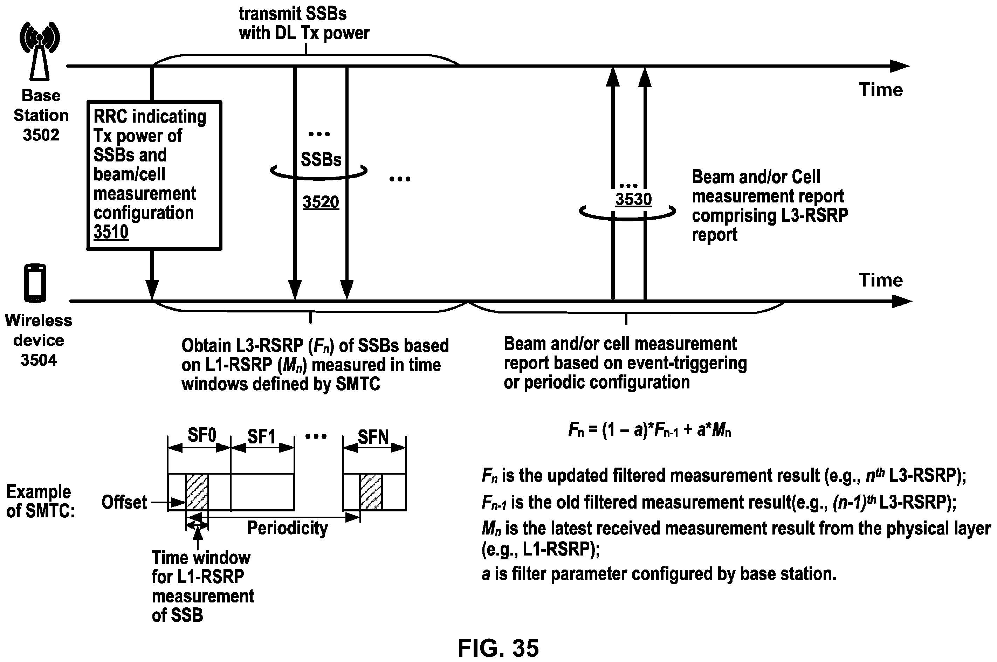

FIG. 35 shows an example of uplink transmission power determination based pathloss measurement (e.g., beam and cell measurement of SSBs/CSI-RSs). At step 3510. a base station 3502 may send (e.g., transmit), to a wireless device 3504 or a group of wireless devices, one or more RRC messages (e.g., SIB1, UE-specific RRC message, cell-specific RRC messages, etc.). A base station (or the network) may send (e.g., transmit), to a wireless device, one or more RRC messages indicating the wireless device in RRC_CONNECTED to derive RSRP, RSRQ and SINR measurement results per cell associated to NR measurement objects, for example, based on parameters configured in the measurement object (e.g., *measObject)* (e.g., maximum number of beams to be averaged and beam consolidation thresholds) and in a reporting configuration (e.g., *reportConfig*) (e.g., *rsType* to be measured, SSB or CSI-RS). The base station (or the network) may send (e.g., transmit), to a wireless device, one or more RRC messages indicating the wireless device in RRC_IDLE or in RRC_INACTIVE to derive RSRP and RSRQ measurement results per cell associated to NR carriers, for example, based on parameters configured in measurement idle NR carrier list (e.g., *measIdleCarrierListNR*) within an idle measurement configuration (e.g., *VarMeasIdleConfig*) for measurements.

An RRC message may comprise information relevant for evaluating, for example, if a wireless device is allowed to access a cell and/or scheduling information of other system information. The RRC message may comprise radio resource configuration information that is common for wireless devices and barring information applied to access control. The RRC message may be implemented based on example as described herein with respect to FIG. 25 and/or FIG. 26. The SIB1 message may be sent (e.g., transmitted) with a periodicity of 160ms (or any other value), for example, if the RRC message comprises a SIB1 message. Within 160ms (or any other value), the base station may send (e.g., transmit) repetitions of the SIB1, each repetition having the same SIB1 contents.

The base station may send (e.g., transmit) a group common DCI (e.g., DCI format 1_0 with CRC scrambled by SI-RNTI), for example, via a type 0 common search space of a cell, scheduling a SIB1 message (not shown in FIG. 35). The type 0 common space may be indicated with one or more configuration parameters (control resource set indication, search space indication, etc.) via a MIB message, for example, based on examples as described herein with respect to FIG. 24A.

The SIB1 message may indicate a value (e.g., *ss-PBCH-BlockPower,* based on the example of FIG. 25) of transmission power (e.g., downlink transmission power or DL Tx power) of SSBs. A value of *ss-PBCH-BlockPower* may indicate average energy per resource element (EPRE) of resources elements (REs) that carry SSSs in dBm that the base station may use for SSB transmission (e.g., at 3520). A resource element may be implemented based on examples as described herein with respect to FIG. 8. An SSB transmission may be implemented based on examples as described herein with respect to FIG. 33 and/or FIG. 34. The SIB1 message may further indicate a periodicity (*ssb-PeriodicityServingCell* as shown in FIG. 25) and location of SSBs (*ssb-PositionsInBurst* as shown in FIG. 25) in an SSB burst, based on examples as described herein with respect to FIG. 33 and/or FIG. 34. The base station may send (e.g., transmit) the SSBs with a default 20ms (or any other value) periodicity.

As shown in FIG. 35, the base station, may send (e.g., transmit) SSBs 3520 (in an SSB burst) with a downlink transmission power (or DL Tx power), for example, based on the SIB1 message. The downlink transmission power may be determined, for example, based on the EPRE value indicated by *ss-PBCH-BlockPower* in the SIB1 message. The base station may send (e.g., transmit) the SSBs with a periodicity determined, for example, based on the periodicity and the location of the SSBs indicated by the SIB1 message.

The wireless device may measure the SSBs for determining beam/cell channel qualities and/or quantities, for example, based on receiving the SIB1 message. The channel qualities and/or quantities may comprise: a L1-RSRP of one or more beams of a cell, a L3-RSRP of a cell, channel state information (CSI), pathloss, Tx/Rx beam determination (e.g., based on examples as described herein with respect to FIG. 12A and/or FIG. 12B), etc.

A base station (or network) may configure a wireless device (e.g., an RRC_CONNECTED wireless device) to perform one or more measurements. The network may configure the wireless device to report the one or more measurements (e.g., at 3530) in accordance with the measurement configuration or to perform conditional reconfiguration evaluation in accordance with the conditional reconfiguration. The measurement configuration may be provided by means of dedicated signaling, for example, using the *RRCReconfiguration* or *RRCResume.*

The network may configure the wireless device to perform a plurality of types of measurements. For example, the plurality of types of measurements may comprise NR measurements, Inter-RAT measurements of E-UTRA frequencies, Inter-RAT measurements of UTRA-FDD frequencies, and/or so on.

The network may configure the wireless device to report measurement information, for example, based on SSB(s). The measurement information based on SSB(s) may comprise measurement results per SSB, measurement results per cell based on SSB(s), SSB(s) indexes, and/or so on. The network may configure the wireless device to report measurement information, for example, based on CSI-RS resources. The measurement information based on CSI-RS resources may comprise measurement results per CSI-RS resource, measurement results per cell based on CSI-RS resource(s), CSI-RS resource measurement identifiers, and/or so on.

The network may configure the wireless device to perform channel busy ratio (CBR) measurements for one or more sidelinks (e.g., New Radio (NR) sidelink and/or vehicle-to-anything(V2X) sidelink). The network may configure the wireless device to report CLI (Cross Link Interference) measurement information, for example, based on SRS resources. The CLI measurement information based on SRS resources may comprise measurement results per SRS resource and SRS resource(s) indexes. The network may configure the wireless device to report CLI measurement information, for example, based on CLI-RSSI resources. The CLI measurement information based on CLI-RSSI resources may comprise measurement results per CLI-RSSI resource and CLI-RSSI resource(s) indexes.

The measurement configuration (sent (e.g., transmitted) by the base station in one or more RRC messages) may include parameters comprising measurement objects, reporting configurations, measurement identities, quantity configurations, measurement gaps, and/or so on. Measurement objects (MOs) may comprise a list of objects on which the wireless device may perform the measurements.

FIG. 36 shows an example of RRC configuration of beam/cell measurement (e.g., parameters of a MO). A MO (e.g., each MO) may be associated with a measurement object identity (e.g., *measObjectId*)*.* As shown in FIG. 36, for intra-frequency and inter-frequency measurements, a measurement object may indicate frequency/time location (*ssbFrequency*) and subcarrier spacing (*ssbSubcarrierSpacing*) of reference signals to be measured. The network may configure a list of cell specific offsets, a list of 'blacklisted' cells, and a list of 'whitelisted' cells, for example, associated with the measurement object. Blacklisted cells may not be applicable/usable in event evaluation or measurement reporting. Whitelisted cells may be the only ones applicable/usable in event evaluation or measurement reporting. The measurement object identity (e.g., *measObjectId*) of a MO which corresponds to each serving cell may be indicated by a serving cell MO parameter (e.g., *servingCellMO)* within the serving cell configuration (e.g., in RRC message, *ServingCellConfig* IE). For inter-RAT E-UTRA measurements, a measurement object may be a single E-UTRA carrier frequency. The network may configure a list of cell specific offsets and a list of 'blacklisted' cells, for example, associated with this E-UTRA carrier frequency. Blacklisted cells may not be applicable/usable in event evaluation or measurement reporting. For inter-RAT UTRA-FDD measurements, a measurement object may be a set of cells on a single UTRA-FDD carrier frequency. For CBR measurement of NR sidelink communication, a measurement object may be a set of transmission resource pool(s) on a single carrier frequency for NR sidelink communication. For CLI measurements, a measurement object may indicate the frequency/time location of SRS resources and/or CLI-RSSI resources, and subcarrier spacing of SRS resources to be measured.

Reporting configurations may comprise a list of reporting configurations where there may be one or more reporting configurations per measurement object. A measurement reporting configuration (e.g., each measurement reporting configuration) may comprise: reporting criterion that may trigger the wireless device to send a measurement report and which may be either periodical or a single event description, RS type of a RS which the wireless device may use for beam and cell measurement results (e.g., SSB or CSI-RS), and/or reporting format wherein quantities per cell and per beam that the wireless device may include in the measurement report (e.g., RSRP) and other associated information such as the maximum number of cells and the maximum number of beams per cell to report. For conditional reconfiguration, each configuration may comprise: execution criteria which the wireless device may use for conditional reconfiguration execution, and RS type of a RS that the wireless device may use for obtaining beam and cell measurement results (e.g., SSB-based or CSI-RS-based), used for evaluating conditional reconfiguration execution condition.

Measurement identities may comprise, for measurement reporting, a list of measurement identities where each measurement identity may link one measurement object with one reporting configuration. By configuring multiple measurement identities, it may be possible to link more than one measurement object to the same reporting configuration, as well as to link more than one reporting configuration to the same measurement object. The measurement identity may be included in the measurement report that triggered the reporting, serving as a reference to the network. For conditional reconfiguration triggering, one measurement identity may link to exactly one conditional reconfiguration trigger configuration. Up to two measurement identities may be linked to one conditional reconfiguration execution condition.

Quantity configuration may define measurement filtering configuration used for all event evaluation and related reporting, and for periodical reporting of that measurement. For NR measurements, the network may configure up to two quantity configurations with a reference in the NR measurement object to the configuration to be used. In each configuration, different filter coefficients may be configured for different measurement quantities, for different RS types, and/or for measurements per cell and per beam. Measurement gaps may define periods that the wireless device may use to perform measurements.

A wireless device in an RRC state (e.g., RRC_CONNECTED) may maintain a measurement object list, a reporting configuration list, a measurement identities list according to signaling and procedures, and/or so on. The measurement object list may include NR measurement object(s), CLI measurement object(s), inter-RAT objects, and/or so on. Similarly, the reporting configuration list may include NR and inter-RAT reporting configurations. Any measurement object may be linked to any reporting configuration of the same RAT type. Some reporting configurations may not be linked to a measurement object. Likewise, some measurement objects may not be linked to a reporting configuration.

The measurement procedures may distinguish the following types of cells: serving cell(s) (e.g., SpCell and one or more SCells), listed cells (e.g., cells listed within the measurement object(s)), and detected cells (e.g., cells that are not listed within the measurement object(s) but are detected by the wireless device on the SSB frequency(ies) and subcarrier spacing(s) indicated by the measurement object(s)).

A wireless device may measure and report on the serving cell(s), listed cells and/or detected cells (e.g., for NR measurement object(s)). For inter-RAT measurements object(s) of E-UTRA, the wireless device may measure and report on listed cells and detected cells. For RSSI and channel occupancy measurements, the wireless device may measure and report on the configured resources on the indicated frequency. For inter-RAT measurements object(s) of UTRA-FDD, the wireless device may measure and report on listed cells. For CLI measurement object(s), the wireless device may measure and report on configured measurement resources (e.g., SRS resources and/or CLI-RSSI resources).

A network may apply/use the following procedures. The following procedures may: help to ensure that, if the wireless device has a measurement configuration (e.g., *measConfig*) associated with a CG (cell group), the wireless device may include a measurement object (e.g., *measObject*) for the SpCell and for each SCell (e.g., NR SCell) of the CG to be measured; configure at most one measurement identity across all CGs using a reporting configuration with a report type (e.g., *reportType*) set to report CG information (e.g., *reportCGI*), and configure at most one measurement identity per CG using a reporting configuration with a delay value configuration (e.g., *ul-DelayValueConfig*); help to ensure that, in the measurement configuration (e.g., *measConfig*) associated with a CG: for all SSB based measurements there may be at most one measurement object with the same SSB frequency (e.g., *ssbFrequency*); and a first SS/PBCH block measurement timing configuration (SMTC) (e.g., *smtc1*) included in any measurement object with the same SSB frequency (e.g., *ssbFrequency*) may have the same value and that a second SMTC (e.g., *smtc2*) included in any measurement object with the same SSB frequency (e.g., *ssbFrequency*) may have the same value and that a third SMTC list (e.g., *smtc3list*) included in any measurement object with the same SSB frequency (e.g., *ssbFrequency*) may have the same value; help to ensure that all measurement objects configured with the same SSB frequency (e.g., *ssbFrequency)* may have the same SSB subcarrier spacing (e.g., *ssbSubcarrierSpacing*); help to ensure that, if a measurement object associated with the MCG has the same SSB frequency (e.g., *ssbFrequency)* as a measurement object associated with the SCG: for that SSB frequency (e.g., *ssbFrequency),* the measurement window according to the first SMTC (e.g., *smtc1*) configured by the MCG may include the measurement window according to the first SMTC (e.g., *smtc1*) configured by the SCG, or vice-versa, with an accuracy of the maximum receive timing difference; and if both measurement objects are used for RSSI measurements, bits in measurement slots (e.g., *measurementSlots*) in both objects corresponding to the same slot may be set to the same value. Also, the end symbol (*e.g., endSymbol)* may be the same in both objects; help to ensure that, if a measurement object has the same SSB frequency (e.g., *ssbFrequency)* as a measurement object configured: for that SSB frequency (e.g., *ssbFrequency),* the measurement window according to the SMTC (e.g., *smtc*) configured may include the measurement window according to the first SMTC (e.g., *smtc1*) configured, or vice-versa, with an accuracy of the maximum receive timing difference and if both measurement objects may be used for RSSI measurements, bits in measurement slots (e.g., *measurementSlots*) in both objects corresponding to the same slot may be set to the same value. Also, the end symbol (e.g., *endSymbol*) may be the same in both objects; and when the wireless device is in a connectivity configuration (e.g., NE-DC (dual connectivity), NR-DC, or NR standalone), configure at most one measurement identity across all CGs using a reporting configuration with the report type (e.g., *reportType*) set to report SFN and frame timing difference (SFTD) (e.g., *reportSFTD*). For CSI-RS resources, the network may apply/use the following procedures. The following procedures may: help to ensure that all CSI-RS resources configured in each measurement object may have the same center frequency (e.g., (*startPRB*+floor(*nrofPRBs*/2))); and help to ensure that the total number of CSI-RS resources configured in each measurement object may not exceed a maximum number.

A wireless device may perform measurement object removal procedure, for example, if the received measurement configuration (e.g., *measConfig*) may include a list of measurement objects to be removed (e.g., *measObjectToRemoveList*). The wireless device may perform measurement object addition/modification procedure, for example, if the received measurement configuration (e.g., *measConfig*) may include a list of measurement objects to be added and/or modified (e.g., *measObjectToAddModList*). The wireless device may perform reporting configuration removal procedure, for example, if the received measurement configuration (e.g., *measConfig*) may include a list of reporting configurations to be removed (e.g., *reportConfigToRemoveList*). The wireless device may perform reporting configuration addition/modification procedure, for example, if the received measurement configuration (e.g., *measConfig*) may include a list of reporting configurations to be added and/or modified (e.g., *reportConfigToAddModList*). The wireless device may perform quantity configuration procedure, for example, if the received measurement configuration (e.g., *measConfig*) may include quantity configuration (e.g., *quantityConfig*). The wireless device may perform measurement identity removal procedure, for example, if the received measurement configuration (e.g., *measConfig*) may include a list of measurement identities to be removed (e.g., *measIdToRemoveList*). The wireless device may perform measurement identity addition/modification procedure, for example, if the received measurement configuration (e.g., *measConfig*) may include a list of measurement identities to be added and/or modified (e.g., *measIdToAddModList*)*.* The wireless device may perform measurement gap configuration procedure, for example, if the received measurement configuration (e.g., *measConfig*) may include a measurement gap configuration (e.g., *measGapConfig*)*.* The wireless device may perform measurement gap sharing configuration procedure, for example, if the received measurement configuration (e.g., *measConfig*) may include a measurement gap sharing configuration (e.g., *measGapSharingConfig*)*.* The wireless device may set a parameter (e.g., *ssb-RSRP*) of a measurement configuration (e.g., *s-MeasureConfig*) within an accumulated configuration of measurements (e.g., *VarMeasConfig*) to the lowest value of the RSRP ranges indicated by the received value of the measurement configuration (e.g., *s-MeasureConfig*)*,* for example, if the measurement configuration (e.g., s-*MeasureConfig*) is set to a parameter (e.g., *ssb-RSRP),* otherwise, the wireless device may set a parameter (e.g., *csi-RSRP*) of the measurement configuration (e.g., *s-MeasureConfig*) within an accumulated configuration of measurements (e.g., *VarMeasConfig*) to the lowest value of the RSRP ranges indicated by the received value of the measurement configuration (e.g., *s-MeasureConfig*), for example, if the received measurement configuration (e.g., *measConfig*) may include the measurement configuration (e.g., *s-MeasureConfig*).

A wireless device may set up SMTC in accordance with a received parameter for providing one or more values in the SMTC configuration. For example, a wireless device may set up first SMTC in accordance with a received parameter (e.g., *periodicityAndOffset* parameter) for providing periodicity and/or offset values (e.g., *Periodicity* and *Offset* value for the following condition) in the first SMTC (e.g., *smtc1*) configuration. The first subframe of each SMTC occasion may occur at an SFN and subframe of the serving cell (e.g., NR SpCell) meeting the following condition: SFN mod *T =* (FLOOR (*Offset*/10)); subframe = *Offset* mod 10 if the *Periodicity* is larger than *sf5,* otherwise subframe = *Offset* or (*Offset +5*), wherein *T = CEIL*(*Periodicity*/10).

The wireless device may set up an additional SMTC in accordance with one or more received parameters. For example, for cells indicated in a physical cell identity list (e.g., *pci-List*) parameter in the second SMTC (e.g., *smtc*2) in the same measurement objects of NR (e.g., *MeasObjectNR*), the wireless device may set up an additional SMTC in accordance with the received periodicity (e.g., *periodicity*) parameter in the second SMTC (e.g., *smtc2*) configuration and use the offset (e.g., *Offset*) (derived from periodicity and offset (e.g., *periodicityAndOffset*) parameter) and duration (e.g., *duration*) parameter from the first SMTC (e.g., *smtc1*) configuration, for example, if second SMTC (e.g., *smtc2*) is present. The first subframe of each SMTC occasion may occur at an SFN and subframe of the SpCell (e.g., NR SpCell) meeting the above condition.

The wireless device may set up an additional SMTC in accordance with one or more received parameters. For example, for cells indicated in the physical cell identity list (e.g., *pci-List*) parameter in a second SMTC configuration (e.g., *smtc2-LP*) in the same frequency (for intra frequency cell reselection) or different frequency (for inter frequency cell reselection), the wireless device may set up an additional SMTC in accordance with the received periodicity (e.g., *periodicity*) parameter in the second SMTC configuration (e.g., *smtc2-LP*) configuration and use the offset (e.g., *Offset*) (derived from periodicity and offset (e.g., *periodicityAndOffset*) parameter) and duration (e.g., *duration*) parameter from the SMTC (e.g., *smtc*) configuration for that frequency, for example, if second SMTC configuration (e.g., *smtc2-LP)* is present. The first subframe of each SMTC occasion may occur at an SFN and subframe of the SpCell (e.g., NR SpCell) or serving cell (for cell reselection) meeting the above condition.

The wireless device may set up an additional SMTC in accordance with one or more received parameters. For example, for cells indicated in the physical cell identity list (e.g., *pci-List*) parameter in each configuration (e.g., *SSB-MTC3)* element of the list in the same measurement objects of NR (e.g., *MeasObjectNR*), the independent set of arrays (e.g., IAB-MT) may set up an additional SMTC in accordance with the received periodicity and offset (e.g., *periodicityAndOffset*) parameter (using same condition as the first SMTC (e.g., *smtc1*) to identify the SFN and the subframe for SMTC occasion) in each configuration (e.g., *SSB-MTC3*) and use the duration and SSB measurement parameters (e.g., *ssb-ToMeasure*) from each configuration (e.g., *SSB-MTC3*), for example, if a third SMTC list (e.g., *smtc3list*) is present. On the indicated SSB frequency (e.g., *ssbFrequency*), the wireless device may not consider SSB transmission in subframes outside the SMTC occasion for radio resource management (RRM) measurements based on SSB and for RRM measurements based on CSI-RS except for SFTD measurement.

A wireless device (e.g., an RRC_CONNECTED wireless device) may derive cell measurement results by measuring one or multiple beams associated per cell as configured by the network. For all cell measurement results, except for RSSI, and CLI measurement results in RRC_CONNECTED, the wireless device may apply/use the layer 3 filtering, for example, before using the measured results for evaluation of reporting criteria, measurement reporting or the criteria to trigger conditional reconfiguration execution. For cell measurements, the network may configure RSRP, RSRQ, SINR, RSCP or EcN0 as trigger quantity. For CLI measurements, the network may configure SRS-RSRP or CLI-RSSI as trigger quantity. For cell and beam measurements, reporting quantities may be any combination of quantities (e.g., only RSRP; only RSRQ; only SINR; RSRP and RSRQ; RSRP and SINR; RSRQ and SINR; RSRP, RSRQ and SINR; only RSCP; only EcN0; RSCP and EcN0), irrespective of the trigger quantity, and for CLI measurements, reporting quantities may be either SRS-RSRP or CLI-RSSI. For conditional reconfiguration execution, the network may configure up to two quantities, both using same RS type. The wireless device may not apply/use the layer 3 filtering to/for derive the CBR measurements.

A network may configure the wireless device to report measurement information per beam (which may either be measurement results per beam with respective beam identifier(s) or only beam identifier(s)). The wireless device may apply/use the layer 3 beam filtering, for example, if beam measurement information is configured to be included in measurement reports. On the other hand, the exact L1 filtering of beam measurements used to derive cell measurement results may be implementation dependent.

A wireless device may perform measurements (e.g.. RSRP and RSRQ measurements) for each serving cell (e.g., for which a serving cell MO parameter (e.g., *servingCellMO*) is configured), for example, if the wireless device is configured with measurement configuration (e.g., *measConfig*)*.* The wireless device may derive serving cell measurement results based on SSB, for example, if a reporting configuration (e.g., *reportConfig)* associated with at least one measurement identity (e.g., *measId*) included in the measurement identity list (e.g., *measIdList*) within an accumulated configuration of measurements (e.g., *VarMeasConfig*) contains an RS type (e.g., *rsType*) set to SSB (e.g., *ssb)* and SSB configuration mobility (e.g., *ssb-ConfigMobility*) is configured in the measurement object (e.g., *measObject)* indicated by the serving cell MO parameter (e.g., *servingCellMO*). The wireless device may derive layer 3 filtered RSRP and RSRQ per beam for the serving cell based on SSB, for example, if the reporting configuration (e.g., *reportConfig*) associated with at least one measurement identity (e.g., *measId*) included in the measurement identity list (e.g., *measIdList*) within an accumulated configuration of measurements (e.g., *VarMeasConfig*) contains a report quantity RS indexes (e.g., *reportQuantityRS-Indexes*) and a maximum number of RS indexes to report (e.g., *maxNrofRS-IndexesToReport*) and contains an RS type (e.g., *rsType)* set to SSB (e.g., *ssb).*

The wireless device may derive layer 3 filtered measurements per beam for the serving cell. The wireless device, for example, if the reporting configuration (e.g., *reportConfig)* associated with at least one measurement identity (e.g., *measId*) included in the measurement identity list (e.g., *measIdList*) within an accumulated configuration of measurements (e.g., *VarMeasConfig*) contains an RS type (e.g., *rsType*) set to CSI-RS (e.g., *csi-rs)* and CSI-RS resource configuration mobility (e.g., *CSI-RS-ResourceConfigMobility)* is configured in the measurement object (e.g., *measObject*) indicated by the serving cell MO parameter (e.g., *servingCellMO*)*,* may derive layer 3 filtered RSRP and RSRQ per beam for the serving cell based on CSI-RS if the reporting configuration (e.g., *reportConfig*) associated with at least one measurement identity (e.g., *measId*) included in the measurement identity list (e.g., *measIdList*) within an accumulated configuration of measurements (e.g., *VarMeasConfig*) contains a report quantity RS indexes (e.g., *reportQuantityRS-Indexes*) and maximum number of RS indexes to report (e.g., *maxNrofRS-IndexesToReport*) and contains an RS type (e.g., *rsType*) set to CSI-RS (e.g., *csi-rs).* The wireless device may derive serving cell measurement results based on CSI-RS, for example, if the reporting configuration (e.g., *reportConfig*) associated with at least one measurement identity (e.g., *measId*) included in the measurement identity list (e.g., *measIdList*) within an accumulated configuration of measurements (e.g., *VarMeasConfig*) contains an RS type (e.g., *rsType*) set to CSI-RS (e.g., *csi-rs*) and CSI-RS resource configuration mobility (e.g., *CSI-RS-ResourceConfigMobility*) is configured in the measurement object (e.g., *measObject*) indicated by the serving cell MO parameter (e.g., *servingCellMO*).

The wireless device may derive layer 3 filtered measurement per beam for the serving cell based on SSB. The wireless device, for each serving cell for which a serving cell MO parameter (e.g., *servingCellMO*) is configured, for example, if the reporting configuration (e.g., *reportConfig*) associated with at least one measurement identity (e.g., *measId*) included in the measurement identity list (e.g., *measIdList*) within an accumulated configuration of measurements (e.g., *VarMeasConfig*) contains SINR as trigger quantity and/or reporting quantity, may derive layer 3 filtered SINR per beam for the serving cell based on SSB if the reporting configuration (e.g., *reportConfig*) contains RS type (e.g., *rsType*) set to SSB (e.g., *ssb)* and SSB configuration mobility (e.g., *ssb-ConfigMobility*) is configured in the serving cell MO parameter (e.g., *servingCellMO)* and if the reporting configuration (e.g., *reportConfig*) contains a report quantity RS indexes (e.g., *reportQuantityRS-Indexes*) and maximum number of RS indexes to report (e.g., *maxNrofRS-IndexesToReport*). The wireless device may derive serving cell SINR based on SSB, for example, if the reporting configuration (e.g., *reportConfig*) associated with at least one measurement identity (e.g., *measId*) included in the measurement identity list (e.g., *measIdList*) within an accumulated configuration of measurements (e.g., *VarMeasConfig*) contains SINR as trigger quantity and/or reporting quantity and if the reporting configuration (e.g., *reportConfig*) contains RS type (e.g., *rsType*) set to SSB (e.g., *ssb)* and SSB configuration mobility (e.g., *ssb-ConfigMobility*) is configured in the serving cell MO parameter (e.g., *servingCellMO*). The wireless device, for example, if the reporting configuration (e.g., *reportConfig*) contains RS type (e.g., *rsType*) set to CSI-RS (e.g., *csi-rs*) and CSI-RS resource configuration mobility (e.g., *CSI-RS-ResourceConfigMobility)* is configured in the serving cell MO parameter (e.g., *servingCellMO*), may derive serving cell SINR based on CSI-RS, and may derive layer 3 filtered SINR per beam for the serving cell based on CSI-RS, for example, if the reporting configuration (e.g., *reportConfig*) contains a report quantity RS indexes (e.g., *reportQuantityRS-Indexes*) and maximum number of RS indexes to report (e.g., *maxNrofRS-IndexesToReport*).

The wireless device may derive cell measurement results based on CSI-RS and/or layer 3 filtered beam measurements. For each measurement identity (e.g., *measId*) included in the measurement identity list (e.g., *measIdList*) within an accumulated configuration of measurements (e.g., *VarMeasConfig*)*,* for example, if the report type (e.g., *reportType*) for the associated reporting configuration (e.g., *reportConfig*) is periodical (e.g., *periodical),* event-triggered (e.g., *eventTriggered)* or conditional triggering configuration (e.g., *condTriggerConfig*), if a measurement configuration (e.g., *s-MeasureConfig*) is set to SSB-RSRP (e.g., *ssb-RSRP*) and the SpCell RSRP (e.g., NR SpCell RSRP) based on SSB, after layer 3 filtering, is lower than SSB-RSRP (e.g., *ssb-RSRP*) or if a measurement configuration (e.g., *s-MeasureConfig*) is set to CSI-RSRP (e.g., *csi-RSRP*) and the SpCell RSRP (e.g., NR SpCell RSRP) based on CSI-RS, after layer 3 filtering, is lower than CSI-RSRP (e.g., *csi-RSRP*), the wireless device may derive cell measurement results based on CSI-RS for the trigger quantity and each measurement quantity indicated in cell quantities report (e.g., *reportQuantityCell*) using parameters from the associated measurement object (e.g., *measObject*), if report quantity RS indexes (e.g., *reportQuantityRS-Indexes*) and maximum number of RS indexes to report (e.g., *maxNrofRS-IndexesToReport*) for the associated reporting configuration (e.g., *reportConfig*) are configured and if the measurement object (e.g., *measObject*) is associated to NR and the RS type (e.g., *rsType*) is set to CSI-RS (e.g., *csi-rs)* and may derive layer 3 filtered beam measurements only based on CSI-RS for each measurement quantity indicated in report quantity RS indexes (e.g., *reportQuantityRS-Indexes*) if report quantity RS indexes (e.g., *reportQuantityRS-Indexes*) and maximum number of RS indexes to report (e.g., *maxNrofRS-IndexesToReport*) for the associated reporting configuration (e.g., *reportConfig*) are configured.

The wireless device may derive cell measurement results based on CSI-RS, cell measurement results based on SSB, and/or layer 3 beam measurements. For each measurement identity (e.g., *measId*) included in the measurement identity list (e.g., *measIdList*) within an accumulated configuration of measurements (e.g., *VarMeasConfig*), for example, if the report type (e.g., *reportType*) for the associated reporting configuration (e.g., *reportConfig*) is periodical (e.g., *periodical),* event-triggered (e.g., *eventTriggered*) or conditional triggering configuration (e.g., *condTriggerConfig*), if a measurement configuration (e.g., *s-MeasureConfig*) is set to SSB-RSRP (e.g., *ssb-RSRP*) and the NR SpCell RSRP based on SSB, after layer 3 filtering, is lower than SSB-RSRP (e.g., *ssb-RSRP*) or if a measurement configuration (e.g., *s-MeasureConfig*) is set to CSI-RSRP (e.g., *csi-RSRP*) and the NR SpCell RSRP based on CSI-RS, after layer 3 filtering, is lower than CSI-RSRP (e.g., *csi-RSRP*), the wireless device may derive cell measurement results based on CSI-RS for the trigger quantity and each measurement quantity indicated in cell quantities report (e.g., *reportQuantityCell*) using parameters from the associated measurement object (e.g., *measObject*) if report quantity RS indexes (e.g., *reportQuantityRS-Indexes*) and maximum number of RS indexes to report (e.g., *maxNrofRS-IndexesToReport*) for the associated reporting configuration (e.g., *reportConfig*) are configured and if the measurement object (e.g., *measObject*) is associated to NR and if the measurement object (e.g., *measObject*) is associated to NR and the RS type (e.g., *rsType*) is set to SSB (e.g., *ssb).* The wireless device may derive cell measurement results based on SSB for the trigger quantity and each measurement quantity indicated in cell quantities report (e.g., *reportQuantityCell*) using parameters from the associated measurement object (e.g., *measObject*) and may derive layer 3 beam measurements only based on SSB for each measurement quantity indicated in report quantity RS indexes (e.g., *reportQuantityRS-Indexes*) if report quantity RS indexes (e.g., *reportQuantityRS-Indexes*) and maximum number of RS indexes to report (e.g., *maxNrofRS-IndexesToReport*) for the associated reporting configuration (e.g., *reportConfig*) are configured.

The wireless device may filter the measured result before reporting. The wireless device, for each cell measurement quantity, each beam measurement quantity, each sidelink measurement quantity and for each CLI measurement quantity that the wireless device performs measurements, may filter the measured result before using for evaluation of reporting criteria or for measurement reporting, by the following formula: ***F*ₙ *=* (1 *- a*)**F*ₙ₋₁ *+ a*M*ₙ,** wherein ***Mₙ*** is the latest received measurement result from the physical layer, ***Fₙ*** is the updated filtered measurement result, that is used for evaluation of reporting criteria or for measurement reporting, and ***Fₙ₋₁*** is the old (or previously) filtered measurement result, where ***F₀*** is set to ***M₁*** when the first measurement result from the physical layer is received. For measurement objects of NR (e.g., *MeasObjectNR*), ***a** =* 1/2^{(*ki*/4)}, where ***kᵢ*** is the filter coefficient (e.g., *filterCoefficient*) for the corresponding measurement quantity of the *i^{th} QuantityConfigNR* in *quantityConfigNR-List,* and *i* is indicated by *quantityConfigIndex* in the measurement objects of NR (e.g., *MeasObjectNR*); for other measurements, ***a** =* 1/2^{(*k*/4)}, where ***k*** is the filter coefficient (e.g., *filterCoefficient*) for the corresponding measurement quantity received by the quantity configuration (e.g., *quantityConfig*); for UTRA-FDD, a = 1/2^{(k/4)}, where k is the filter coefficient (e.g., *filterCoefficient*) for the corresponding measurement quantity received by *quantityConfigUTRA-FDD* in the quantity configuration (e.g., *QuantityConfig*). A quantity configuration (e.g., *QuantityConfig*) IE may specify the measurement quantities and layer 3 filtering coefficients for NR and inter-RAT measurements based on examples shown in FIG. 37.

FIG. 37 shows an example of filter coefficients for layer 3 filtering for channel quality measurement. In the example of FIG. 37, SSB filter configuration (e.g., *ssb-FilterConfig*) may specify layer 3 (or L3) filter configurations for measurement results (e.g., SS-RSRP, SS-RSRQ and SS-SINR measurement results) from the layer 1 (or L1) filter(s). The filter coefficient (e.g., *FilterCoefficient*) IE may specify the measurement filtering coefficient, wherein value *fc0* corresponds to *k =* 0, *fc1* corresponds to *k =* 1, and so on.

The wireless device may adapt the filter in a way to preserve the time characteristics of the filter. The wireless device may adapt the filter such that the time characteristics of the filter are preserved at different input rates, observing that the filter coefficient (e.g., *filterCoefficient*) *k* assumes a sample rate equal to X ms. The value of X is equivalent to one intra-frequency layer 1 (or L1) measurement period assuming non-DRX operation, and depends on frequency range. No layer 3 filtering may be applicable/usable, for example, if *k* is set to 0. The filtering may be performed in the same domain as used for evaluation of reporting criteria or for measurement reporting, i.e., logarithmic filtering for logarithmic measurements.

A network (or base station) may configure the wireless device to derive measurement results per cell associated to measurement objects. The network (or base station) may configure the wireless device in RRC_CONNECTED to derive RSRP, RSRQ and SINR measurement results per cell associated to NR measurement objects, for example, based on parameters configured in the measurement object (e.g., *measObject*) (e.g., maximum number of beams to be averaged and beam consolidation thresholds) and in the reporting configuration (e.g., *reportConfig)* (RS type (e.g., *rsType*) to be measured, SSB or CSI-RS). The network may configure the wireless device in RRC_IDLE or in RRC_INACTIVE to derive RSRP and RSRQ measurement results per cell associated to NR carriers, for example, based on parameters configured in a measurement idle NR carrier list (e.g., *measIdleCarrierListNR*) within an idle measurement configuration (e.g., *VarMeasIdleConfig*) for measurements.

The wireless device may derive cell measurement results based on beam measurement on a cell. The wireless device may derive cell measurement results based on beam measurement of SSB and/or CSI-RS on a cell. For each cell measurement quantity to be derived based on SSB, the wireless device may derive each cell measurement quantity, for example, based on SSB as the highest beam measurement quantity value (e.g., wherein each beam measurement quantity is described below and/or also in specification of TS 38.215) if a beam measurement based on SSB to be averaged (e.g., *nrofSS-BlocksToAverage*) is not configured in the associated measurement object (e.g., *measObject*) in RRC_CONNECTED or in the associated entry in a measurement idle NR carrier list (e.g., *measIdleCarrierListNR*) within an idle measurement configuration (e.g., *VarMeasIdleConfig*) in RRC_IDLE/RRC_INACTIVE, or if an absolute threshold for the consolidation of measurement results per SSB (e.g., *absThreshSS-BlocksConsolidation*) is not configured in the associated measurement object (e.g., *measObject*) in RRC_CONNECTED or in the associated entry in measurement idle NR carrier list (e.g., *measIdleCarrierListNR*) within an idle measurement configuration (e.g., *VarMeasIdleConfig*) in RRC_IDLE/RRC_INACTIVE, or if the highest beam measurement quantity value is below or equal to the absolute threshold for the consolidation of measurement results per SSB (e.g., *absThreshSS-BlocksConsolidation*), otherwise, the wireless device may derive each cell measurement quantity based on SSB as the linear power scale average of the highest beam measurement quantity values above the absolute threshold for the consolidation of measurement results per SSB (e.g., *absThreshSS-BlocksConsolidation*) where the total number of averaged beams may not exceed beam measurement based on SSB to be averaged (e.g., *nrofSS-BlocksToAverage*), and where each beam measurement quantity is described below and/or also in specification of TS 38.215. The wireless device may apply/use layer 3 cell filtering for the measurement quantity if in RRC _CONNECTED, for example, after obtaining the cell measurement based on SSB.

The wireless device may consider a usable resource for deriving cell measurements. For each cell measurement quantity to be derived based on CSI-RS, the wireless device may consider a CSI-RS resource to be applicable/usable for deriving cell measurements, for example, if the concerned CSI-RS resource is included in the CSI-RS cell mobility (e.g., *csi-rs-CellMobility*) including the physical cell ID (e.g., *physCellId*) of the cell in the CSI-RS resource configuration mobility (e.g., *CSI-RS-ResourceConfigMobility*) in the associated measurement object (e.g., *measObject*). The wireless device may derive each cell measurement quantity, for example, based on applicable CSI-RS resources for the cell as the highest beam measurement quantity value, where each beam measurement quantity is described below and/or also in specification of TS 38.215, if a beam measurement based on CSI-RS resources to be averaged (e.g., *nrofCSI-RS-ResourcesToAverage*) in the associated measurement object (e.g., *measObject*) is not configured, or if an absolute threshold for the consolidation of measurement results per CSI-RS (e.g., *absThreshCSI-RS-Consolidation*) in the associated measurement object (e.g., *measObject*) is not configured, or if the highest beam measurement quantity value is below or equal to the absolute threshold for the consolidation of measurement results per CSI-RS (e.g., *absThreshCSI-RS-Consolidation*)*,* otherwise, the wireless device may derive each cell measurement quantity based on CSI-RS as the linear power scale average of the highest beam measurement quantity values above the absolute threshold for the consolidation of measurement results per CSI-RS (e.g., *absThreshCSI-RS-Consolidation*) where the total number of averaged beams may not exceed the beam measurement based on CSI-RS resources to be averaged (e.g., *nrofCSI-RS-ResourcesToAverage*). The wireless device may apply/use layer 3 cell filtering for the measurement quantity, for example, after obtaining the cell measurement based on CSI-RSs.

A wireless device may derive layer 3 beam filtered measurement. The wireless device may derive layer 3 beam filtered measurement, for example, based on SSB and/or CSI-RSs. For each layer 3 beam filtered measurement quantity to be derived based on SSB, the wireless device may derive each configured beam measurement quantity, for example, based on SSB as described below and/or also in specification of TS 38.215 and apply/use layer 3 beam filtering. For each layer 3 beam filtered measurement quantity to be derived based on CSI-RS, the wireless device may derive each configured beam measurement quantity, for example, based on CSI-RS as described below and/or also in specification of TS 38.215 and apply/use layer 3 beam filtering. In this specification, a higher layer filtered RSRP/RSRQ/SINR may be referred to as a L3-RSRP/RSRQ/SINR, in contrast to a physical layer measured RSRP/RSRQ/SINR. A higher layer filter configured with a layer 3 (or L3) filter coefficient for layer 3 (or L3) measurement may be referred to as a layer 3 (or L3) filter. A physical layer measured RSRP/RSRQ/SINR which is a RSRP/RSRQ/SINR measured by a physical layer of a wireless device, before filtered by a layer 3 (or L3) filter of the wireless device, may be referred to as a L1-RSRP/RSRQ/SINR.

A wireless device may obtain layer 1 measurement within a measurement configuration. The wireless device may measure SS-RSRP (L1-RSRP) (also described in specification of TS 38.215) within a SMTC occasion, for example, based on the SS-RSRP being defined as the linear average over the power contributions (in [W]) of the REs that carry SSSs. For SS-RSRP determination based on DM-RS for PBCH and, if indicated by higher layers, the wireless device may use CSI-RSs in addition to SSSs for SS-RSRP measurement. The wireless device may measure SS-RSRP using DM-RS for PBCH or CSI-RSs by linear averaging over the power contributions of the REs that carry corresponding RSs taking into account power scaling for the RSs. The additional use of CSI-RS for SS-RSRP determination may not be applicable/usable, for example, if SS-RSRP is not used for L1-RSRP. The wireless device may measure SS-RSRP only among the reference signals corresponding to SSBs with the same SSB index and the same physical-layer cell identity. The wireless device may measure SS-RSRP only from an indicated set of SSB(s), for example, if SS-RSRP is not used for L1-RSRP and higher-layers may indicate the set of SSBs for performing SS-RSRP measurements. The wireless device may determine, for frequency range 1, a reference point for the SS-RSRP measurement as an antenna connector of the wireless device. The wireless device may, for frequency range 2, measure SS-RSRP, for example, based on a combined signal from antenna elements corresponding to a given receiver branch. For frequency range 1 and 2, the wireless device may report SS-RSRP with a value not lower than the corresponding SS-RSRP of any of the individual receiver branches, for example, if receiver diversity is in use by the wireless device.

A wireless device may obtain layer 1 measurement within a measurement configuration. The wireless device may measure CSI-RSRP (L1-RSRP) (also described in specification of TS 38.215), for example, based on the CSI-RSRP being defined as the linear average over the power contributions (in [W]) of the resource elements of the antenna port(s) that carry CSI reference signals configured for RSRP measurements within the considered measurement frequency bandwidth in the configured CSI-RS occasions. For CSI-RSRP determination CSI reference signals transmitted on antenna port 3000 may be used. CSI reference signals transmitted on antenna ports 3000, 3001 may be used for CSI-RSRP determination, for example, if CSI-RSRP is used for L1-RSRP. For intra-frequency CSI-RSRP measurements, wireless device may not be expected to measure the CSI-RS resource(s) outside of the active downlink bandwidth part, for example, if the measurement gap is not configured. For frequency range 1, the reference point for the CSI-RSRP may be the antenna connector of the wireless device. For frequency range 2, CSI-RSRP may be measured, for example, based on the combined signal from antenna elements corresponding to a given receiver branch. For frequency range 1 and 2, the reported CSI-RSRP value may not be lower than the corresponding CSI-RSRP of any of the individual receiver branches, for example, if receiver diversity is in use by the wireless device.

A wireless device may obtain layer 1 measurement within a measurement configuration. The wireless device may measure SS-RSRQ (L1-RSRQ) (also described in specification of TS 38.215), for example, based on SS-RSRQ being defined as the ratio of N×SS-RSRP / NR carrier RSSI, where N is the number of resource blocks in the NR carrier RSSI measurement bandwidth. The measurements in the numerator and denominator may be made over the same set of resource blocks. NR carrier Received Signal Strength Indicator (NR carrier RSSI), may comprise the linear average of the total received power (in [W]) observed only in certain OFDM symbols of measurement time resource(s), in the measurement bandwidth, over N number of resource blocks from all sources, including co-channel serving and non-serving cells, adjacent channel interference, thermal noise, etc. For cell selection, the measurement time resources(s) for NR Carrier RSSI may not be constrained. Otherwise, the measurement time resource(s) for NR Carrier RSSI may be confined within SMTC window duration. The NR Carrier RSSI may be measured in slots within the SMTC window duration that are indicated by the higher layer parameter *measurementSlots* and in predefined OFDM symbols, for example, if indicated by higher-layers, if measurement gap is not used. The NR Carrier RSSI may be measured in slots within the SMTC window duration that are indicated by the higher layer parameter *measurementSlots* and in the predefined OFDM symbols that are overlapped with the measurement gap, for example, if measurement gap is used. For intra-frequency measurements, NR Carrier RSSI may be measured with timing reference corresponding to the serving cell in the frequency layer. For inter-frequency measurements, NR Carrier RSSI may be measured with timing reference corresponding to any cell in the target frequency layer. Otherwise not indicated by higher-layers, NR Carrier RSSI may be measured from OFDM symbols within SMTC window duration, for example, if measurement gap is not used. NR Carrier RSSI may be measured from OFDM symbols corresponding to overlapped time span between SMTC window duration and the measurement gap, for example, if measurement gap is used. SS-RSRP may be measured only from the indicated set of SSB(s), for example, if higher-layers indicate certain SSBs for performing SS-RSRQ measurements. For frequency range 1, the reference point for the SS-RSRQ may be the antenna connector of the wireless device. For frequency range 2, NR Carrier RSSI may be measured based on the combined signal from antenna elements corresponding to a given receiver branch, where the combining for NR Carrier RSSI may be the same as the one used for SS-RSRP measurements. For frequency range 1 and 2, the reported SS-RSRQ value may not be lower than the corresponding SS-RSRQ of any of the individual receiver branches, for example, if receiver diversity is in use by the wireless device.

A wireless device may obtain layer 1 measurement within a measurement configuration. The wireless device may measure CSI-RSRQ (L1-RSRQ) (also described in specification of TS 38.215), for example, based on CSI-RSRQ being defined as the ratio of N×CSI-RSRP to CSI-RSSI, where N is the number of resource blocks in the CSI-RSSI measurement bandwidth. The measurements in the numerator and denominator may be made over the same set of resource blocks. CSI Received Signal Strength Indicator (CSI-RSSI), may comprise the linear average of the total received power (in [W]) observed only in OFDM symbols of measurement time resource(s), in the measurement bandwidth, over N number of resource blocks from all sources, including co-channel serving and non-serving cells, adjacent channel interference, thermal noise, etc. The measurement time resource(s) for CSI-RSSI may correspond to OFDM symbols containing configured CSI-RS occasions. For CSI-RSRQ determination CSI reference signals transmitted on antenna port 3000 may be used. For intra-frequency CSI-RSRQ measurements, wireless device may not be expected to measure the CSI-RS resource(s) outside of the active downlink bandwidth part, for example, if the measurement gap is not configured. For frequency range 1, the reference point for the CSI-RSRQ may be the antenna connector of the wireless device. For frequency range 2, CSI-RSSI may be measured based on the combined signal from antenna elements corresponding to a given receiver branch, where the combining for CSI-RSSI may be the same as the one used for CSI-RSRP measurements. For frequency range 1 and 2, the reported CSI-RSRQ value may not be lower than the corresponding CSI-RSRQ of any of the individual receiver branches, for example, if receiver diversity is in use by the wireless device.

A wireless device may obtain layer 1 measurement within a measurement configuration. The wireless device may measure SS-SINR (L1-SINR) (also described in specification of TS 38.215), for example, based on SS-SINR being defined as the linear average over the power contribution (in [W]) of the resource elements carrying SS signals divided by the linear average of the noise and interference power contribution (in [W]). The interference and noise may be measured over resource(s) indicated by higher layers, for example, if SS-SINR is used for L1-SINR reporting with dedicated interference measurement resources. Otherwise, the interference and noise may be measured over the resource elements carrying SS signals within the same frequency bandwidth. The measurement time resource(s) for SS-SINR may be confined within SMTC window duration. If SS-SINR is used for L1-SINR as configured by reporting configurations, the measurement time resources(s) restriction by SMTC window duration may not be applicable/usable. For SS-SINR determination demodulation reference signals for physical broadcast channel (PBCH) in addition to secondary synchronization signals may be used. SS-SINR may be measured only from the indicated set of SSB(s), for example, if SS-SINR is not used for L1-SINR and higher-layers indicate certain SSBs for performing SS-SINR measurements. For frequency range 1, the reference point for the SS-SINR may be the antenna connector of the wireless device. For frequency range 2, SS-SINR may be measured based on the combined signal from antenna elements corresponding to a given receiver branch. For frequency range 1 and 2, the reported SS-SINR value may not be lower than the corresponding SS-SINR of any of the individual receiver branches, for example, if receiver diversity is in use by the wireless device.

A wireless device may obtain layer 1 measurement within a measurement configuration. The wireless device may measure CSI-SINR (L1-SINR) (also described in specification of TS 38.215), for example, based on CSI-SINR being defined as the linear average over the power contribution (in [W]) of the resource elements carrying CSI reference signals divided by the linear average of the noise and interference power contribution (in [W]). The interference and noise may be measured over resource(s) indicated by higher layers, for example, if CSI-SINR is used for L1-SINR reporting with dedicated interference measurement resources. Otherwise, the interference and noise may be measured over the resource elements carrying CSI reference signals within the same frequency bandwidth. For CSI-SINR determination CSI reference signals transmitted on antenna port 3000 may be used. CSI reference signals transmitted on antenna ports 3000, 3001 may be used for CSI-SINR determination, for example, if CSI-SINR is used for L1-SINR. For intra-frequency CSI-SINR measurements not used for L1-SINR reporting, wireless device may not be expected to measure the CSI-RS resource(s) outside of the active downlink bandwidth part, for example, if the measurement gap is not configured. For frequency range 1, the reference point for the CSI-SINR may be the antenna connector of the wireless device. For frequency range 2, CSI-SINR may be measured, for example, based on the combined signal from antenna elements corresponding to a given receiver branch. For frequency range 1 and 2, the reported CSI-SINR value may not be lower than the corresponding CSI-SINR of any of the individual receiver branches, for example, if receiver diversity is in use by the wireless device.

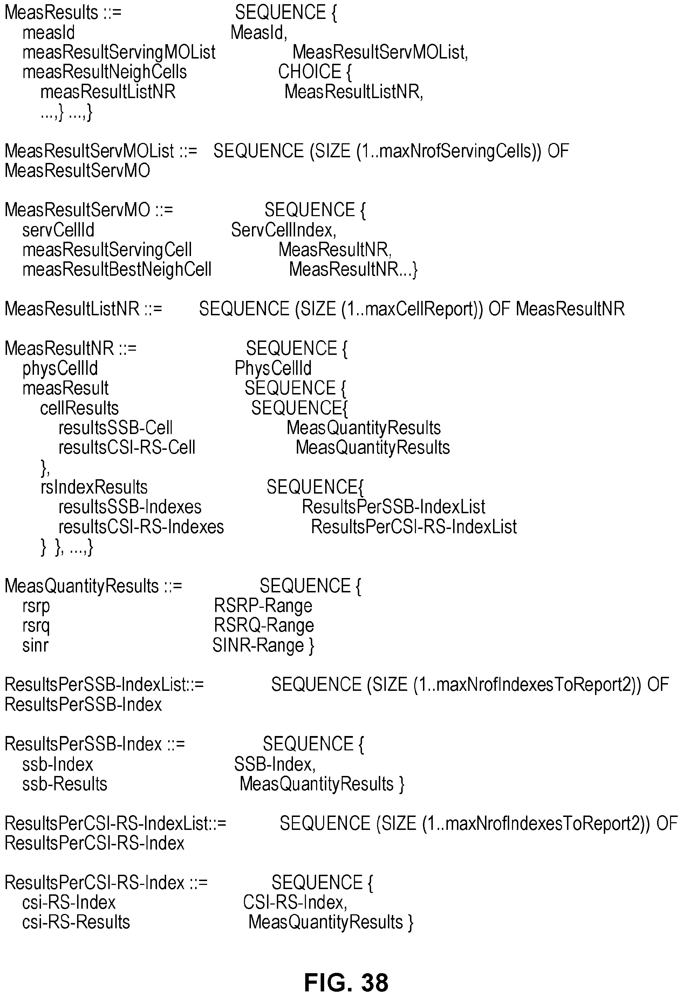

FIG. 38 shows an example of RRC configuration of beam/cell measurement report (e.g., format of measurement results reported by a wireless device to a base station). The wireless device may consider using at least one resource. The wireless device, for each measurement identity (e.g., *measId*) included in the measurement identity list (e.g., *measIdList*) within an accumulated configuration of measurements (e.g., *VarMeasConfig*), may consider the resource indicated by the RSSI measurement time configuration (RMTC) (e.g., *rmtc-Config*) on the associated frequency to be applicable/usable, for example, if the corresponding reporting configuration (e.g., *reportConfig*) may include a report type (e.g., *reportType*) set to event-triggered (e.g., *eventTriggered*) or periodical (e.g., *periodical*) and if the corresponding measurement object (e.g., *measObject*) concerns NR. The wireless device may include a measurement reporting entry within an accumulated measurement report list (e.g., *VarMeasReportList*) for this measurement identity (e.g., *measId*), for example, if report type (e.g., *reportType*) is set to periodical (e.g., *periodical*) and if a (first) measurement result is available.

A wireless device may set measurement results for a measurement identity. For the measurement identity (e.g., *measId*) for which the measurement reporting procedure was triggered, the wireless device may set the measurement results (e.g., *measResults*) within the *MeasurementReport* message as follows: set the measurement identity (e.g., *measId*) to the measurement identity that triggered the measurement reporting; for each serving cell configured with a serving cell MO parameter (e.g., *servingCellMO*), if the reporting configuration (e.g., *reportConfig*) associated with the measurement identity (e.g., *measId*) that triggered the measurement reporting may include RS type (e.g., *rsType*), set the measurement result serving cell (e.g., *measResultServingCell*) within a measurement result serving MO list (e.g., *measResultServingMOList*) to include RSRP, RSRQ and the available SINR of the serving cell, derived based on the RS type (e.g., *rsType*) included in the reporting configuration (e.g., *reportConfig*) that triggered the measurement report if the serving cell measurements based on the RS type (e.g., *rsType*) included in the reporting configuration (e.g., *reportConfig*) that triggered the measurement report are available, else if SSB based serving cell measurements are available, set the measurement result serving cell (e.g., *measResultServingCell*) within the measurement result serving MO list (e.g., *measResultServingMOList*) to include RSRP, RSRQ and the available SINR of the serving cell, derived based on SSB, else if CSI-RS based serving cell measurements are available, set the measurement result serving cell (e.g., *measResultServingCell*) within the measurement result serving MO list (e.g., *measResultServingMOList*) to include RSRP, RSRQ and the available SINR of the serving cell, derived based on CSI-RS; set a serving cell ID (e.g., *servCellId*) within the measurement result serving MO list (e.g., *measResultServingMOList*) to include each NR serving cell that is configured with a serving cell MO parameter (e.g., *servingCellMO*), if any; if the reporting configuration (e.g., *reportConfig*) associated with the measurement identity (e.g., *measId*) that triggered the measurement reporting may include report quantity RS indexes (e.g., *reportQuantityRS-Indexes*) and maximum number of RS indexes to report (e.g., *maxNrofRS-IndexesToReport*), for each serving cell configured with a serving cell MO parameter (e.g., *servingCellMO*), include beam measurement information according to the associated reporting configuration (e.g., *reportConfig*).

A wireless device may consider different quantities as the sorting quantity in a measurement report. For beam measurement information to be included in a measurement report, the wireless device may consider the trigger quantity as the sorting quantity if available, otherwise RSRP as sorting quantity if available, otherwise RSRQ as sorting quantity if available, otherwise SINR as sorting quantity if report type (e.g., *reportType*) is set to event-triggered (e.g., *eventTriggered*). If report type (e.g., *reportType*) is set to periodical (e.g., *periodical*), the wireless device may consider the configured single quantity as the sorting quantity if a single reporting quantity is set to *true* in report quantity RS indexes (e.g., *reportQuantityRS-Indexes*)*,* otherwise, the wireless device may consider RSRP as the sorting quantity if RSRP (e.g., *rsrp*) is set to *true* or consider RSRQ as the sorting quantity if RSRP (e.g., *rsrp*) is set to *false.* The wireless device may set RS index results (e.g., *rsIndexResults*) to include up to maximum number of RS indexes to report (e.g., *maxNrofRSIndexesToReport*) SSB indexes or CSI-RS indexes in order of decreasing sorting quantity as follows: if the measurement information to be included is based on SSB, include within results SSB indexes (e.g., *resultsSSB-Indexes*) the index associated to the best beam for that SSB sorting quantity and if the absolute threshold for the consolidation of measurement results per SSB (e.g., *absThreshSS-BlocksConsolidation*) is included in the accumulated configuration of measurements (e.g., *VarMeasConfig*) for the measurement object (e.g., *measObject*) associated to the cell for which beams are to be reported, the remaining beams whose sorting quantity is above the absolute threshold for the consolidation of measurement results per SSB (e.g., *absThreshSS-BlocksConsolidation*) and include the SS/PBCH based measurement results for the quantities in report quantity RS indexes (e.g., *reportQuantityRS-Indexes*) for each SSB index if an indicator (e.g., *includeBeamMeasurements*) is set to *true;* else if the beam measurement information to be included is based on CSI-RS, include within results CSI-RS indexes (e.g., *resultsCSI-RS-Indexes*) the index associated to the best beam for that CSI-RS sorting quantity and, if an absolute threshold for the consolidation of measurement results per CSI-RS (e.g., *absThreshCSI-RS-Consolidation*) is included in the accumulated configuration of measurements (e.g., *VarMeasConfig*) for the measurement object (e.g., *measObject*) associated to the cell for which beams are to be reported, the remaining beams whose sorting quantity is above the absolute threshold for the consolidation of measurement results per CSI-RS (e.g., *absThreshCSI-RS-Consolidation*) and include the CSI-RS based measurement results for the quantities in report quantity RS indexes (e.g., *reportQuantityRS-Indexes*) for each CSI-RS index if an indicator (e.g., *includeBeamMeasurements*) is set to *true.*

A wireless device may determine the sorting quantity for sorting of cell measurement results. For sorting of cell measurement results, a wireless device may determine the sorting quantity according to parameters of the reporting configuration (e.g., *reportConfig*) associated with the measurement identity (e.g., *measId*) that triggered the reporting, if the report type (e.g., *reportType*) is set to periodical (e.g., *periodical*): consider this quantity as the sorting quantity if a single quantity is set to *true,* else consider RSRP as the sorting quantity if RSRP (e.g., *rsrp*) is set to *true* or consider RSRQ as the sorting quantity if RSRP (e.g., *rsrp*) is set to *false.*

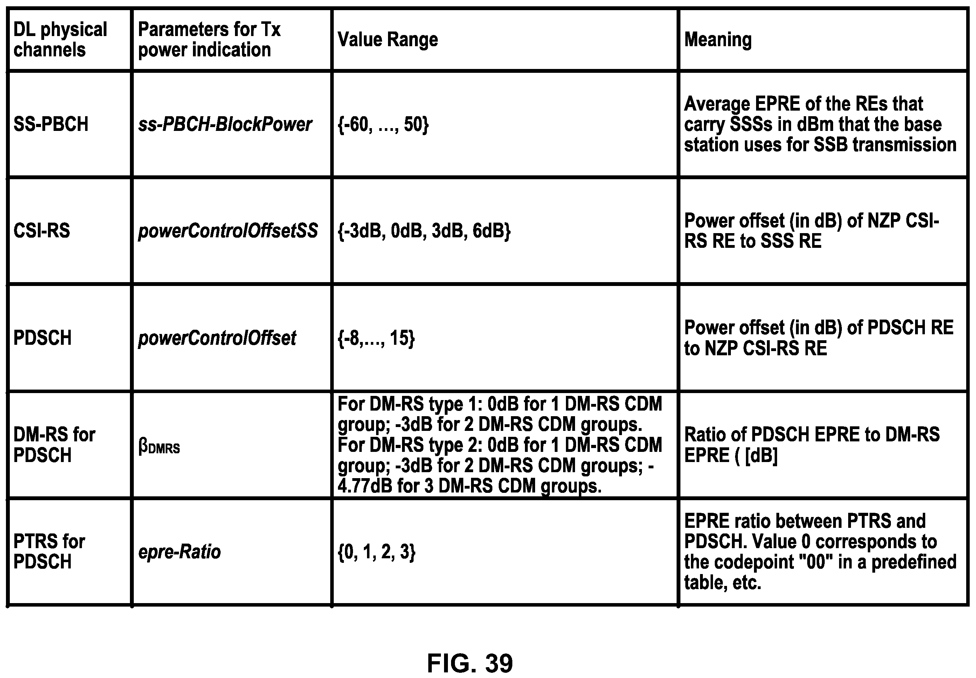

FIG. 39 shows an example of downlink channel transmission power determination for different downlink channels/signals. A transmission power of SS-PBCH may be indicated by *ss-PBCH-BlockPower* of SIB1 message. A transmission power of SS-PBCH may be indicated by *ss-PBCH-BlockPower* of SIB1 message e.g., in a manner described herein, for example, with respect to FIG. 25 and/or FIG. 35.

A base station may send/transmit RRC message (e.g., wireless device specific RRC message) comprising a power offset value (*powerControlOffsetSS*) for CSI-RS transmission. A cell specific RRC message may comprise *ServingCellConfig,* different from *ServingCellConfigCommonSIB* comprised in SIB1 messages. The power offset value may indicate a power offset, in dB, between non-zero-power (NZP) CSI-RS RE and SSS RE. An SSS RE is a RE on which a SSS is sent/transmitted. A NZP CSI-RS RE is a RE on which a NZP CSI-RS is transmitted. The base station may send/transmit the CSI-RSs, for example, if the power offset value is 3dB. The base station may transmit the CSI-RSs, and each RE of the CSI-RSs may be sent/transmitted with energy 3dB higher than the EPRE of a SSS RE.

The wireless device specific RRC message may further comprise a power offset value (*powerControlOffset*) for PDSCH transmission. The power offset value indicates a power offset (in dB) of a PDSCH RE to NZP CSI-RS RE. A PDSCH RE is a RE on which a PDSCH is transmitted. The base station may send/transmit the PDSCH, for example, if the power offset value is 3dB. The base station may send/transmit the PDSCH, and each RE of the PDSCH may be transmitted with energy 3dB higher than the EPRE of a NZP CSI-RS RE. The wireless device may determine a transmission power of a PDSCH. the wireless device may determine a transmission power of a PDSCH, for example, based on the *powerControlOffset* and a transmission power of NZP CSI-RS. The wireless device may decode the PDSCH. The wireless device may decode the PDSCH, for example, based on the transmission power.

A base station and a wireless device may determine a transmission power offset (*β_{DMRS}*) of DM-RS for PDSCH. The base station and the wireless device may determine a transmission power offset *(β_{DMRS})* of DM-RS for PDSCH, for example, based on DM-RS type and a quantity/number of DM-RS CDM group. The transmission power offset may indicate a ratio of PDSCH EPRE to DM-RS EPRE. In response to the DMR-RS type of a DM-RS being type 1 and the DM-RS being associated with 1 DM-RS CDM group, the power offset is 0 dB. In response to the DMR-RS type of a DM-RS being type 1 and the DM-RS being associated with 2 DM-RS CDM groups, the power offset is -3 dB. In response to the DMR-RS type of a DM-RS being type 2 and the DM-RS being associated with 1 DM-RS CDM group, the power offset is 0 dB. In response to the DMR-RS type of a DM-RS being type 2 and the DM-RS being associated with 2 DM-RS CDM groups, the power offset is -3 dB. In response to the DMR-RS type of a DM-RS being type 2 and the DM-RS being associated with 3 DM-RS CDM groups, the power offset is -4.77 dB. The base station sends/transmits the DM-RS for the PDSCH with a transmission power. The base station sends/transmits the DM-RS for the PDSCH with a transmission power determined, for example, based on the power offset and a transmission power of the PDSCH. The wireless device may determine a transmission power of a DM-RS. The wireless device may determine a transmission power of a DM-RS, for example, based on the *β_{DMRS}* and a transmission power of PDSCH. The wireless device may measure and/or detect the DM-RS based on the transmission power.

The wireless device specific RRC message may further comprise a EPRE ratio indicator (*epre-Ratio*) for PTRS for PDSCH transmission. The EPRE ratio indicator indicates a row of a table of PT-RS RE to PDSCH RE per layer per RE indication. If the EPRE ratio indicator is set to 0, the indicator indicates a first row of the table is applied for PT-RS transmission power determination, the first row comprising a plurality of ratios for different quantity/number of PDSCH layers. The first row may comprise, for example, 0 for a 1 layer PDSCH, 3 for a 2-layer PDSCH, 4.77 for a 3-layer PDSCH, 6 for a 4-layer PDSCH, 7 for a 5-layer PDSCH, 7.78 for a 6-layer PDSCH. The second power may comprise, for example, 0 for a 1 layer PDSCH, 0 for a 2-layer PDSCH, 0 for a 3-layer PDSCH, 0 for a 4-layer PDSCH, 0 for a 5-layer PDSCH, 0 for a 6-layer PDSCH. The third row and the fourth row are reserved. The base station may send/transmit the PT-RS with a transmission power 3dB higher than the PDSCH. The base station may send/transmit the PT-RS with a transmission power 3dB higher than the PDSCH, for example, based on (e.g., after, in response to) the *epre-ratio* indicating 0 and the PDSCH being configured with 2 MIMO layers. The wireless device may determine the transmission power of the PT-RS. The wireless device may determine the transmission power of the PT-RS, for example, based on the *epre-ratio* and the quantity/number of MIMO layers of the PDSCH. The wireless device may decode the PDSCH associated with the PT-RS. The wireless device may decode the PDSCH associated with the PT-RS, for example, based on the transmission power of the PT-RS.

Network energy saving may be of great importance for environmental sustainability, to reduce environmental impact (e.g., greenhouse gas emissions), and/or for operational cost savings. As wireless communication (e.g., using 5G technology, 3GPP Release 16, earlier/later 3GPP releases or generations, LTE technology, 6G technology, and/or other technology) becomes more pervasive across industries and geographical areas, handling more advanced services and applications requiring very high data rates (e.g., for applications such as extended reality (XR), URLLC, V2X, etc.), networks may become denser, use more antennas, larger bandwidths and/or more frequency bands. Advances in wireless technology may increasingly require mitigation of its environmental impacts, and novel solutions to improve network energy savings need to be developed.

In at least some energy saving procedures, a base station may indicate that a wireless device should perform power saving operations (e.g., if a wireless device does not have data traffic to transmit/receive). The base station may indicate that the wireless device should perform power saving operations, for example, as described herein such as with respect to FIG. 28, FIG. 29A, FIG. 29B, FIG. 30A, FIG. 30B, and/or FIG. 31. However, if the wireless device performs a power saving operation, a base station may still need to transmit always-on and/or periodic signals for other wireless devices (e.g., for purpose of time and frequency synchronization, phase tracking, positioning, etc.). One or more power saving operations implemented by a wireless device may not be applicable for a base station.

In at least some energy saving procedures, a base station may still transmit some always-on signals (e.g., MIB, SIB1, SSBs, periodical CSI-RSs, discovery RS, etc.), for example, when there are no active wireless devices in the coverage of the base station. If the base station needs to reduce transmission power of the always-on downlink signal transmission and/or reduce beams/antenna port of transmission of the always-on downlink signal, the base station may send/transmit an RRC message (e.g., SIB1, cell-specific RRC message, UE-specific RRC message, etc.) indicating a reduced transmission power for the always-on downlink signal transmission and/or a reduced quantity/number of beams (e.g., by *ssb-PositionsInBurst*) for the always-on downlink signal transmission. The base station may send/transmit an RRC message, for example, as described herein such as with respect to FIG. 25 and/or FIG. 35.

In at least some systems, a SIB message (e.g., SIB1) may be sent/transmitted using/with a fixed transmission periodicity, such as 160ms (e.g., using/with repetition transmissions within 160ms) or any other time duration/period. The contents of SIB transmission may be the same among the repetition transmissions within the transmission periodicity (e.g., 160ms). The base station may send/transmit (e.g., at least a time period of the transmission periodicity (e.g., 160ms) after sending/transmitting a first SIB (e.g., SIB1)) a second SIB (e.g., SIB1) indicating a change of SSB transmission power, SSB transmission periodicity, and/or SSB locations in a SSB burst.

In at least some systems, a base station may send/transmit an RRC message (e.g., *ServingCellConfig* IE) comprising transmission power parameters of CSI-RSs. The base station may send/transmit an RRC message (e.g., *ServingCellConfig* RRC message) if the base station determines to add a cell or modify a cell. The transmission power parameters may be included *in NZP-CSI-RS-Resource* IE of *CSI-MeasConfig* IE message in a *ServingCellConfig* IE. The transmission power parameters may comprise a value of power ratio (*powerControlOffsetSS* in dB) between a transmission power of a resource element (RE) of non-zero-power (NZP) CSI-RS and a transmission power of a RE of SSS. The *NZP-CSI-RS-Resource* IE may further comprise a value of power ratio (*powerControlOffset* in dB) between a transmission power of a PDSCH RE and a transmission power of an NZP CSI-RS RE. Transmission power of DM-RS associated with PDSCH may be determined based on a transmission power of a PDSCH and a power offset determined based on DMR-RS type and/or a quantity/number of DM-RS CDM groups. The RRC message may comprise configuration parameters of PT-RS of a PDSCH. The configuration parameters of a PT-RS may comprise a power offset indicator (*epre-Ratio* in *PTRS-DownlinkConfig* IE) for transmission power of the PT-RS. The power offset indicator may indicate a value of power ratio, of a plurality of values, between PT-RS and PDSCH. The plurality of values may be preconfigured or predefined for different quantity/number of layers of PDSCH associated with the PT-RS. A power ratio between CSI-RS and SSB, a power ratio between PDSCH and NZP CSI-RS, a power ratio between PDSCH and DM-RS and/or a power ratio between PDSCH and PT-RS may be implemented in a manner described herein, for example, with respect to FIG. 39.

A wireless device may perform beam and/or cell measurement and report the measurements to the base station, for example, based on reference signals (e.g., SSBs/CSI-RSs). The measurements may comprise layer 3 (or L3) beam measurement report and cell measurement report. The (beam/cell) measurements may comprise (L3) RSRP/RSRQ/SINR values of beam report (per beam) and/or (L3) RSRP/RSRQ/SINR values per cell. The RSRP/RSRQ/SINR may be a higher layer (e.g., layer 3, or L3) filtered RSRP/RSRQ/SINR value, for example, based on layer 1 (or L1) RSRP/RSRQ/SINR values measured in periodical SSB (or CSI-RS) measurement time windows, based on examples as described herein with respect to FIG. 35, FIG. 36, FIG. 37 and/or FIG. 38. In at least some wireless communications, the wireless device may assume (or the base station may maintain) the downlink transmission power (transmission periodicity, transmission ports, etc.), of the SSBs/CSI-RSs, unchanged for a long time (e.g., at least 160ms, based on SIB1's periodicity). During the time window, the wireless device may perform higher layer filtering for the RSRP/RSRQ/SINR, for example, based on periodical L1- RSRP/RSRQ/SINR measurements.

To enable energy saving for a base station, the base station may adjust downlink transmission power (and/or transmission periodicity, transmission ports, etc.) (of SSB/CSI-RS/PDCCH/PDSCH/DM-RS, etc.) dynamically (e.g., per radio frame, per subframe, per slot group, per slot, per symbol group, or per symbol), for example, based on data traffic load, active wireless devices, electricity status, etc. The base station may adjust downlink transmission power (and/or transmission periodicity, transmission ports, etc.) dynamically, for example, based on sending (e.g., transmitting) a MAC CE and/or DCI indicating the downlink transmission power/periodicity/port adjustment. Adjusting downlink transmission power/periodicity/port dynamically may cause problem on beam/cell measurement at a wireless device.

The wireless device may in the process of beam/cell measurement, for example, in a time period (a number of symbols, mini-slots, slots, subframes, millisecond, etc.) during which the base station reduces transmission power (or increase transmission periodicity value, reduce a transmission number, etc.) of SSBs/CSI-RSs. The wireless device may perform beam/cell measurement per slot (e.g., if measurement periodicity is configured as small as 1 slot based on at least some wireless communications). The wireless device may perform beam/cell measurement over a number of slots (e.g., 5 slots if configured). In such a case, the beam/cell measurement may occur in time overlapping with the time period, for example, if the base station reduces transmission power of the SSBs/CSI-RSs. Implementing at least some technologies for beam/cell measurement in the energy saving state may result in incorrect beam/cell measurement report.

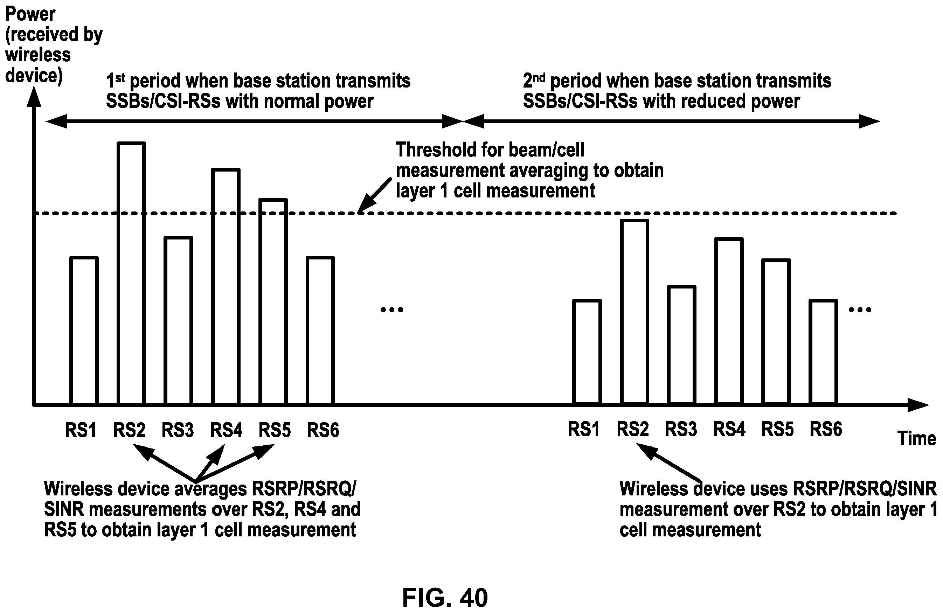

A wireless device may derive cell measurement quantity, for example, based on SSB/CSI-RS as the highest beam measurement quantity value if the highest beam measurement quantity value is below or equal to a threshold (e.g., *absThreshSS-BlocksConsolidation* or *absThreshCSI-RS-Consolidation*) or based on SSBs/CSI-RSs as linear power scale average of the highest beam measurement quantity values above the threshold where the total number of averaged beams do not exceed a configured number (e.g., *nrofSS-BlocksToAverage* or *nrofCSI-RS-ResourcesToAverage*). The wireless device may identify a first number (e.g., 3) of SSBs/CSI-RSs having beam measurement quantity greater than the threshold, for example, if the base station sends (e.g., transmits) a number (e.g., 64) of SSBs/CSI-RSs with full transmission power. The wireless device may average beam measurement quantity values of these 3 SSBs/CSI-RSs for deriving the cell measurement result. There may be a chance that the wireless device may not identify any SSB/CSI-RS having a beam measurement quantity greater than the threshold, for example, if the base station dynamically reduces transmission power (e.g., by 3 dB) of SSBs/CSI-RSs. FIG. 40 shows an example of beam/cell measurement using energy saving.

Energy saving may comprise reduction in transmission power for wireless communications. For example, a base station and/or a wireless device may reduce transmission power during an energy saving state. Energy saving may be performed, for example, if a base station reduces (e.g., dynamically reduces) transmission power for reference signals (e.g., SSBs/CSI-RSs). A wireless device may obtain layer 1 cell measurement over periodic RSs. The wireless device may receive one or more reference signals (e.g., RS1, RS2, RS3, RS4, RS5, RS6 and etc.) in a first period, for example, if base station sends (e.g., transmits) SSBs/CSI-RS using a normal/non-reduced power (e.g., in a non-energy-saving state). The wireless device may measure beam measurements (RSRP/RSRQ/SINR) over these reference signals (RSs). The wireless device may select RSs of periodic RSs with layer 1 cell measurements higher than threshold. For example, based on comparing RSs with a threshold configured for beam measurement (e.g., averaging RSs to obtain a layer 1 cell measurement), the wireless device may determine/indicate/identify/select a subset of RSs (e.g., RS2, RS4 and RS5, from RS1~RS6), having beam measurements greater than the threshold. The wireless device may average layer 1 cell measurements of the selected RSs. For example, the wireless device may average (e.g., linearly average) the beam measurements of the subset of RSs (e.g., RS2, RS4 and RS5) as a layer 1 cell measurement. The wireless device may obtain layer 3 cell measurements, for example, based on the averaging layer 1 cell measurements. The wireless device may send (e.g., transmit) the layer 3 cell measurements. The wireless device may not determine/indicate/identify any SSB/CSI-RS (and/or may determine/indicate/identify a smaller number/quantity of SSBs/CSI-RSs) having beam measurement greater than a threshold, for example, if the base station reduces the transmission power of the RSs (e.g., SSBs/CSI-RSs) in the energy saving state. In at least some wireless communications, a wireless device may use the highest beam measure quality of value of a single beam (e.g., RS2 from RS1~RS6) to derive/determine a cell measurement result. Deriving/determining the cell measurement result based on a single RS (e.g., SSB/CSI-RS), in the case of dynamic adjustment of transmission power of SSB/CSI-RS, may not correctly reflect/indicate the actual channel quality of the cell in the energy saving state. As described herein, beam/cell measurement may be improved, for example, to indicate channel quality of a cell in an energy saving state.

In at least some wireless communications, a wireless device may not indicate/identify a reference signal (e.g., SSB and/or CSI-RS) (and/or may indicate/identify a smaller number/quantity of reference signals having beam measurement greater than the threshold, for example, if the base station increases the transmission periodicity value and/or if the base station reduced a number/quantity of reference signals (e.g., SSBs and/or CSI-RSs) sent (e.g., transmitted) in an energy saving state such that the wireless device may not have sufficient number/quantity of reference signals received in a measurement window that may overlap with the energy saving state. In at least some wireless communications, a wireless device may use a highest beam measure quality of value of a single reference signal (or a relatively small quantity of reference signals) to derive/determine a cell measurement result. Deriving/determining the cell measurement result based on a single reference signal (e.g., SSB and/or CSI-RS) (or a relatively small quantity of reference signals), such as in the case of dynamic adjustment of transmission periodicity of SSB/CSI-RS, may not correctly reflect/indicate the actual channel quality of the cell in an energy saving state. As described herein, beam/cell measurement may be improved, for example, to indicate channel quality of a cell in an energy saving state.

At least some wireless communications may comprise a wireless device performing layer 3 filtering to obtain L3-RSRP/RSRQ/SINR (e.g., per cell or per beam), for example, based on periodic L1- RSRP/RSRQ/SINR values. First L1- RSRP/RSRQ/SINR values, measured over beam/cell measurement RSs received before a base station dynamically reduces a downlink transmission power, may be higher than second L1- RSRP/RSRQ/SINR values measured over beam/cell measurement RSs received after the base station reduces the downlink transmission power. Filtering, based on a layer 3 filter, the first L1- RSRP/RSRQ/SINR values and the second L1- RSRP/RSRQ/SINR values may result in incorrect L3- RSRP/RSRQ/SINR. At least some wireless devices, based on the incorrect L3- RSRP/RSRQ/SINR, may send (e.g., transmit) incorrect beam/cell measurement report.

By implementing at least some wireless communication technologies, a wireless device may report incorrect beam/cell measurement results to a base station. The base station, based on the incorrect beam/cell measurement results, may make wrong/incorrect/inaccurate resource configuration parameter configuration/assignment, such as by reconfiguring RRC cell/beam parameters, making unnecessary handover decisions, etc. As described herein, beam/cell managements of wireless devices may be improved, for example, to support an energy saving operation for a base station.

At least some wireless communication technologies may cause misalignment between a base station and a wireless device regarding a timing of the downlink transmission power adjustment. Misalignment regarding the timing of the power adjustment may cause the wireless device to incorrectly measure beam/cell channel qualities. As described herein, downlink transmission power adjustment may be improved, for example, by aligning the power adjustment between the base station and the wireless device, for example, if the base station dynamically adjusts the downlink transmission power (e.g., for one or more SSB, CSI-RS, PDSCH, and/or PDCCH transmission).

As described herein, wireless communications may be improved for an energy saving state. A wireless device may communicate with a base station for reporting measurements of reference signals associated with one or more beams. The wireless device may use one or more adjusted configuration parameters, for example, if the base station reduces its transmission power (e.g., in an energy saving state). The wireless device may report one or more cell and/or beam measurements based on the one or more adjusted configuration parameters, which may provide advantages such as improved accuracy of measurement reporting. Examples described herein may comprise determining a second threshold, different from a first threshold (e.g., *absThreshSS-BlocksConsolidation, absThreshCSI-RS-Consolidation,* which may be configured for a non-energy-saving state), for the beam/cell measurement in an energy saving state. A wireless device may determine the second threshold for beam/cell measurement in the energy saving state if the base station sends (e.g., transmits) one or more reference signals (e.g., one or more SSBs and/or CSI-RSs) using a reduced power. The second threshold may be different from (e.g., less than) the first threshold for beam/cell measurement in the non-energy saving state during which the base station may send (e.g., transmit) one or more reference signals (e.g., one or more SSBs and/or CSI-RSs) using full power (e.g., normal power, non-reduced power, etc.). By using two different thresholds for beam/cell measurement (e.g., a first threshold in a non-reduced power state and a second threshold in an energy saving state) as described herein, a wireless device may indicate/identify a sufficient number/quantity of beam measurements (e.g., for averaging a plurality of beam measurements) which may result in the wireless device performing beam/cell measurement in an energy saving state with improved accuracy.

Examples described herein may comprise configuring a first measurement object (and/or measurement report configuration) for a non-energy-saving state and a second measurement object for an energy saving state. The second measurement object may be associated with a lower threshold, a longer measurement periodicity, a smaller number for beam measurement averaging, a longer reporting periodicity, a smaller number of measurement quantities (e.g., RSRP/RSRQ/SINR/RSSI, etc.), than the first measurement object. The wireless device may perform beam/cell measurement (and/or reporting) based on the first measurement object (and/or the first measurement report configuration), for example, based on (e.g., in response to) the cell being in the non-energy-saving state. The wireless device may perform beam/cell measurement (and/or reporting) based on the second measurement object (and/or the second measurement report configuration), for example, based on (e.g., in response to) the cell being in the energy saving state.

Examples described herein may comprise scaling beam/cell measurements (e.g., layer 1 scaling of beam/cell measurements) received over one or more reference signals (e.g., one or more SSBs and/or CSI-RSs) of a cell in an energy saving state using a power offset determined, for example, based on a power difference between a first transmission power of one or more reference signals (e.g., SSBs/CSI-RSs) in a non-energy-saving state and a second transmission power of reference signals (e.g., SSBs/CSI-RSs) in an energy saving state. The wireless device may determine/derive, the (layer 3) beam/cell measurement of the cell for beam/cell measurement reporting, for example, based on the scaled (layer 1) beam/cell measurements. By making the adjustments corresponding to the power offset, advantages may be achieved such as improved accuracy of beam/cell measurement report, reduction of wrong assignment and/or handover decisions, etc.

Examples described herein may comprise resetting a layer 3 filter for beam/cell measurement, for example, after or in response to receiving a command (e.g., DCI, MAC CE, etc.) indicating a transitioning of a cell from a non-energy-saving state to an energy saving state. Examples described herein may comprise skipping layer 3 beam/cell measurement reporting, for example, after or in response to receiving a command (e.g., DCI, MAC CE, etc.) indicating a transitioning of a cell from a non-energy-saving state to an energy saving state. Allowing the skipping may provide advantages such as reduced power consumption and/or simplified processing of the wireless device and/or the base station.

Examples described herein may comprise determining an application gap for applying/using a transitioning from a non-energy-saving state to an energy saving state for beam/cell measurement. A wireless device may use the normal/non-reduced transmission power of one or more reference signals (e.g., SSBs/CSI-RSs) for beam/cell measurement, for example, after receiving a command (e.g., DCI, MAC CE, etc.) indicating the transitioning (at least) until the application gap.

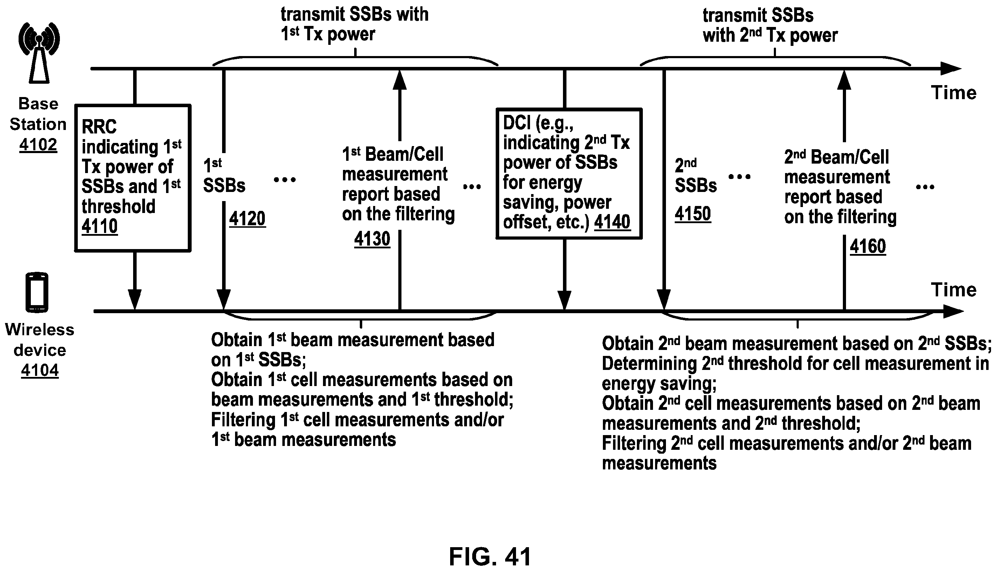

FIG. 41 shows an example of beam and/or cell measurement in energy saving (e.g., report if downlink transmission power is adjusted dynamically by a base station). A base station 4102 (e.g., a gNB) may send (e.g., transmit), and/or a wireless device 4104 (e.g., a UE) may receive, one or more RRC messages 4110 indicating a first downlink transmission power (1^{st} Tx power) value of SSBs. The one or more RRC messages 4110 may be a SIB1 message, based on examples as described herein with respect to FIG. 25. The 1^{st} Tx power may be indicated by a value (e.g., *ss-PBCH-BlockPower*) IE of the SIB1 message. An SSB may be implemented based on examples as described herein with respect to FIG. 32, FIG. 33 and/or FIG. 34.

The one or more RRC messages may further comprise a first threshold (e.g., *absThreshSS-BlocksConsolidation* in case SSB being used for beam/cell measurement, *absThreshCSI-RS-Consolidation* in case CSI-RS being used for beam/cell measurement, etc.,) for beam and/or cell measurement. The wireless device may use the first threshold to sort measured cell measurement quantities (e.g., RSRP, RSRQ and/or SINR) to select a number of highest cell measurement quantities for averaging to obtain (layer 1) cell measurement. The first threshold may comprise at least one of: a RSRP threshold, a RSRQ threshold, and a SINR threshold. The one or more RRC messages may indicate which one of the RSRP threshold, the RSRQ threshold and the SINR threshold may be used for beam/cell measurement.

As shown in FIG. 41, the wireless device may obtain 1^{st} beam measurements, for example, based on periodically sent (e.g., transmitted) SSBs 4120 (1^{st} SSBs). The 1^{st} beam measurements may comprise RSRP/RSRQ/SINR values for the SSBs, each value being associated with a respective SSB of the SSBs. The wireless device may measure the RSRP/RSRQ/SINR values (or beam measurements as referred to in this specification) for the SSBs in a plurality of periodic measurement time windows configured by the SMTC of an RRC message, based on examples as described herein with respect to FIG. 35, FIG. 36 and/or FIG. 37.

Beam measurements (RSRP/RSRQ/SINR), before filtered by a layer 3 filter, may be referred to as layer 1 beam measurements in this specification. The wireless device may further filter the beam measurements, for example, based on a layer 3 filter (e.g., based on examples described in FIG. 37) for beam and/or cell measurement reporting. The beam measurements, after the filtering based on the layer 3 filter, may be referred to as layer 3 beam measurement in this specification. The wireless device may send (e.g., transmit) the layer 3 beam measurement in a measurement report message 4130, for example, after or in response to receiving the RRC message comprising beam measurement report request.

The beam and/or cell measurement reporting based on layer 3 beam measurements and/or layer 3 cell measurements may be different from layer 1 beam report. The layer 3 beam/cell measurement report may be sent (e.g., transmitted) via an RRC message from the wireless device to the base station and/or may be triggered by events (e.g., one or more events related to handover, cell reselection, etc.) or configured by measurement request messages. The layer 1 beam measurement report may be sent (e.g., transmitted) via UCI (PUCCH/PUSCH) from the wireless device to the base station and/or may be triggered by DCI/MAC CE/RRC.

The wireless device may determine a cell measurement (layer 1) based on the beam measurements of SSBs, for example, after obtaining beam measurements for SSBs. The wireless device may select a number of the highest beam measurements (in terms of RSRP values, RSRQ values, or SINR values), from the beam measurements of the SSBs, greater than the first threshold. The number may not exceed a first number (*nrofSS-BlocksToAverage* in case SSBs being used for cell measurement, or *nrofCSI-RS-ResourcesToAverage* in case CSI-RSs being used for cell measurement) configured by the one or more RRC messages. The wireless device may average (in linear power) the number of the highest beam measurements to obtain a first cell measurement (layer 1). The wireless device may use the highest beam measurement among the beam measurements as the first cell measurement (layer 1), for example, based on (e.g., in response to) none of the beam measurements of the SSBs being greater than the first threshold. The wireless device may set the first value of layer 3 cell measurement as the first cell measurement (layer 1) when the first cell measurement is obtained in the first measurement window, for example, after receiving the one or more RRC messages.

The wireless device may (periodically) update layer 3 cell measurements (by applying/using the higher layer filtering based on examples as described herein with respect to FIG. 35), for example, based on an old layer 3 cell measurement value and a new layer 1 cell measurement obtained in a new measurement time window. A measurement time window may be implemented based on example as described herein with respect to FIG. 35 and/or FIG. 36. The new layer 1 cell measurement may be obtained by averaging the number of highest beam measurements of beam measurements obtained in the new measurement time window, for example, if there is at least one beam measurement of the beam measurements being greater than the first threshold, as described herein. The new layer 1 cell measurement may be obtained as the highest beam measurement among the beam measurements obtained in the new measurement time window, for example, if there is no beam measurement of the beam measurements being greater than the first threshold, as described herein.

A wireless device may comprise the latest layer 3 cell measurements for a cell in a measurement report. For a measurement report (e.g., identified by a measurement identity (e.g., *measId*)) for which the measurement reporting procedure was triggered, the wireless device may comprise, in one or more RRC messages for measurement report (e.g., *measResults*), the latest layer 3 cell measurements (RSRP/RSRQ/SINR) for the cell, for example, based on the periodically updated layer 3 cell measurements.

A wireless device may derive layer 3 per beam filtered measurement for a layer 3 beam report. For layer 3 beam report, the wireless device may derive layer 3 per beam filtered measurement by applying/using layer 3 filtering, for example, after obtaining the beam measurements (layer 1) for the SSBs. The applying/using layer 3 filtering may be implemented based on examples as described herein with respect to FIG. 35, FIG.36 and/or FIG. 37.

A wireless device may consider the sorting quantity for sorting the layer 3 per beam measurements for the reference signals. The wireless device may consider RSRP, RSRQ or SINR as the sorting quantity for sorting the layer 3 per beam measurements for the SSBs/CSI-RSs, for example, after obtaining the layer 3 per beam measurement for each SSB/CSI-RS of the SSBs, based on examples as described herein with respect to FIG. 35, FIG. 36 and/or FIG. 37. In the beam measurement report based on SSBs/CSI-RSs, the wireless device may set RS index results (e.g., *rsIndexResults*) to include up to maximum number of RS indexes to report (e.g., *maxNrofRS-IndexesToReport)* SSB indexes (or CSI-RS indexes) in order of decreasing sorting quantity, wherein the reported SSB/CSI-RS indexes (e.g., comprised in *resultsSSB-Indexes,* or *resultsCSI-RS-Indexes*) may comprise one or more SSB/CSI-RS indexes comprising first SSB/CSI-RS index associated to the best beam (in terms of RSRP/RSRQ/SINR) and second SSB/CSI-RS index(es) associated with the remaining beams whose sorting quantity (RSRP/RSRQ/SINR) is above the first threshold (e.g., *absThreshSS-BlocksConsolidation* or *absThreshCSI-RS-Consolidation*) (if configured). The reported measurement results (e.g., comprised in report quantity RS indexes (e.g., *reportQuantityRS-Indexes*)) may comprise beam measurement results for the quantities for each SSB/CSI-RS indexes index of the one or more SSB/CSI-RS indexes (e.g., if *includeBeamMeasurements* is set to *true*).

The wireless device may comprise both the layer 3 cell measurement and the layer per beam measurement in a measurement report. The measurement report obtained via the SSBs/CSI-RSs sent (e.g., transmitted) by the base station with the first Tx power may be referred to as measurement report for the cell in the non-energy-saving state.

The base station may determine to transition from a normal power state (or a non-energy-saving state) to an energy saving state, for one or more cells. The base station may send (e.g., transmit) SSBs (via a cell) with 1^{st} Tx power, for example, if the base station is in the normal power state. The base station may send (e.g., transmit) SSBs (via a cell) with 1^{st} transmission periodicity and with a first number of SSBs in each period, for example, if the base station is in the normal power state. The base station may determine the transitioning, for example, based on wireless device assistance information, received from the wireless device, regarding traffic pattern, data volume, latency requirement, etc. In the example (not shown in FIG. 41), the wireless device may send (e.g., transmit) the wireless device assistance information to the base station in an RRC message, a MAC CE, an UCI, and/or so on. The wireless device assistance information may comprise a data volume of data packets of the wireless device, a power state of the wireless device, a service type of the wireless device, etc. The base station may determine the transitioning, for example, based on uplink signal (e.g., SRS, PRACH, DM-RS, UCI, etc.) measurement/assessment/detection at the base station. The base station may determine the transitioning, for example, based on information exchange from a neighbor base station via X2 interface, wherein the information exchange may comprise indication of the transitioning, traffic load information, etc.

The base station may send (e.g., transmit), and/or the wireless device may receive, DCI indicating a second transmission power and/or a transition from the non-energy-saving state to the energy saving state. As shown in FIG. 41, the base station may send (e.g., transmit), and/or the wireless device may receive, DCI 4140 (or a MAC CE, etc.) indicating a second Tx power (or a power offset for the SSBs relative to the first Tx power) and/or a transition from the non-energy-saving state to the energy saving state (for one or more cells). The DCI (or a MAC CE, etc.) may indicate a second transmission periodicity and/or a second number of SSBs in each period. The base station may transmit, via a search space (and a control resource set) of the cell, the DCI 4140 comprising an energy saving indication. The energy saving indication may indicate a transition from the non-energy-saving state (or mode/configuration) to the energy saving state (or mode/configuration). The energy saving indication may indicate the power offset, the second periodicity, the second number, and/or so on. The one or more RRC messages may comprise configuration parameters of the search space and/or the control resource set. A search space may be implemented based on examples as described herein with respect to FIG. 14A, FIG. 14B and/or FIG. 27. A control resource set may be implemented based on examples as described herein with respect to FIG. 14A, FIG. 14B and/or FIG. 26.

The power offset of the RSs (e.g., SSBs/CSI-RSs) may be indicated by a MAC CE. The base station (e.g., base station 4105) may send/transmit, and/or the wireless device (e.g., wireless device 4110) may receive, a MAC CE comprising an energy saving indication and/or the power offset of the SSBs/CSI-RSs. A MAC CE associated with a LCID identifying a specific usage of the MAC CE may be implemented, for example, in a manner described herein, such as with respect to FIG. 17A, FIG. 17B, FIG. 17C, FIG. 18A, FIG. 18B, FIG. 19 and FIG. 20. The MAC CE comprising the energy saving indication may be associated with a LCID value. The MAC CE comprising the energy saving indication may be associated with a LCID value different from anyone of FIG. 19 and/or FIG. 20. The MAC CE comprising the energy saving indication may have a flexible payload size with a MAC subheader, for example, in a manner described herein, such as with respect to FIG. 17A and/or FIG. 17B. The MAC CE comprising the energy saving indication may have a fixed payload size with a MAC subheader, for example, in a manner described herein, such as with respect to FIG. 17C.

A MAC CE comprising the energy saving indication may reuse an existing MAC CE. A R bit of SCell activation/deactivation MAC CE (e.g., based on example of FIG. 21A and/or FIG. 21B) may be used for energy saving indication. The R bit may indicate a power offset value for RS (e.g., SSB/CSI-RS) transmission (e.g., of a PCell, or of a PCell and all active SCells) in energy saving state.

The search space may be a type 0 common search space. The DCI comprising the energy saving indication (and/or the power offset) may share a same type 0 common search space with other DCIs (e.g., scheduling SIBx message). The base station may send/transmit configuration parameter of the type 0 common search space in a MIB message or a SIB1 message. The base station sends/transmits the MIB message via a PBCH and indicating system information of the base station. The base station sends/transmits the SIB1 message, scheduled by a group common PDCCH with CRC scrambled by SI-RNTI, indicating at least one of: information for evaluating if a wireless device is allowed to access a cell of the base station, information for scheduling of other system information, radio resource configuration information that is common for all wireless devices, and barring information applied to access control.

The search space may be a type 2 common search space. The DCI comprising the energy saving indication (and/or the power offset) may share a same type 2 common search space with other DCIs (e.g., scheduling paging message) with CRC scrambled by P-RNTI.

The search space may be a type 3 common search space. The DCI comprising the energy saving indication (and/or the power offset) may share the same type 3 common search space with a plurality of group common DCIs. The plurality of group common DCIs may comprise: a DCI format 2_0 indicating slot format based on CRC bits scrambled by SFI-RNTI, a DCI format 2_1 indicating a downlink pre-emption based on CRC being scrambled by an INT-RNTI, a DCI format 2_4 indicating an uplink cancellation based on CRC being scrambled by a CI-RNTI, a DCI format 2_2/2_3 indicating uplink power control based on CRC bits being scrambled with TPC-PUSCH-RNTI, TPC-PUCCH-RNTI, or TPC-SRS-RNTI, a DCI format 2_6 indicating a power saving operation (wake-up/go-to-sleep and/or SCell dormancy) based on CRC bits being scrambled by PS-RNTI, etc. The search space may be a wireless device specific search space. The search space may be different from common search spaces (type 0/0A/1/2/3).

The DCI indicating the energy saving (and/or the power offset) may be a legacy DCI format (e.g., DCI format 1_0/1_1/1_2/0_0/0_1/0_2/2_0/2_1/2_2/2_3/2_4/2_5/2_6). The DCI may be a new DCI format, with a same DCI size as DCI format 2_0/2_1/2_2/2_3/2_4/2_5/2_6. The DCI may be a new DCI format with a same DCI size as DCI format 1_0/0_0. The DCI may be a new DCI format with a same DCI size as DCI format 1_1/0_1.

The configuration parameters of the one or more RRC messages may indicate that a control resource set of a plurality of control resource sets is associated with the search space for the DCI indicating the energy saving (and/or the power offset) for the base station. The configuration parameters may indicate, for the control resource set, frequency radio resources, time domain resources, CCE-to-REG mapping type, etc.

The wireless device may monitor the search space (of the control resource set) for receiving the DCI indicating the energy saving (and/or the power offset) for the base station. The base station may send/transmit the DCI, in one or radio resources associated with the search space (in the control resource set), comprising the energy saving indication (and/or the power offset) for the base station.

DCI (or the MAC CE) may indicate second transmission power of the RSs (e.g., SSBs/CSI-RSs). The DCI may comprise a power offset (or power adjustment) value for the SSBs/CSI-RSs. The base station may send/transmit SSBs/CSI-RSs (in a SSB burst or a CSI-RS transmission occasion) with a second transmission power. The base station may send/transmit SSBs/CSI-RSs (in a SSB burst or a CSI-RS transmission occasion) with a second transmission power, for example, based on the power offset. The base station may send/transmit SSBs/CSI-RSs (in a SSB burst or a CSI-RS transmission occasion) with a second transmission power that may be determined based on the power offset and the 1^{st} power (which is determined based on the EPRE value indicated in SIB1 message). The power offset value may be in unit of dB. The DCI may comprise a bitfield indicating a power offset value of a plurality of power offset values. A step between the contiguous power offset values of the plurality of power offset values may be a dB value bigger than a power adjustment step for uplink power control. A (minimum) step between the contiguous power offset values of the plurality of power offset values may be a dB value (e.g., 1.5 dB, 2 dB, 3 dB, etc.) bigger than a (minimum) power adjustment step (e.g., 1 dB) for uplink power control. Allowing the base station to adjust downlink transmission power with a bigger adjustment step than the one used for uplink transmission of a wireless device may enable the base station to quickly adapt power consumption given that the base station has higher processing/implementation capability than the wireless device.

The base station may transition from the non-energy-saving state to an energy saving state, for example, based on the sending (e.g., transmitting) the DCI. The base station, when in an energy saving state, may reduce transmission power, reduce transmission beams/ports, and/or increase transmission periodicity value of SSBs/CSI-RSs (e.g., from 5ms to 20ms, from 10ms to 40ms, etc.), compared with a non-energy-saving state. A transmission periodicity of SSBs/CSI-RSs may be implemented based on examples as described herein with respect to FIG. 33 and/or FIG. 34. The base station, if in an energy saving state, may send (e.g., transmit) periodic downlink signals (e.g., SIBx, SSBs, CSI-RSs, etc.) with longer transmission periodicity than in a non-energy-saving state. The base station, if in an energy saving state, may keep receiving uplink transmissions from wireless device(s). The base station, in the energy saving state, may maintain RRC connections (or may not break RRC connections) with one or more wireless devices which have set up RRC connections with one or more cells of the base station. The base station, in the energy saving state, may maintain existing interface(s) with other network entities (e.g., another base station, an AMF, a UPF, etc., as shown in FIG. 1B).

The base station may transition from the non-energy-saving state to an energy saving state. The base station may transition from the non-energy-saving state to an energy saving state, for example, based on the sending/transmitting the DCI. The wireless device may transition from the non-energy-saving state to an energy saving state, for example. based on the receiving the DCI. The transition from the non-energy-saving state to the energy saving state may comprise switching an active BWP from a first active BWP to a second BWP of the cell comprising a plurality of BWPs. A BWP may be implemented, for example, in a manner described herein, such as with respect to FIG. 9, FIG. 23 and/or FIG. 26. The first active BWP is a BWP, of the plurality of BWPs, on which the base station is sending/transmitting downlink signals and/or the wireless device is receiving the downlink signals. The second BWP may be a default BWP, a dormant BWP, or a BWP configured different from the default BWP and the dormant BWP, dedicated for energy saving for the base station. The second BWP may be a downlink-only BWP on which downlink transmission by a base station is allowed only and uplink transmission by a wireless device is not allowed. The second BWP may be an uplink-only BWP on which uplink transmission by a wireless device is allowed only and downlink transmission by a base station is not allowed. The one or more RRC messages may indicate the second BWP, from the plurality of BWPs of the cell, as a BWP to use in the energy saving state. The second BWP may have smaller bandwidth than the first active BWP. The second BWP may not be configured with PDCCH, PDSCH and/or CSI-RS, compared with the first active BWP. The base station (e.g., base station 4105) may send/transmit, and/or the wireless device (e.g., wireless device 4110) may receive, via the first active BWP of the cell, the plurality of RSs (e.g., SSBs) in a first RS (e.g., SSB) burst with the first transmission power (and/or a first transmission periodicity), e.g., in a non-energy-saving state. The base station (and/or the wireless device) may switch from the first active BWP to the second BWP. The base station (and/or the wireless device) may switch from the first active BWP to the second BWP, for example, after (e.g., in response to) transitioning to the energy saving state. The base station may send/transmit, (and/or the wireless device may receive), via the second BWP of the cell, one or more SSBs of the plurality of SSBs in a second SSB burst with the second transmission power (and/or a second transmission periodicity). The second transmission power is determined based on the power offset (or power adjustment) indicated by the DCI (or the MAC CE) and the 1^{st} power of SSBs/CSI-RSs sent/transmitted in the non-energy-saving state.

A wireless device may measure one or more second beam measurements of one or more reference signals. As shown in FIG. 41, the wireless device may measure one or more second beam measurements (2^{nd} (second) beam measurements) of SSBs 4150 (2^{nd} SSBs in FIG. 41) in one or more SMTC time window, for example, based on receiving the DCI (or a MAC CE) indicating the power offset (or power adjustment)/2^{nd} Tx power of the SSBs, wherein the 2^{nd} SSBs are sent (e.g., transmitted) by the base station with the 2^{nd} Tx power in the energy saving state. The wireless device may measure the 2^{nd} beam measurements (RSRP/RSRQ/SINR) of the SSBs which may be received, for example, after receiving the DCI/MAC CE. The 2^{nd} beam measurements may not comprise any one of the 1^{st} beam measurements measured over the 1^{st} SSBs received, for example, before the wireless device receives the DCI/MAC CE, wherein the 1^{st} SSBs may be sent (e.g., transmitted) by the base station with the 1^{st} Tx power in the non-energy-saving state.

A wireless device may determine a second threshold for the beam/cell measurement in a state with reduced power. The wireless device may determine a second threshold, different from the first threshold (e.g., *absThreshSS-BlocksConsolidation, absThreshCSI-RS-Consolidation,* which are configured for the non-energy-saving state), for the beam/cell measurement in the energy saving state or if the base station sends (e.g., transmits) the SSBs/CSI-RSs with the 2^{nd} Tx power. Determining the second threshold for beam/cell measurement in the energy saving state if the base station transmits SSBs/CSI-RSs with a reduced power, different from (or smaller than) the first threshold for beam/cell measurement in the non-energy saving state if the base station sends (e.g., transmits) SSBs/CSI-RSs with full power (or normal power), may enable the wireless device to identify enough or sufficient number of beam measurements for averaging to obtain cell measurement in the energy saving state.

A base station may configure a second threshold in one or more messages for the beam/cell measurements. The second threshold may be separately configured by the base station in the one or more RRC messages for the beam/cell measurements in the energy saving state, in addition to the first threshold for the beam/cell measurements in the non-energy-saving state. The one or more RRC messages may comprise first configuration parameters of a first measurement object (e.g., *MeasObjectNR,* as shown in FIG. 36) for the non-energy saving state and second configuration parameter of a second measurement object for the energy saving state. The second configuration parameters may be separately configured from the first configuration parameters. The first measurement object may be associated with a first threshold used for the beam/cell measurement in the non-energy-saving state. The second measurement object may be associated with a second threshold used for the beam/cell measurement in the energy saving state. A first SMTC configuration (e.g., *SSB-MTC* comprising measurement periodicity and offset, as shown in FIG. 36) of the first measurement object for the non-energy saving state may be different from a second SMTC configuration of the second measurement object for the energy saving state. The first SMTC configuration may be associated with a shorter measurement periodicity than the second SMTC configuration. A first number (e.g., *nrofSS-BlocksToAverage, nrofCSI-RS-ResourceToAverage,* as shown in FIG. 36), of the first measurement object, used for averaging beam measurements to obtain layer 1 cell measurement in the non-energy saving state may be bigger than a second number, of the second measurement object, used for averaging beam measurements in the energy saving state, etc. The wireless device may perform beam/cell measurement based on the first measurement object, for example, in the non-energy-saving state. The wireless device may perform beam/cell measurement based on the second measurement object, for example, in the energy saving state. The measurement periodicity of the second measurement object in the energy saving state may be configured longer than a time period (e.g., indicated by the DCI/MAC CE) of the energy saving state. The wireless device may skip beam/cell measurement (and/or reporting) in the time period of the energy saving state, for example, based on (e.g., in response to) the measurement periodicity being longer than the time period. A measurement time window, determined based on the second SMTC configuration, may not overlap the time period of the energy saving. The wireless device may skip beam/cell measurement (and/or reporting) in the time period of the energy saving state, for example, based on (e.g., in response to) the measurement time window not overlapping the time period of the energy saving.

The one or more messages from the base station may comprise one or more configuration parameters of a measurement object. For example, the one or more RRC messages may comprise first configuration parameters and second configuration parameters of a measurement object (e.g., *MeasObjectNR,* as shown in FIG. 36). The first configuration parameters may be used for the non-energy-saving state and may be separately configured from the second configuration parameters used for the energy saving state. The first configuration parameters may comprise a first threshold used for the beam/cell measurement in the non-energy-saving state. The second configuration parameters may comprise a second threshold used for the beam/cell measurement in the energy saving state. The first configuration parameters may indicate a first SMTC configuration (e.g., *SSB-MTC,* as shown in FIG. 36) for the non-energy saving state. The second configuration parameters may indicate a second SMTC configuration for the energy saving state. The first SMTC configuration may be associated with a shorter measurement periodicity than the second SMTC configuration. The first configuration parameters may comprise a first number (e.g., *nrofSS-BlocksToAverage, nrofCSI-RS-ResourceToAverage,* as shown in FIG. 36), used for averaging beam measurements to obtain layer 1 cell measurement in the non-energy saving state. The second configuration parameters may comprise a second number used for averaging beam measurements in the energy saving state, etc. The wireless device may perform beam/cell measurement based on the first configuration parameters of the measurement object, for example, in the non-energy-saving state. The wireless device may perform beam/cell measurement based on the second configuration parameters of the measurement object, for example, in the energy saving state. The measurement periodicity of the second configuration parameters in the energy saving state may be configured longer than a time period (e.g., indicated by the DCI/MAC CE) of the energy saving state. The wireless device may skip beam/cell measurement (and/or reporting) in the time period of the energy saving state, for example, based on (e.g., in response to) the measurement periodicity being longer than the time period. A measurement time window, determined based on the second SMTC configuration, may not overlap the time period of the energy saving. The wireless device may skip beam/cell measurement (and/or reporting) in the time period of the energy saving state, for example, based on (e.g., in response to) the measurement time window not overlapping the time period of the energy saving.

The second threshold may be indicated by a threshold value from a plurality of threshold values configured by the base station in the one or more messages for beam/cell measurements. For example, the second threshold may be indicated by the DCI/MAC CE from a plurality of threshold values configured by the base station in the one or more RRC messages for beam/cell measurements. The second threshold may be indicated by the DCI/MAC CE. The second threshold may be determined by the wireless device, for example, based on the power difference between the first Tx power and the second Tx power (or the power offset indicated by the DCI/MAC CE), for example, if the base station does not configure the second threshold (e.g., the second threshold not being presented in the one or more RRC messages) for the beam/cell measurement in the energy saving state. The wireless device may determine the second threshold as the first threshold (in dB/dBm) - the power offset (in dB) (or the power difference between the first Tx power and the second Tx power), for example, if the base station reduces the transmission power of 2^{nd} SSBs by the power offset in the energy saving state.

The wireless device may reset a filter. For example, the wireless device may reset the layer 3 (or L3) filter, for example, after or in response to receiving the DCI (or the MAC CE). Resetting the L3 filter may comprise discarding the stored/latest 1^{st} L3 beam/cell measurements obtained, for example, before the wireless device receives the DCI (or the MAC CE). Resetting the L3 filter may comprise resetting an initial value of L3 beam/cell measurement as a first layer 1 (or L1) beam/cell measurement measured over SSBs/CSI-RSs in a first SMTC time window occurring, for example, after receiving the DCI/MAC CE. The wireless device may send (e.g., transmit) a layer 3 beam/cell measurement report 4160 correctly reflecting the beam/cell quality of the cell in the energy saving state, for example, based on resetting, after or in response to receiving a command (e.g., a MAC CE and/or a DCI) indicating an adjustment of a downlink power of a pathloss RS (e.g., SSB/CSI-RS), a L3 filter by discarding a stored value of L3 beam/cell measurement and/or resetting an initial value of the L3 beam/cell measurement as a first L1 beam/cell measurement measured over SSBs/CSI-RSs after receiving the command. Examples described herein may enable the base station to dynamically adjust downlink transmission power of SSB/CSI-RS and enable the wireless device to correctly calculate layer 3 beam/cell measurements, for example, if the downlink transmission power is dynamically adjusted. Example described herein may enable the base station to correctly obtain the layer 3 beam/cell measurement in the energy saving state.

The wireless device may determine a second cell measurement, for example, based on second beam measurements of second reference signals. In the example of FIG. 41, the wireless device may determine 2^{nd} cell measurement (layer 1) (for the energy saving state) based on 2^{nd} beam measurements of 2^{nd} SSBs (or CSI-RSs), for example, after obtaining 2^{nd} beam measurements for 2^{nd} SSBs (or CSI-RSs) and determining 2^{nd} threshold. The wireless device may select a number of the highest beam measurements (in terms of RSRP values, RSRQ values, or SINR values), from the 2^{nd} beam measurements of the 2^{nd} SSBs (or CSI-RSs), greater than the 2^{nd} threshold. The number may not exceed a first number (*nrofSS-BlocksToAverage,* or *nrofCSI-RS-ResourcesToAverage*) configured by the one or more RRC messages. The number may not exceed a second number (configured for the energy saving state and differently from *nrofSS-BlocksToAverage,* or *nrofCSI-RS-ResourcesToAverage* for the non-energy-saving state) configured by the one or more RRC messages. The wireless device may average (in linear power) the number of the highest beam measurements to obtain 2^{nd} cell measurement (layer 1) (for the energy saving state). The wireless device may use the highest beam measurement among the 2^{nd} beam measurements as the 2^{nd} cell measurement (layer 1), for example, based on (e.g., in response to) none of the 2^{nd} beam measurements of the 2^{nd} SSBs (or CSI-RSs) being greater than the 2^{nd} threshold.

The wireless device may set the initial value of layer 3 cell measurement as the second cell measurement, for example, by resetting the layer 3 filter. By resetting the layer 3 filter, the wireless device may set the initial value of layer 3 cell measurement as the 2^{nd} cell measurement (layer 1) if the 2^{nd} cell measurement is obtained in the first measurement window, for example, after receiving the command (DCI/MAC CE) indicating the transitioning from the non-energy-saving state to the energy saving state. For example, in the energy saving state, the wireless device may (periodically) update layer 3 cell measurements (by applying/using the higher layer filtering based on examples as described herein with respect to FIG. 35), for example, based on an old layer 3 cell measurement value and a new layer 1 cell measurement obtained in a new measurement time window after receiving the DCI/MAC CE. A measurement time window may be implemented based on example as described herein with respect to FIG. 35 and/or FIG. 36. The new layer 1 cell measurement may be obtained by averaging the number of highest beam measurements of beam measurements obtained in the new measurement time window, for example, if there is at least one beam measurement of the beam measurements being greater than the second threshold, as described herein. The new layer 1 cell measurement may be obtained as the highest beam measurement among the beam measurements obtained in the new measurement time window, for example, if there is no beam measurement of the beam measurements being greater than the second threshold, as described herein.

The wireless device may comprise the latest layer 3 cell measurements in a message for a measurement report. For a measurement report (e.g., identified by a measurement identity (e.g., *measId*)) for which the measurement reporting procedure was triggered, the wireless device may comprise, in RRC message for measurement report (e.g., *measResults*), the latest layer 3 cell measurements (RSRP/RSRQ/SINR) for the cell in the energy saving state, for example, based on the periodically updated layer 3 cell measurements for the energy saving state.

The wireless device may derive a second layer 3 per beam filtered measurement for a layer 3 beam report, for example, by using layer 3 filtering. For layer 3 beam report in the energy saving state, the wireless device may derive 2^{nd} layer 3 per beam filtered measurement by applying/using layer 3 filtering, for example, after obtaining the 2^{nd} beam measurements (layer 1) for the SSBs. The applying/using layer 3 filtering may be implemented, for example, based on examples as described herein with respect to FIG. 35. FIG.36 and/or FIG. 37.

The wireless device may consider the sorting quantity for sorting the second layer 3 per beam measurements for the reference signals. For example, the wireless device may consider RSRP, RSRQ or SINR as the sorting quantity for sorting the 2^{nd} layer 3 per beam measurements for the S SBs/CSI-RSs, for example, after obtaining the 2^{nd} layer 3 per beam measurement for each SSB/CSI-RS of the SSBs and determining the second threshold, based on examples as described herein with respect to FIG. 35, FIG. 36 and/or FIG. 37. In the beam measurement report based on SSBs/CSI-RSs, the wireless device may set RS index results (e.g., *rsIndexResults*) to include up to maximum number of RS indexes to report (e.g., *maxNrofRS-IndexesToReport*) SSB indexes (or CSI-RS indexes) in order of decreasing sorting quantity, wherein the reported SSB/CSI-RS indexes (e.g., comprised in *resultsSSB-Indexes,* or *resultsCSI-RS-Indexes*) may comprise one or more SSB/CSI-RS indexes comprising first SSB/CSI-RS index associated to the best beam (in terms of RSRP/RSRQ/SINR) and second SSB/CSI-RS index(es) associated with the remaining beams whose sorting quantity (RSRP/RSRQ/SINR) is above the second threshold. The reported measurement results may comprise (layer 3) beam measurement results for the quantities for each SSB/CSI-RS indexes index of the one or more SSB/CSI-RS indexes.

The wireless device may comprise both the second layer 3 cell measurement and the second layer 3 per beam measurement in a second measurement report. For example, the wireless device may comprise both the 2^{nd} layer 3 cell measurement and the 2^{nd} layer 3 per beam measurement in a 2^{nd} measurement report for the energy saving state. The 2^{nd} (beam/cell) measurement report obtained via the SSBs/CSI-RSs sent (e.g., transmitted) by the base station with the second Tx power may be referred to as measurement report for the energy saving state.

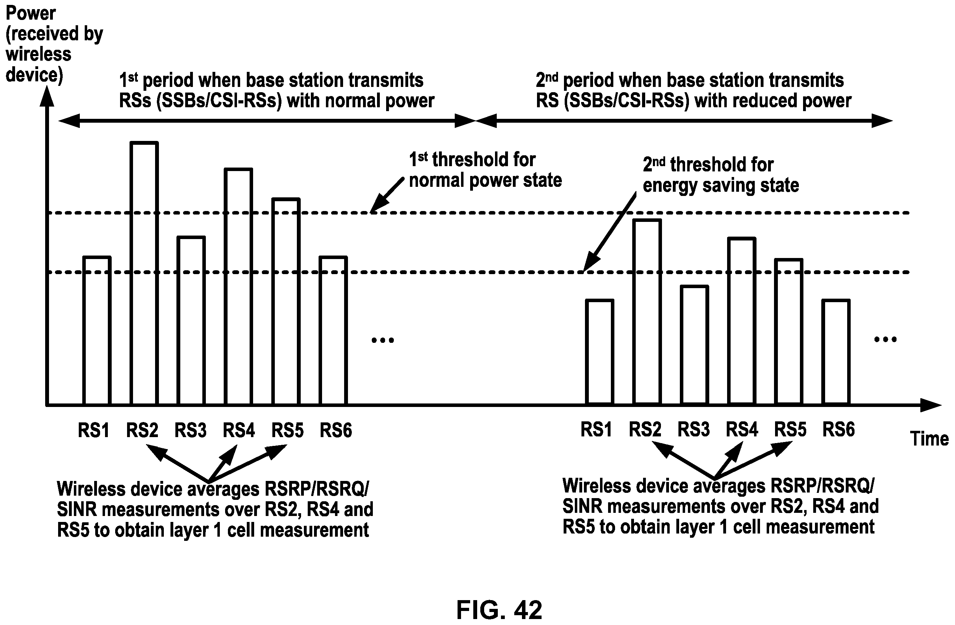

FIG. 42 shows an example of beam/cell measurement in energy saving (e.g., if the base station dynamically reduces SSBs/CSI-RSs transmission power for energy saving). The wireless device may receive reference signals in the first period. The wireless device may receive reference signals (e.g., RS1, RS2, RS3, RS4, RS5, RS6 and etc.), in 1^{st} period, for example, if base station sends (e.g., transmits) reference signals (e.g., SSBs/CSI-RS) with normal power (in a non-energy-saving state). The wireless device may measure beam measurements (e.g., RSRP/RSRQ/SINR) over these RSs. The wireless device may identify one or more reference signals (e.g., RS2, RS4 and RS5) having beam measurements greater than the threshold, for example, based on comparing with a first threshold configured for beam measurement averaging to obtain layer 1 cell measurement. The wireless device may average (linearly) the beam measurements of one or more reference signals (e.g., RS2, RS4 and RS5) as a layer 1 cell measurement (which may be used further to obtain layer 3 cell measurement) for the non-energy-saving state.

The base station may reduce the transmission power of reference signals in the energy saving state. In the example of FIG. 42, the base station may reduce the transmission power of SSBs/CSI-RSs in the energy saving state, for example, based on examples as described herein with respect to FIG. 41. The wireless device may determine a second threshold (which may be lower than the first threshold), for example, based on examples as described herein with respect to FIG. 41. The wireless device may identify RS2, RS4 and RS5 having beam measurements greater than the second threshold (even though they are lower than the first threshold), for example, based on the second threshold. The wireless device may average (linearly) the beam measurements of RS2, RS4 and RS5 as a layer 1 cell measurement (which may be used further to obtain layer 3 cell measurement) for the energy saving state. Determining the second threshold for beam/cell measurement in the energy saving state if the base station sends (e.g., transmits) SSBs/CSI-RSs with reduced power, different from (or smaller than) the first threshold for beam/cell measurement in the non-energy saving state if the base station sends (e.g., transmits) SSBs/CSI-RSs with full power (or normal power), may enable the wireless device to identify enough or sufficient number of beam measurements for averaging to obtain cell measurement in the energy saving state.

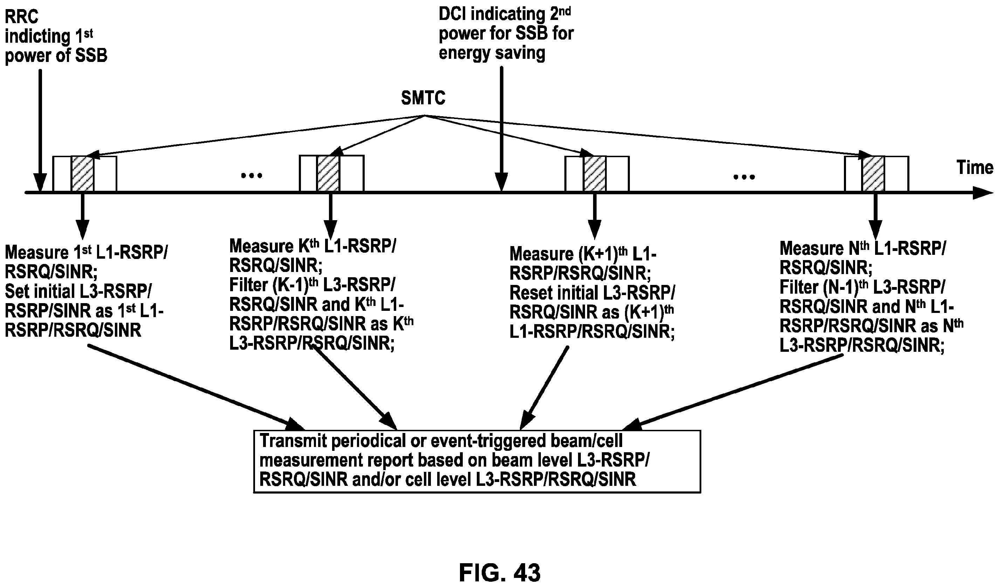

FIG. 43 shows an example of beam/cell measurement in energy saving (e.g., if downlink transmission power of SSBs/CSI-RSs is dynamically changed). The wireless device may receive, from a base station, one or more messages indicating a transmission power of reference signals. For example, the wireless device may receive from a base station, one or more RRC messages indicating a Tx power of reference signals (e.g., SSBs). The RRC messages may be implemented based on examples as described herein with respect to FIG. 41.

The wireless device may measure a first layer 1 measurement over at least one of the reference signals. As shown in FIG. 43, the wireless device may measure a first L1-RSRP/RSRQ/SINR over each of the SSBs/CSI-RSs. The wireless device may receive the SSBs/CSI-RSs in a first SSB/CSI-RS measurement time window, for example, based on configuration parameters of a SMTC, for example, based on examples as described herein with respect to FIG. 38. The wireless device may set an initial value of L3 measurement (beam/cell), for a layer 3 filter, as a first L1-RSP/RSRQ/SINR. The wireless device may periodically measure the L1-RSRP/RSRQ/SINR over the SSBs/CSI-RSs and update L3 measurements based on the layer 3 filter. The wireless device may measure a K^{th} L1-RSRP/RSRQ/SINR over the SSBs in a K^{th} SSB measurement time window. The wireless device may update L3 beam/cell measurement as K^{th} L3 beam/cell measurement with K^{th} L1-RSRP/RSRQ/SINR and (K-1)^{th} L3 beam/cell measurement, for example, based on a layer 3 filter coefficient for a layer 3 filter. The wireless device may update L3 beam/cell measurement by ***F***_{K} = (1 - ***a***)****F***_{K-1} *+ **a*******M**_{K},* for example, based on the layer 3 filter, wherein ***M***_{K} is the K^{th} L1-RSRP/RSRQ/SINR, ***F***_{K-1} is the latest L3 beam/cell measurement stored/obtained before K^{th} L1- RSRP/RSRQ/SINR is received from the physical layer. ***a*** is a layer 3 coefficient based on examples as described herein with respect to FIG. 37. The wireless device may send (e.g., transmit) periodic or event-triggered beam/cell measurement report, for example, based on the (layer 3) beam/cell measurement based on the layer 3 filtering.

The wireless device may receive a message indicating a power offset for one or more reference signals. As shown in FIG. 43, the wireless device may receive a DCI (or a MAC CE not shown in FIG. 43) indicating a power offset for the SSB, for example, based on examples as described herein with respect to FIG. 41. The wireless device may measure a (K+1)^{th} L1- RSRP/RSRQ/SINR over the SSBs sent (e.g., transmitted) by the base station after the reception of the DCI, for example, based on receiving the DCI. The wireless device may reset an initial value of L3 beam/cell measurement as the (K+1)^{th} L1- RSRP/RSRQ/SINR, by resetting the layer 3 filter, for example, based on receiving the DCI and/or measuring the (K+1)^{th} L1- RSRP/RSRQ/SINR. The wireless device may discard the stored K^{th} L3 beam/cell measurement value. The wireless device may store the (K+1)^{th} L1- RSRP/RSRQ/SINR as the latest (initial) L3 beam/cell measurement value, for example, based on discarding the stored K^{th} L3 beam/cell measurement value and resetting the initial value of L3 beam/cell measurement as the (K+1)^{th} L1- RSRP/RSRQ/SINR.

The wireless device may measure a layer 1 measurement over the reference signals in a corresponding measurement time window. As shown in FIG. 43, the wireless device may measure a N^{th} L1- RSRP/RSRQ/SINR over the SSBs in a N^{th} SSB measurement time window. The wireless device may update L3 beam/cell measurement as N^{th} L3 beam/cell measurement with N^{th} L1- RSRP/RSRQ/SINR and (N-1)^{th} L3 beam/cell measurement based on a layer 3 filter coefficient of a layer 3 filter. The wireless device may update L3 beam/cell measurement by ***F***_{N} = (1 - ***a***)****F***_{*N-*1} *+ **a*****M**_{N},* for example, based on the layer 3 filter, wherein ***M***_{N} is the N^{th} L1- RSRP/RSRQ/SINR, ***F***_{N-1} is the latest L3-RSRP stored/obtained before N^{th} L1- RSRP/RSRQ/SINR is received from the physical layer. ***a*** is a layer 3 coefficient based on examples as described herein with respect to FIG. 37. The wireless device may send (e.g., transmit) periodic or event-triggered beam/cell measurement report based on the (layer 3) beam/cell measurement based on the layer 3 filtering.

FIG. 43 may be further improved for supporting dynamic switching of a base station between a normal power state and an energy saving state. A wireless device may determine layer 3 beam/cell measurements. A wireless device may determine L3 beam/cell measurements, for example, before receiving the DCI (or MAC CE) and after receiving the DCI as two separate and/or independent measurement processes. The DCI may indicate a transition of the base station from the normal power state to the energy saving state. The wireless device may maintain a first measurement process for a base station working in a normal power state (e.g., when the base station sends (e.g., transmits) SSBs with a first downlink power) and maintain a second measurement process for the base station working in an energy saving state (e.g., when the base station sends (e.g., transmits) SSBs with a second downlink power). By maintaining two measurement processes, the wireless device may store two L3 beam/cell measurements (or higher layer filter measurements like RSRP, RSRQ, RSSI, SINR, etc.), one for normal power state, another one for energy saving state. The wireless device may use a first L3 beam/cell measurement, of the two L3 beam/cell measurements of two measurement processes, associated with the normal power state, for example, if the base station is in normal power state. The wireless device may update the first L3 beam/cell measurement based on the layer 3 filter and/or may not update the second L3 beam/cell measurement associated with the energy saving state, for example, if the wireless device determines that the base station is in the normal power state. The wireless device may send (e.g., transmit) beam/cell measurement report, for example, based on the first L3 beam/cell measurement in the normal power state. The wireless device may use a second L3 beam/cell measurement, of the two L3 beam/cell measurements of two measurement processes, associated with the energy saving state, for example, if the base station is in energy saving state. The wireless device may update the second L3 beam/cell measurement based on the layer 3 filter and may not update the first L3 beam/cell measurement associated with the normal power state, for example, if the wireless device determines that the base station is in the energy saving state (e.g., based on receiving the DCI/MAC CE indicating the transitioning from the non-energy-saving state to the energy saving state). The wireless device may send (e.g., transmit) beam/cell measurement report, for example, based on the second L3 beam/cell measurement in the energy saving state.

The wireless device may maintain more than one layer 3 filter. For example, the wireless device may maintain two layer 3 filters, one for normal power state and one for energy saving state, so that the wireless device may not need to reset the layer 3 filter frequently, for example, if switching between the normal power state and the energy saving state, if a single layer 3 filter is used for both states based on at least some technologies.

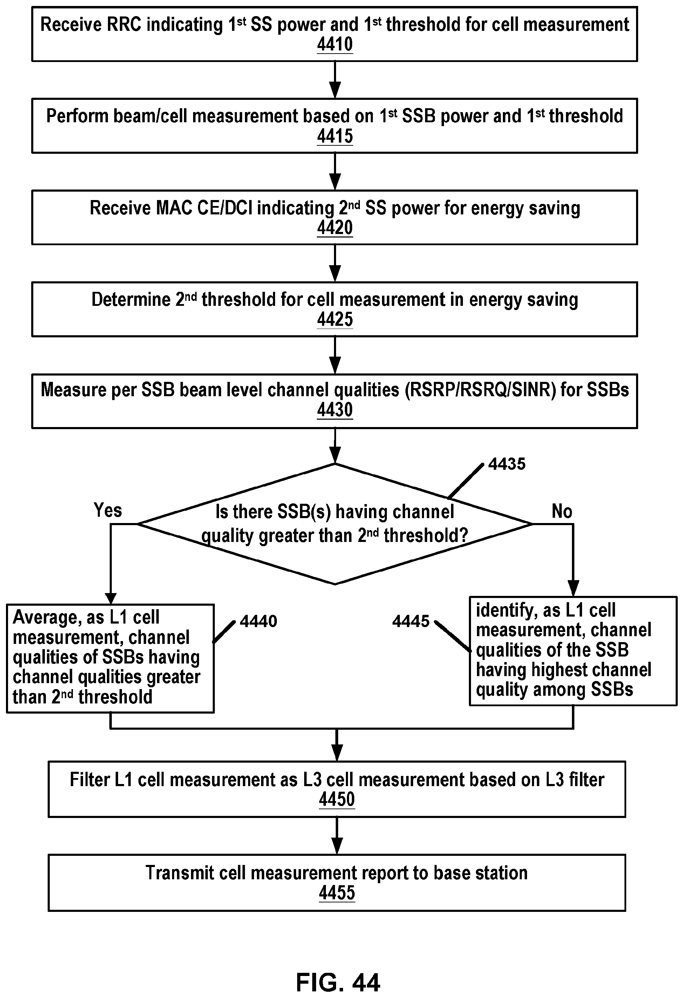

FIG. 44 shows an example flowchart of beam/cell measurement in energy saving (e.g., report for energy saving operation of a base station). At step 4410, a wireless device may receive, from a base station, one or more RRC messages indicating 1^{st} SS power and 1^{st} threshold for beam/cell measurement. The base station may send (e.g., transmit), to the wireless device, one or more RRC messages indicating 1^{st} SS power and 1^{st} threshold for beam/cell measurement. The RRC messages may be implemented based on examples as described herein with respect to FIG. 41. At step 4415, the wireless device may perform beam/cell measurement over the SSBs, for example, based on 1^{st} SS power and 1^{st} threshold, based on examples as described herein with respect to FIG. 41.

At step 4420, the wireless device may receive a DCI/MAC CE indicating 2^{nd} SS power for energy saving, based on examples as described herein with respect to FIG. 41. The base station may send (e.g., transmit), to the wireless device, a DCI/MAC CE indicating 2^{nd} SS power for energy saving.

At step 4425, the wireless device may determine a 2^{nd} threshold for cell measurement in energy saving, for example, based on examples as described herein with respect to FIG. 41. At step 4430, the wireless device may measure per SSB beam level channel qualities (e.g., RSRP/RSRQ/SINR) over the SSBs sent (e.g., transmitted) by the base station with the 2^{nd} SS power. At step 4435, the wireless device may determine whether there is SSB(s) having measured channel quality greater than the 2^{nd} threshold. At step 4440, the wireless device may average (linearly), as a L1 cell measurement, channel qualities of the at least one SSB, of the SSBs, greater than the 2^{nd} threshold, based on (e.g., in response to) at least one SSB, among the SSBs, having measured channel quality greater than the 2^{nd} threshold. At step 4445, the wireless device may identify, as L1 cell measurement, channel quality of the SSB, among channel qualities of the SSBs, having the highest channel quality, based on (e.g., in response to) none of the SSBs having measured channel quality greater than the 2^{nd} threshold.

At step 4450, the wireless device may filter the L1 cell measurement to obtain L3 cell measurement based on L3 filter, for example, after obtaining the L1 cell measurement, by implementing examples as described herein with respect to FIG. 41. At step 4455, The wireless device may send (e.g., transmit), to the base station, the cell measurement report (e.g., based on the L3 cell measurement for the energy saving state). The base station may receive, from the wireless device, the cell measurement report (e.g., based on the L3 cell measurement for the energy saving state).

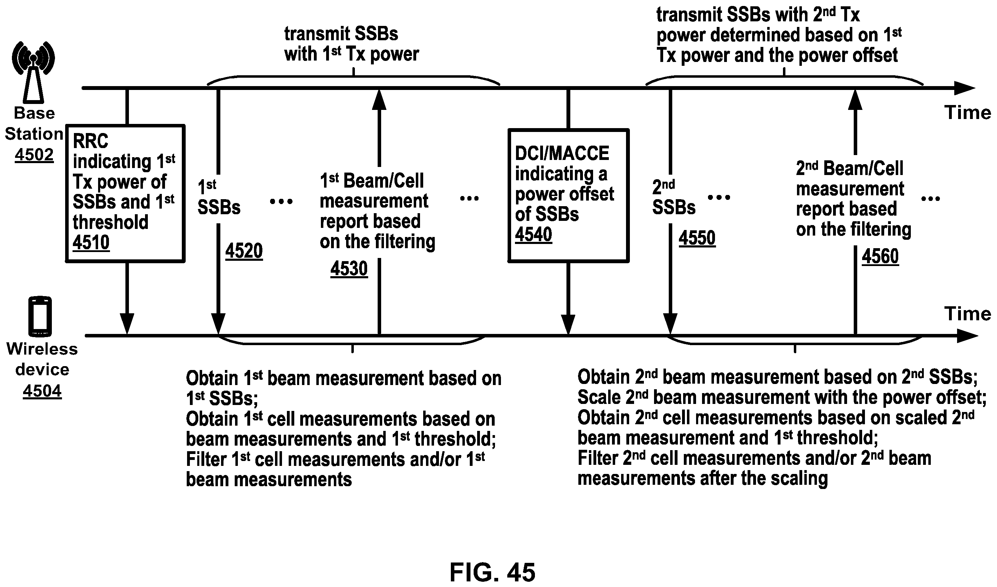

FIG. 45 shows an example of beam/cell measurement in energy saving (e.g., if downlink transmission power is adjusted dynamically by a base station, based on examples as described herein with respect to FIG. 41). A base station may send (e.g., transmit), and/or a wireless device may receive, one or more messages indicating a first downlink transmission power value of reference signals. A base station 4502 (e.g., a gNB) may send (e.g., transmit), and/or a wireless device 4504 (e.g., a UE) may receive, one or more RRC messages 4510 indicating a first downlink transmission power (1^{st} Tx power) value of SSBs, for example, based on examples as described herein with respect to FIG. 41. The one or more RRC messages may further indicate a 1^{st} threshold for cell measurement.

The wireless device may obtain first cell measurement. As shown in FIG. 45, the wireless device may obtain 1^{st} cell measurement, for example, based on measuring 1^{st} beam measurements (RSRP/RSRQ/SINR/RSSI, etc.) over periodically sent (e.g., transmitted) SSBs 4520 (1^{st} SSBs) and the 1^{st} threshold, by implementing examples as described herein with respect to FIG. 41. The wireless device may filter the 1^{st} cell measurement and/or the 1^{st} beam measurement to obtain layer 3 cell measurement and/or beam measurement by implementing examples as described herein with respect to FIG. 41. The wireless device may send (e.g., transmit) a 1^{st} beam/cell measurement report 4530 based on the filtering.

The base station may send (e.g., transmit), and/or the wireless device may receive, a message indicating a power offset for one or more reference signals. As shown in FIG. 45, the base station may send (e.g., transmit), and/or the wireless device may receive, a DCI/MAC CE 4540 indicating a power offset for the SSBs. The DCI/MAC 4540 may indicate a transition from the non-energy-saving state to an energy saving state, for example, based on examples as described herein with respect to FIG. 41.

The wireless device may measure one or more second layer 1 beam measurements of reference signals. As shown in FIG. 45, the wireless device may measure one or more second L1 beam measurements (2^{nd} beam measurements) of SSBs 4550 in one or more SMTC time window, for example, based on receiving the DCI (or a MAC CE) indicating the power offset (or power adjustment) of the SSBs. The wireless device may measure the 2^{nd} beam measurements of the SSBs which are received after receiving the DCI. The SSBs, which are received after the reception of the DCI, may be sent (e.g., transmitted) by the base station with a second transmission power (2^{nd} Tx power) determined, for example, based on the 1^{st} Tx power and the power offset. The 2^{nd} beam measurements may not comprise any one of the 1^{st} beam measurements measured over the SSBs received, for example, before the wireless device receives the DCI.

The wireless device may scale the second beam measurements. The wireless device may scale the 2^{nd} beam measurements with the power offset. The wireless device may scale a 2^{nd} L1-RSRP as 2^{nd} L1-RSRP + *abs*(the power offset), for example, if the power offset indicates a power reduction for the SSB transmission. The wireless device may scale a 2^{nd} L1-RSRP as 2^{nd} L1-RSRP - *abs*(the power offset), for example, if the power offset indicates a power increase for the SSB transmission.

The wireless device may maintain the layer 3 filter without resetting the filter. The wireless device may maintain the layer 3 filter without resetting, for example, after or in response to receiving the DCI (or the MAC CE), different from embodiment of FIG. 43. The wireless device may obtain 2^{nd} (L3) beam/cell measurement by filtering the previous (or latest) of L3 beam/cell measurement and the scaled 2^{nd} L1 beam/cell measurement with a L3 filter coefficient, for example, based on the layer 3 filter, based on examples as described herein with respect to FIG. 35. The wireless device may obtain 2^{nd} (L3) beam/cell measurement, for example, based on ***F***₂ = (1 *- **a***)****F**₁ + **a*****M**₂,* wherein ***M***₂ is the scaled 2^{nd} L1-RSRP, ***F***₁ is the latest L3 beam/cell measurement stored/obtained before 2^{nd} beam measurements are received from the physical layer. The wireless device may send (e.g., transmit) 2^{nd} beam/cell measurement report 4560 based on the filtering.

The wireless device may scale a layer 1 measurement with a power offset indicated by the base station. The wireless device may scale received L1-RSRP with a power offset indicated by the base station for SSB transmission power adjustment, for example, based on examples as described herein with respect to FIG. 45. The wireless device may maintain a same L3-RSRP filtering algorithm and a same beam/cell measurement algorithm, even when the wireless device receives the SSBs with different transmission powers, for example, based on scaling the L1-RSRP with the power offset. Comparing with examples of FIG. 41 and/or FIG. 43, the wireless device may simplify layer 3 measurements (e.g., without resetting layer 3 filters), for example, if the base station dynamically adjusts downlink transmission power for an SSB.

A wireless device may take a time period (duration, or gap) to adapt downlink transmission power adjustment. A wireless device may take a time period (duration, or gap) to adapt, for example, SSB/CSI-RS/PDSCH/PDCCH transmission power adjustment. The time duration may be determined, for example, based on a process capability (power amplifier, AGC, AD/DA converter, RF modules, etc.) of the wireless device. The time duration may be determined, for example, based on a process capability (power amplifier, AGC, AD/DA converter, RF modules, etc.) of the base station. The wireless device may not be aware of when the base station will use (or switch to) a new transmission power for downlink transmission, for example, if the base station sends (e.g., transmits) a DCI/MAC CE indicating a downlink transmission power adjustment. The wireless device may not be able to catch up the speed of the transmission power changing at the base station due to limited capability of the wireless device, for example, if the base station sends (e.g., transmits) a DCI/MAC CE indicating a downlink transmission power adjustment. At least some technologies may cause misalignment between the base station and the wireless device regarding a timing of the downlink transmission power adjustment. Misalignment regarding the timing of the power adjustment may cause the wireless device to incorrectly measure beam/cell channel qualities. There may be a need to align the downlink transmission power adjustment between the base station and the wireless device when the base station dynamically adjusts the downlink transmission power for SSB/CSI-RS/PDSCH/PDCCH.

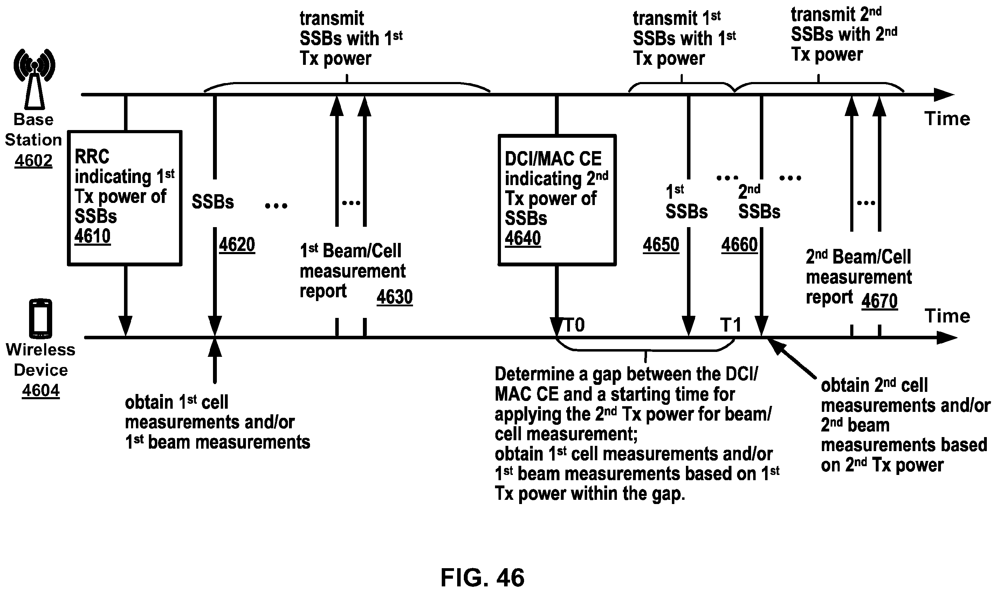

FIG. 46 shows an example of beam/cell measurement in energy saving (e.g., if downlink transmission power is adjusted dynamically by a base station, based on examples as described herein with respect to FIG. 41). A base station 4602 may send (e.g., transmit), and/or the wireless device 4604 may receive, one or more messages indicating a first downlink transmission power value of one or more reference signals. A base station (e.g., a gNB) may send (e.g., transmit), and/or a wireless device (e.g., a UE) may receive, one or more RRC messages 4610 indicating a first downlink transmission power (1^{st} Tx power) value of SSBs, for example, based on examples as described herein with respect to FIG. 41.

The wireless device may obtain first beam/cell measurements over reference signals with a first transmission power. As shown in FIG. 46, the wireless device may obtain 1^{st} beam/cell measurements over SSBs/CSI-RS 4620 with 1^{st} Tx power by implementing examples as described herein with respect to FIG. 41. The wireless device may send (e.g., transmit) 1^{st} beam/cell measurement report 4630 by implementing examples as described herein with respect to FIG. 41.

The base station may send (e.g., transmit), and/or the wireless device may receive, a message indicating a second transmission power for the one or more reference signals. As shown in FIG. 46, the base station may send (e.g., transmit), and/or the wireless device may receive, a DCI/MAC CE 4640 indicating 2^{nd} Tx power (or a power offset relative to 1^{st} Tx power) for the SSBs. The DCI/MAC 4640 may indicate a transition from the non-energy-saving state to an energy saving state, for example, based on examples as described herein with respect to FIG. 41. The DCI/MAC may be received by the wireless device at a first time interval (e.g., T0).

The wireless device may determine a time gap for using the power adjustment of the reference signals. As shown in FIG. 46, the wireless device may determine a time gap starting from T0 for applying/using the power adjustment of the SSBs, for example, based on receiving the DCI (or a MAC CE) indicating the power offset (or the 2^{nd} Tx power) of the SSBs. The time gap may be a threshold (in symbols, symbol groups, slots, slot groups, millisecond, etc.). The time gap may be configured by the base station in RRC, MAC CE and/or DCI. The time gap may be indicated by the wireless device, for example, based on a capability indication of the wireless device. The time gap may be preconfigured as a fixed value.

The wireless device may determine (or assume) that the reference signals are sent (e.g., transmitted) by the base station with the same first transmission power during a time window. The wireless device may determine (or assume) that the SSBs are sent (e.g., transmitted) by the base station with the same 1^{st} Tx power during a time window from T0 to T1, for example, after receiving the DCI (or the MAC CE) at T0, wherein a time offset between T0 and T1 is the time gap. The wireless device may determine (or assume) that the SSBs are sent (e.g., transmitted) by the base station with 2^{nd} Tx power from T1, for example, after receiving the DCI (or the MAC CE) at T0, wherein a time offset between T0 and T1 is the time gap.

The wireless device may determine that first reference signals received are sent (e.g., transmitted) by the base station with a first transmission power. In the example of FIG. 46, the wireless device may determine that 1^{st} SSBs 4650 received between T0 and T1 are sent (e.g., transmitted) by the base station with 1^{st} Tx power. The wireless device may determine that 2^{nd} SSB 4660 received after T1 are sent (e.g., transmitted) by the base station with 2^{nd} Tx power. In the example of FIG. 46, the base station may send (e.g., transmit) 1^{st} SSBs between T0 and T1 with 1^{st} Tx power. The base station may send (e.g., transmit) 2^{nd} SSBs after T1 with 2^{nd} Tx power.

The wireless device may assume that the first reference signals are sent (e.g., transmitted) by the base station with a first transmission power. The wireless device may assume that the 1^{st} SSBs are sent (e.g., transmitted) with 1^{st} Tx power by the base station between T0 and T1, for example, based on determining the time gap between T0 and T1, if a SSB transmission occasion occurs between T0 and T1. The wireless device may measure and obtain 1^{st} beam/cell measurements based on SSBs received between T0 and T1, wherein the SSBs are received between T0 and T1 and sent (e.g., transmitted) by the base station with 1^{st} Tx power. The wireless device may obtain 1^{st} beam/cell measurements over SSBs/CSI-RS with 1^{st} Tx power and received between T0 and T1 by implementing examples as described herein with respect to FIG. 41. The wireless device may send (e.g., transmit) 1^{st} beam/cell measurement report 4630 by implementing examples as described herein with respect to FIG. 41.

The wireless device may measure and obtain a second beam/cell measurement. As shown in FIG. 46, the wireless device may measure and obtain 2^{nd} beam/cell measurement after T1, based on 2^{nd} Tx power of 2^{nd} SSBs, for example, based on determining the time gap between T0 and T1, wherein the 2^{nd} SSBs are received after T1 and sent (e.g., transmitted) by the base station with 2^{nd} Tx power. The wireless device may measure and obtain beam/cell measurements over SSBs/CSI-RS, for example, based on examples as described herein with respect to FIG. 41. The 2^{nd} beam/cell measurement may be measured in an SSB measurement time window of a SMTC, wherein the SSB measurement time window starts after T1. The wireless device may discard a measured (L1-) beam/cell measurement, for beam/cell measurement report, for example, if the beam/cell measurement is measured in an SSB measurement time window starting before T1. The wireless device may reset the layer 3 filter for beam/cell measurement after T1. The wireless device may send (e.g., transmit) 2^{nd} beam/cell measurement report 4670, for example, based on the 2^{nd} beam/cell measurement.

The wireless device may determine to receive a power adjusted reference signal with an application delay time for the power adjustment. By implementing example of FIG. 46, the wireless device may determine to receive a power adjusted S SB/CSI-RS with an application delay time for the power adjustment. The application delay may be indicated by the base station and/or determined by the wireless device. The wireless device may determine that a transmission power of the S SB/CSI-RS is not changed within the application delay time starting from the reception of the command, for example, after receiving a command indicating the power adjustment for SSB/CSI-RS. The wireless device may determine that a transmission power of the SSB/CSI-RS is changed since the application delay time starting from the reception of the command, for example, after receiving a command indicating the power adjustment for SSB/CSI-RS. Example may enable the base station and the wireless device to align on when a power adjustment of SSB/CSI-RS is applied.

FIG. 46 may be further improved to simplify processing of a wireless device and/or a base station. The wireless device may assume (or determine) that there may be no reference signal sent (e.g., transmitted) from the base station, for example, in the application delay time. The wireless device may assume (or determine) that there may be no SSB sent (e.g., transmitted) from the base station, for example, in the application delay time (e.g., from T0 to T1), even the wireless device is supposed to measure SSB in a SSB measurement time window of a SMTC, if the SSB measurement time window overlaps with the application delay time. The wireless device may skip updating L3 beam/cell measurement (updating L3 beam/cell measurement may be based on examples described based on FIG. 41), for example, based on the determining that no SSB is sent (e.g., transmitted) in the SSB transmission occasion within the application delay time. The wireless device may use the stored L3 beam/cell measurement to send (e.g., transmit) beam/cell measurement report, for example, if the beam/cell measurement report occurs between T0 and T1 as required. The wireless device may stop (or skip) sending (e.g., transmitting) beam/cell measurement report, for example, if a transmission occasion of the beam/cell measurement report occurs between T0 and T1 as required. The base station may skip sending (e.g., transmitting) SSBs during the application delay time from T0 to T1, for example, if the application delay time overlaps with an SSB transmission occasion based on SSB configuration parameters. Allowing the base station to skip sending (e.g., transmitting) SSBs in an SSB transmission occasion within the application delay time may reduce power consumption of the base station and/or simplify processing of the base station.

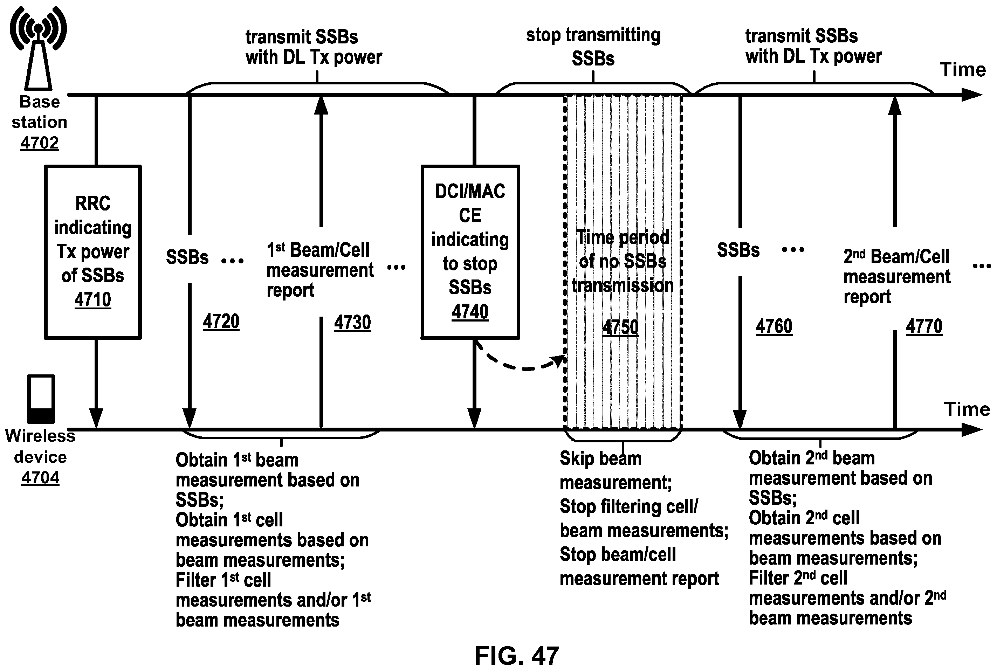

FIG. 47 shows an example of beam/cell measurement in energy saving (e.g., if downlink transmission power is adjusted (to zero indicating that SSB/CSI-RS is stopped) dynamically by a base station, based on examples as described herein with respect to FIG. 41). A base station may send (e.g., transmit), and/or a wireless device may receive, one or more messages indicating a downlink transmission power value of one or more reference signals. A base station 4702 (e.g., a gNB) may send (e.g., transmit), and/or a wireless device 4704 (e.g., a UE) may receive, one or more RRC messages 4710 indicating a downlink transmission power value of SSBs, for example, based on examples as described herein with respect to FIG. 41.

The wireless device, may obtain first beam measurement and further obtain first cell measurement, for example, based on the beam measurements. As shown in FIG. 47, the wireless device, may obtain 1^{st} beam measurement and further obtain 1^{st} cell measurement based on the beam measurements, for example, based on measuring 1^{st} beam qualities over periodically sent (e.g., transmitted) SSBs 4720, by implementing examples as described herein with respect to FIG. 41. The wireless device may filter the (layer 1) 1^{st} beam/cell measurement, for example, based on a layer 3 filter by implementing examples as described herein with respect to FIG. 41. The wireless device may send (e.g., transmit) 1^{st} beam/cell measurement report 4730, for example, based on the filtering by implementing examples as described herein with respect to FIG. 41.

The base station may send (e.g., transmit), and/or the wireless device may receive, a message indicating to stop the transmission of the reference signals. As shown in FIG. 47, the base station may send (e.g., transmit), and/or the wireless device may receive, a DCI/MAC CE 4740 indicating to stop the transmission of the SSBs (and/or CSI-RSs), for example, in a time period. The DCI/MAC 4740 may indicate a transition from the non-energy-saving state to an energy saving state, for example, based on examples as described herein with respect to FIG. 41.

The wireless device may skip beam measurement over reference signals in a time window. As shown in FIG. 47, the wireless device may skip beam measurement over SSBs in a SMTC time window within the time period, for example, based on receiving the DCI (or a MAC CE) indicating to stop the transmission of the SSBs in the time period 4750, wherein the SMTC time window may occur, for example, after the reception of the DCI (or the MAC CE). The DCI (or the MAC CE) may indicate a transition of the base station from a none-energy-saving state to an energy saving state, for example, based on examples as described herein with respect to FIG. 41. The transition may comprise switching from a first active DL BWP to a second BWP. The second BWP may be an uplink-only BWP on which the base station may not be allowed to send (e.g., transmit) downlink signals. The second BWP may be a dormant DL BWP on which the base station may not send (e.g., transmit) downlink signals. The wireless device may discard beam measurement of SSBs measured in a SMTC time window within the time period, wherein the SMTC time window may occur, for example, after the reception of the DCI (or the MAC CE). The wireless device may stop updating L3 beam/cell measurement, for example, based on skipping measuring the beam measurement and/or discarding the beam measurement. The wireless device may stop filtering the beam/cell measurements. The wireless device may stop beam/cell measurement report, for example, during the time period when the base station stops the transmission of the SSBs/CSI-RSs.

The base station may resume transmission of the reference signals in reference signal transmission occasions according to configuration parameters of the reference signals. As shown in FIG. 47, the base station may resume transmission of the SSBs 4760 in SSB transmission occasions according to configuration parameters of the SSBs, for example, at the end of the time period during which the base station may not send (e.g., transmit) the SSBs. The wireless device may resume beam measurement, for example, at the end of the time period. The wireless device may measure 2^{nd} beam measurements over SSBs in an SSB measurement time window of a SMTC. The SSB measurement time window may occur, for example, after the time period according to configuration parameters of the SMTC. The wireless device may update L3 beam/cell measurement, for example, based on the previous L3 beam/cell measurement and the 2^{nd} beam measurement, and/or based on the 2^{nd} beam measurement, by implementing examples as described herein with respect to FIG. 41. The wireless device may send (e.g., transmit) 2^{nd} beam/cell measurement report 4770, for example, based on the 2^{nd} beam/cell measurement.

A wireless device may skip channel measurements in one or more measurement time windows. A wireless device may skip channel measurements (e.g., RSRP, RSRQ, RSSI, SINR, etc.) in one or more measurement time windows, for example, after or in response to receiving a command indicating to stop transmission of SSB/CSI-RS. The wireless device may skip beam/cell measurement report, for example, in the time duration when the base station stops transmission of the SSBs/CSI-RSs.

The application delay time of FIG. 46 may be further implemented to example of FIG. 47. In this case, the wireless device may determine that there is an application delay time for reference signal transmission stopping indication. For example, the wireless device may determine that there is an application delay time for SSB/CSI-RS transmission stopping indication, by implementing examples of FIG. 46 and/or FIG. 47.

One or more examples of power adjustment of first reference signals (e.g., SSBs) as described herein with respect to FIG. 41, FIG. 42, FIG. 43, FIG. 44, FIG. 45, FIG. 46 and/or FIG. 47, may be applied/used for power adjustment of second reference signals (e.g., CSI-RS, PT-RS, DM-RS. etc.), by replacing a first reference signal (e.g., SSB) with a second reference signal (e.g., CSI-RS, PT-RS and/or DM-RS) in one or more examples as described herein with respect to FIG. 41, FIG. 42, FIG. 43, FIG. 44, FIG. 45, FIG. 46 and/or FIG. 47.

One or more examples of RSRP measurement as described herein with respect to FIG. 41, FIG. 42, FIG. 43, FIG. 44, FIG. 45, FIG. 46 and/or FIG. 47, may be applied/used for other channel measurements (e.g., RSRQ, RSSI, SINR, etc.), by replacing RSRP with RSRQ, RSSI, SINR, etc. in one or more examples as described herein with respect to FIG. 41, FIG. 42, FIG. 43, FIG. 44, FIG. 45, FIG. 46 and/or FIG. 47.

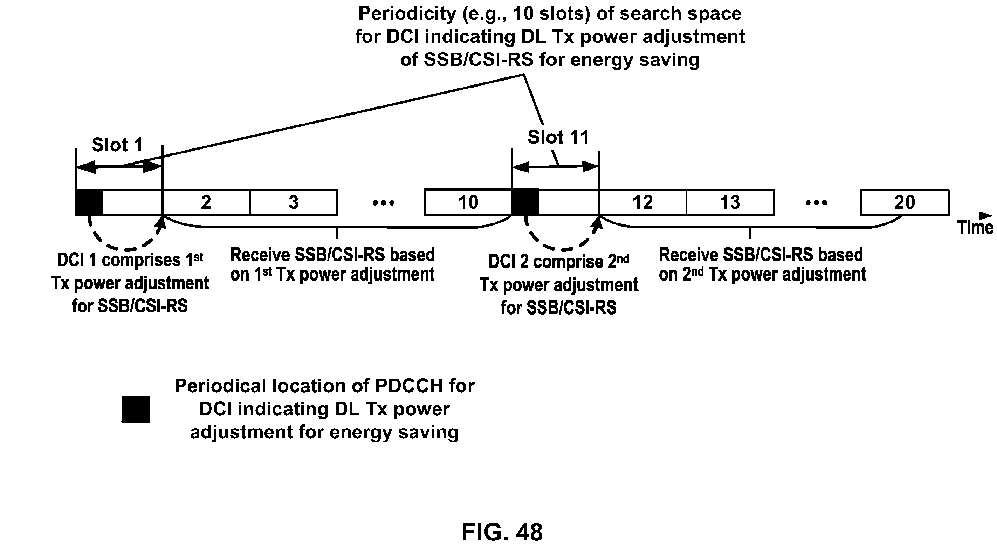

FIG. 48 shows an example of search space configuration for energy saving indication of a base station (e.g., a DCI indicating downlink Tx power adjustment for energy saving of a base station, for example, based on examples as described herein with respect to FIG. 41, FIG. 42, FIG. 43, FIG. 44, FIG. 45, FIG. 46 and/or FIG. 47).

A base station may send/transmit to a wireless device (or a group of wireless devices) base station energy saving (BS ES) parameters indicating PDCCH configuration for an energy saving DCI transmission and ES time resources. The BS ES parameters may be comprised in common RRC messages (e.g., MIB, SIBx) or wireless device specific RRC messages.

The BS ES parameters may indicate a search space (for a (group common or UE-specific) DCI indicating the ES (or an energy saving DCI) for the base station. The search space may comprise, for example, a common search space or a UE-specific search space. The BS ES parameters may indicate the search space for an energy saving DCI for the base station. A search space may be implemented, in a manner such as described herein, for example, with respect to FIG. 27. The search space may be a type 0/0A/1/2/3 common search space. The ES indication may be comprised in various DCI formats. The ES indication may be comprised in a DCI format 1_0 scrambled by a SI-RNTI in a type 0/0A common search space. The ES indication may be comprised in a DCI format 1_0 scrambled by a P-RNTI in a type 2 common search space. The ES indication may be comprised in a DCI format 2_0 scrambled by an SFI-RNTI in a type 3 common search space. The ES indication may be comprised in a DCI format 2_1 scrambled by an INT-RNTI in a type 3 common search space. The ES indication may be comprised in a DCI format 2_2 scrambled by a TPC-PUCCH-RNTI/TPC-PUCCH-RNTI in a type 3 common search space. The ES indication may be comprised in a DCI format 2_3 scrambled by a TPC-SRS-RNTI/ in a type 3 common search space. The ES indication may be comprised in a DCI format 2_4 scrambled by a CI-RNTI in a type 3 common search space. The ES indication may be comprised in a DCI format 2_5 scrambled by an AI-RNTI in a type 3 common search space. The ES indication may be comprised in a DCI format 2_6 scrambled by a PS-RNTI in a type 3 common search space. In an example, the ES indication may be comprised in a new DCI format in a type 3 common search space, different from legacy 2_x DCI format. The BS ES parameters may indicate a plurality of power offset values of the ES operation for the base station.

The base station may be working in a normal power state (or a non-energy-saving state) during which the base station may send/transmit downlink signals and receive uplink signals with a normal transmission power (or full transmission power). A wireless device may receive downlink signals and send/transmit uplink signals with the base station in the normal power state. The wireless device may be indicated to perform one or more power saving operations, the wireless device may be indicated to perform one or more power saving operations, for example, if the base station is in the normal power state. The wireless device may be indicated to perform one or more power saving operations, in a manner such as described herein, for example, with respect to FIG. 22, FIG. 28, FIG. 29A, FIG. 29B, FIG. 30A, FIG. 30B and/or FIG. 31.

The wireless device may periodically monitor the search space for receiving DCI indicating the energy saving for the base station based on configuration parameters of the search space (e.g., as shown in FIG. 48). A periodicity of PDCCH occasion for send/transmitting the DCI may be comprised in the RRC message for the search space. The periodicity of PDCCH occasion for sending/transmitting the DCI may be a quantity/number of slots, for example 10 slots (e.g., as shown in FIG. 46). The base station may determine to transition from the normal power state to an energy saving state. The base station may determine to transition from the normal power state to an energy saving state, for example, based on wireless device assistance information from the wireless device on traffic pattern, data volume. The base station may determine the transition based on uplink signal measurement/assessment/detection at the base station. The base station may determine the transition based on information exchange from a neighbor base station via an interface (e.g., X2 interface), wherein the information exchange may comprise indication of the transition, traffic load information, etc.

The base station may send/transmit the DCI, in the PDCCH transmission occasion of the search space, indicating that the base station will reduce downlink transmission power by a power offset value of the plurality of power offset values. The base station may send/transmit the DCI, in the PDCCH transmission occasion of the search space, indicating that the base station will reduce downlink transmission power by a power offset value of the plurality of power offset values, for example, based on the determination of the transition from the normal power state to the energy saving state.

The wireless device may determine a reduced transmission power of downlink transmission signals/channels (e.g., SSB/CSI-RS/PDSCH/DM-RS/PT-RS, etc.). The wireless device may determine a reduced transmission power of downlink transmission signals/channels, for example, after (e.g., in response to) receiving the DCI indicating the energy saving for the base station. The wireless device may determine a reduced transmission power of downlink transmission signals/channels (SSB/CSI-RS/PDSCH/DM-RS/PT-RS, etc.), in a manner such as described herein, for example, with respect to FIG. 41, FIG. 42, FIG. 43, FIG. 44, FIG. 45, FIG. 46 and/or FIG. 47. The wireless device may measure the downlink signals/channels with the reduced transmission power, in a manner such as described herein, for example, with respect to FIG. 41, FIG. 42, FIG. 43, FIG. 44, FIG. 45, FIG. 46 and/or FIG. 47.

A base station may send/transmit downlink power adjustment indication in periodic transmission occasions. The base station may send/transmit downlink power adjustment indication in periodic transmission occasions (e.g., periodicity 10 slots in FIG. 48). A base station may send/transmit downlink power adjustment indication in a minimal gap. The minimal gap may be defined/configured by the base station, or predefined. The base station may keep unchanged of the transmission power of the downlink signals/channels between two continuous downlink power adjustment indications. Maintaining the transmission power (for SSB/CSI-RS/PDSCH/DM-RS/PT-RS) unchanged with a minimum time duration may enable the wireless device to correctly measure the channel quality (e.g., pathloss, RSRP, CSI report, etc.).

The base station may adjust downlink signal/channel transmission power jointly or separately. The base station may adjust downlink signal/channel transmission power jointly or separately, for example, if configured with multiple cells. The base station may adjust downlink signal/channel transmission power jointly or separately, in a manner such as described herein, for example, with respect to FIG. 10A, FIG. 10B, FIG. 21A and/or FIG. 21B.

A base station may send/transmit a downlink power adjustment indication for all cells (in active state) jointly. A downlink power adjustment indication may be applied for all active cells, of a plurality of cells, comprising a PCell and one or more active SCells. A downlink power adjustment indication may be applied for all active cells, of a plurality of cells, comprising a PCell and one or more active SCells, in a manner such as herein, for example, with respect to FIG. 41, FIG. 42, FIG. 43, FIG. 44, FIG. 45, FIG. 46 and/or FIG. 47. The power adjustment indication may be sent/transmitted via the PCell.

The base station may send/transmit separate per-cell downlink power adjustment indication via a cell of a plurality of cells. A per cell downlink power adjustment indication may be applied only on a cell on which the base station sends/transmits the per-cell power adjustment indication. A first power adjustment indication received on a PCell may be applied on the PCell. A second power adjustment indication received on an activated SCell may be applied on the activated SCell, etc.

The base station may send/transmit per cell group downlink power adjustment indication for a group of cells of a plurality of cells. A per cell group downlink power adjustment indication may be applied on a cell group comprising a cell on which the base station sends/transmits the per cell group power adjustment indication. The base station may send/transmit RRC messages comprising configuration parameters of energy saving operation, wherein the configuration parameters may indicate a plurality of cells are grouped into one or more cell groups.

A wireless device may measure first measurement values, for example, based on reference signals sent (e.g., transmitted) with a first power in a cell. A wireless device may measure first RSRP values, for example, based on SSBs sent (e.g., transmitted) with a first power in a cell. The wireless device may average second RSRP values, greater than a first threshold for cell measurement in a non-energy-saving state, among the first RSRP values. The wireless device may determine a first layer 3 RSRP value for the cell, for example, based on the averaging the second RSRP values. The wireless device may send (e.g., transmit) first cell measurement report, for example, based on the first layer 3 RSRP value. The wireless device may receive a command indicating a transition to an energy saving state and a second power of the SSBs for energy saving. The wireless device may measure third RSRP values, for example, based on the SSBs being sent (e.g., transmitted) with the second power. The wireless device may determine a second threshold for cell measurement in the energy saving state. The wireless device may average fourth RSRP values, greater than the second threshold, among the third RSRP values. The wireless device may determine a second layer 3 RSRP value, for example, based on the averaging the fourth RSRP values. The wireless device may send (e.g., transmit) second cell measurement report, for example, based on the second layer 3 RSRP values.

A wireless device may measure values of reference signals of a cell, for example, based on a command indicating a transition of the cell from one energy state to another energy state. A wireless device may receive a command indicating a transition of a cell from the non-energy-saving state to an energy saving state. The wireless device may measure, for example, based on the command, RSRP values of SSBs of the cell in the energy saving state. The wireless device may average, as a first cell measurement, first RSRP values, greater than a threshold, among the RSRP values, wherein the threshold may be determined for cell measurement in the energy saving state. The wireless device may send (e.g., transmit) cell measurement report, for example, based on filtering the first cell measurement.

The command may comprise at least one message. The command may comprise at least one of: DCI, MAC CE, and/or RRC message. The wireless device may measure the RSRP values, for example, based on the SSBs after receiving the command. The cell measurement report may comprise a layer 3 filtered RSRP value, for example, based on filtering the first cell measurement with a layer 3 filter, wherein the layer 3 filtered RSRP value may not be based on one or more first RSRP values measured over the SSBs of the cell in the non-energy-saving state before receiving the command.

The wireless device may reset the layer 3 filter, for example, after or in response to receiving the command. The wireless device may reset, for example, after or in response to receiving the command, the layer 3 filter based on determining that the layer 3 filtered RSRP value may not be based on the one or more first RSRP values measured over the SSBs of the cell in the non-energy-saving state. The wireless device may measure the one or more first RSRP values, for example, based on receiving the SSBs in one or more first SSB measurement time windows of a SMTC, wherein the SSBs are sent (e.g., transmitted) by a base station with a first downlink transmission power in the non-energy-saving state.

The wireless device may obtain a layer 3 filtered measurement value, for example, based on filtering a layer 1 measurement with a layer 3 filter coefficient associated with a layer 3 filter. The wireless device may obtain the layer 3 filtered RSRP value, for example, based on filtering the first cell measurement with a layer 3 filter coefficient associated with a layer 3 filter. The command may indicate a power offset of the SSBs for the cell in the energy saving state.

The wireless device may measure the measurement values. The wireless device may measure the RSRP values, for example, based on receiving the SSBs in SSB measurement time windows of the SMTC, wherein the SSBs may be sent (e.g., transmitted) by a base station with a second downlink transmission power determined, for example, based on a first downlink transmission power and the power offset, wherein the first downlink transmission power is for the cell in the non-energy-saving state.

The threshold may be configured by the base station in a message (e.g., radio resource control message) for the energy saving state. The radio resource control message may comprise: the threshold for the cell measurement in the energy saving state and a second threshold for the cell measurement in the non-energy-saving state.

The wireless device may receive configuration parameters of the reference signals (e.g., SSBs) of the cell in the non-energy-saving state. The wireless device may measure second RSRP values of the SSBs of the cell in the non-energy-saving state. The wireless device may average, as a second cell measurement, third RSRP values, greater than the second threshold, among the second RSRP values, wherein the second threshold may be for the cell measurement in the non-energy-saving state. The wireless device may send (e.g., transmit) second cell measurement report, for example, based on filtering the second cell measurement.

The wireless device may receive the command at a first slot. The wireless device may measure the RSRP values, for example, based on receiving the SSBs at a second slot, wherein a time gap between the first slot and the second slot may be greater than a time threshold for an application of a transition from the non-energy-saving state to the energy saving state and the SSBs may be sent (e.g., transmitted) by the base station at the second slot with a second downlink transmission power in the energy saving state.

The time threshold may be configured in the messages. The wireless device may send (e.g., transmit) a radio resource control message indicating the time threshold. The radio resource control message may comprise a wireless device capability information comprising the time threshold. The radio resource control message may comprise a wireless device assistance information comprising the time threshold.

The wireless device may measure second measurement values, for example, based on the reference signals sent (e.g., transmitted) by the base station with first transmission power in a first energy state. The wireless device may measure, for example, in a time duration between the first slot and the second slot, second RSRSP values based on the SSBs being sent (e.g., transmitted) by the base station with first transmission power in the non-energy-saving state.

The wireless device may receive a layer 3 filter coefficient for a measurement of the measurement (e.g., RSRP) values. The filtering the first cell measurement may comprise: measuring second RSRP values of the SSBs in a second SSB measurement time window in the energy saving state; averaging, as a second cell measurement, third RSRP values, greater than the threshold, among the second RSRP values; and obtaining a layer 3 RSRP value, for example, based on filtering the first cell measurement and the second cell measurement based on the layer 3 filter coefficient.

The messages may comprise configuration parameters of the reference signal measurement time configuration for the cell measurement. The messages may comprise configuration parameters of the SSB measurement time configuration (SMTC) for the cell measurement, wherein the configuration parameters may comprise at least one of: a periodicity of an SSB measurement time window, a time offset of the SSB measurement time window relative to a start subframe of a system frame comprising the SSB measurement time window and a duration of the SSB measurement time window.

The command may comprise a command field with at least an indication of a power offset value of a plurality of power offsets, relative to a first transmission power of the cell in a first energy state. The command may comprise a command field with a number of bits, a codepoint of the command field indicating a power offset value of a plurality of power offsets, relative to a first transmission power of the cell in the non-energy-saving state. The plurality of power offsets may be preconfigured values. The command may comprise a DCI. The DCI may be different from at least one of: DCI format 2_0 for indication of slot format, available RB sets, COT duration and search space set group switching, DCI format 2_1 for indication of downlink pre-emption, DCI format 2_2 for indication of TPC commands for PUCCH and PUSCH, DCI format 2_3 for indication of TPC commands for SRS transmissions, DCI format 2_4 for indication of uplink cancellation and DCI format 2_6 for indication of power saving information outside DRX Active time for one or more wireless devices. The DCI may have a same DCI size with at least one of: DCI format 2_0, DCI format 2_1, DCI format 2_2, DCI format 2_3, DCI format 2_4 and DCI format 2_6.

The wireless device may send (e.g., transmit) a wireless device assistance information indicating a transition of the base station from a non-energy-saving state to an energy saving state. The wireless device may receive the command, for example, based on sending (e.g., transmitting) the wireless device assistance information indicating the transition.

The wireless device assistance information may be a second message (e.g., RRC message) sent (e.g., transmitted) from the wireless device to the base station. The wireless device assistance information may be an uplink control information (UCI) sent (e.g., transmitted) via a physical uplink channel to the base station.

The energy saving state may comprise a second time duration when the reference signals (e.g., SSBs) may be sent (e.g., transmitted) with a reduced transmission power determined, for example, based on the first downlink transmission power and the power offset value. The energy saving state may comprise a second time duration when the base station may stop a transmission of at least one of: a PDSCH and a PDCCH. The energy saving state may comprise a second time duration when the base station may stop the receiving uplink signals.

The energy saving state may comprise a second time duration when the reference signals (e.g., SSBs) may be sent (e.g., transmitted) with a reduced number of transmission ports. The energy saving state may comprise a second time duration when the base station sends (e.g., transmits) the SSBs with a second transmission periodicity value greater than a first transmission periodicity value configured for the non-energy-saving state. Larger transmission periodicity value for the SSBs may allow the base station to send (e.g., transmit) the SSBs less frequently in the energy saving state than the non-energy-saving state.

The wireless device may transition a cell from a non-energy-saving state to an energy saving state, for example, based on receiving the command. The wireless device may receive the SSBs sent (e.g., transmitted) by the base station with a first downlink transmission power, for example, based on the base station being in a non-energy-saving state.

The non-energy-saving state may comprise a time duration when the wireless device receives from the base station downlink signals and receives uplink signals. The downlink signals may comprise at least one of: SSBs/SIBs/PDSCH/PDCCH/CSI-RS/DM-RS. The uplink signals may comprise at least one of: CSI report/PUSCH/PUCCH/SRS/RACH.

The wireless device may receive configuration parameters of a search space for sending (e.g., transmitting) the message/command (e.g., DCI) comprising the power offset value. The search space may be a type 0 common search space, wherein the configuration parameters may be comprised in master information block (MIB) message, wherein the base station may send (e.g., transmit) the MIB message via a physical broadcast channel (PBCH) and indicating system information of the base station. The search space may be a type 0 common search space, wherein the configuration parameters may be comprised in system information block 1 (SIB 1) message, wherein the base station may send (e.g., transmit) the SIB 1 message, scheduled by a physical downlink control channel, indicating at least one of: information for evaluating if a wireless device is allowed to access a cell of the base station, information for scheduling of other system information, radio resource configuration information that may be common for all wireless devices and barring information applied to access control. The search space may be a type 2 common search space, wherein the type 2 common search space may be further used for downlink paging message transmission. The search space may be a type 3 common search space, wherein the type 3 common search space may be further used for transmission, via a cell, of a second group common DCI with CRC bits scrambled by at least one of: INT-RNTI, SFI-RNTI, CI-RNTI, TPC-PUSCH-RNTI, TPC-PUCCH-RNTI, TPC-SRS-RNTI, PS-RNTI, C-RNTI, MCS-C-RNTI and CS-RNTI. The configuration parameters may comprise a RNTI for a transmission of the DCI, wherein the DCI may be a group common DCI. The wireless device may receive the DCI, for example, based on CRC bits of the DCI being scrambled by the RNTI. The DCI may have a same DCI format as a DCI format 1_0. The RNTI associated with the DCI may be different from a C-RNTI identifying a specific wireless device. The DCI may have a same DCI format as at least one of: DCI format 2_0, DCI format 2_1, DCI format 2_2, DCI format 2_3, DCI format 2_4 and DCI format 2_6. The RNTI associated with the DCI may be different from: SFI-RNTI associated with the DCI format 2_0, an INT-RNTI associated with DCI format 2_1, a TPC-PUSCH-RNTI associated with a DCI format 2_2 for indication of TPC commands for PUCCH and PUSCH, a TPC-PUCCH-RNTI associated with a DCI format 2_3 for indication of TPC commands for SRS transmissions, a cancellation RNTI (CI-RNTI) associated with the DCI format 2_4, a power saving RNTI (PS-RNTI) associated with the DCI format 2_6.

A wireless device may receive a command indicating a transition of a cell from the non-energy-saving state to an energy saving state. The wireless device may measure RSRP values of SSBs of the cell in the energy saving state, for example, based on the command. The wireless device may determine a threshold for cell measurement in the energy saving state. The wireless device may determine a first cell measurement, for example, based on: averaging first RSRP values of the RSRP values in response the first RSRP values being greater than the threshold and the highest RSRP value among the RSRP values in response to none of the RSRP values being greater than the threshold. The wireless device may send (e.g., transmit) cell measurement report based on filtering the first cell measurement.

A wireless device may receive messages indicating a downlink transmission power of reference signals (e.g., SSBs). The wireless device may receive a command indicating a power offset for the SSBs. The wireless device may measure, for example, after or in response to receiving the command, RSRP values over the SSBs. The wireless device may scale the RSRP values, for example, based on the power offset. The wireless device may average, as a first cell measurement, first RSRP values, among the scaled RSRP values, greater than a threshold. The wireless device may send (e.g., transmit) cell measurement report, for example, based on filtering the first cell measurement.

A wireless device may receive messages indicating a downlink transmission power of reference signals (e.g., SSBs). The wireless device may measure, for obtaining a first RSRP value, the SSBs in a first SSB measurement window. The wireless device may send (e.g., transmit) cell and beam measurement report, for example, based on the first RSRP values. The wireless device may receive a command indicating to stop a transmission of the SSBs. The wireless device may skip, for example, after or in response to receiving the command, measuring the SSBs during which the SSBs may be stopped. The wireless device may skip sending (e.g., transmitting) the cell and beam measurement report, for example, based on skipping the measuring.

A wireless device may perform a method comprising multiple operations. A wireless device may receive one or more messages. The one or more messages may indicate an initial power threshold for cell measurement and a reduced power threshold for cell measurement that is lower than the initial power threshold for cell measurement. The wireless device may receive an indication of a transition, associated with a base station, to an energy saving state. The wireless device may determine, for each of a plurality of reference signals, a reference signal received power (RSRP) value (e.g., of a plurality of RSRP values). The wireless device may determine an average of RSRP values (e.g., an average of first RSRP values), for the plurality of reference signals, that are greater than the reduced power threshold. The wireless device may transmit a message, and the message may comprise an indication of the average of the RSRP values (e.g., the average of the first RSRP values). The one or more messages may further indicate a downlink transmission. The downlink transmission may comprise a downlink transmission of reference signals. The reference signals may comprise synchronization signal blocks (SSBs) and/or channel state information reference signals (CSI-RSs). The downlink transmission may comprise a downlink transmission of synchronization signal blocks (SSBs). The SSBs may comprise the plurality of reference signals. The receiving the indication of a transition to the energy saving state may comprise receiving a message, and the message may comprise a power offset of the SSBs relative to the initial power threshold for cell measurement. The wireless device may receive a command indicating that transmission of synchronization signal blocks (SSBs) is stopped. The wireless device may skip, based on the command, measurement of the SSBs during which the transmission of the SSBs is stopped. The wireless device may skip, based on the skipping the measurement of the SSBs, transmission of a measurement report. Transmitting the message may comprise transmitting a cell measurement report, and the cell measurement report may comprise a layer 3 filtered RSRP value. The determining the average of the first RSRP values that are greater than the reduced power threshold may be after the receiving the indication of the transition, associated with the base station, to the energy saving state. The wireless device may transmit a message, and the message may comprise wireless device assistance information requesting a transition of the base station from a non-energy-saving state to the energy saving state. The wireless device may receive the indication of the transition, associated with the base station, to the energy saving state. The receiving may comprise receiving at least one of: downlink control information (DCI); a medium access control (MAC) control element (CE); and a radio resource control (RRC) message. The wireless device may receive, during an energy saving state and using one or more beams associated with a reference signal corresponding to an RSRP value of the RSRP values, a downlink signal. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to communicate with the wireless device. A computer-readable medium may store instructions that, when executed, cause performance of the described method, additional operations, and/or include the additional elements.

A base station may perform a method comprising multiple operations. A base station may transmit one or more messages, and the one or more messages may indicate an initial power threshold for cell measurement and a reduced power threshold for cell measurement that is lower than the initial power threshold for cell measurement. The base station may transmit an indication of a transition, associated with the base station, to an energy saving state. The base station may receive a message, and the message may comprise an indication of an average of first reference signal received power (RSRP) values, for a plurality of reference signals, that are greater than the reduced power threshold. The one or more messages may further indicate a downlink transmission of synchronization signal blocks (SSBs). The SSBs may comprise the plurality of reference signals (e.g., respectively associated with a plurality of RSRP values). The transmitting the indication of a transition to the energy saving state may comprise transmitting a message, and the message may comprise a power offset of the SSBs relative to the initial power threshold for cell measurement. The base station may transmit a command indicating that transmission of synchronization signal blocks (SSBs) is stopped. The base station may skip, based on the command, receiving measurement of the SSBs during which the transmission of the SSBs is stopped. The base station may skip, based on the skipping the measurement of the SSBs, receiving transmission of a measurement report. Receiving the message may comprise receiving a cell measurement report, and the cell measurement report may comprise a layer 3 filtered RSRP value. The receiving the message may be after the transmitting the indication of the transition, associated with the base station, to the energy saving state. The base station may receive a message, and the message may comprise wireless device assistance information requesting a transition of the base station from a non-energy-saving state to the energy saving state. The transmitting the indication of a transition to the energy saving state may be based on receiving the message. The base station may comprise one or more processors; and memory storing instructions that, when executed by the one or more processors, cause the base station to perform the described method, additional operations and/or include the additional elements. A system may comprise a base station configured to perform the described method, additional operations and/or include the additional elements; and a wireless device configured to communicate with the base station. A computer-readable medium may store instructions that, when executed, cause performance of the described method, additional operations, and/or include the additional elements.

A wireless device may perform a method comprising multiple operations. A wireless device may receive one or more first messages indicating a downlink transmission power of synchronization signal blocks (SSBs) and a threshold for cell measurement. The wireless device may receive one or more second messages indicating a transition associated with a base station to an energy saving state and a power offset of the downlink transmission power of the SSBs. The wireless device may determine, for each of the SSBs, a reference signal received power (RSRP) value. The wireless device may adjust each RSRP value (e.g., of a plurality of RSRP values) using the power offset. The wireless device may determine an average of first RSRP values, of the adjusted RSRP values, that are greater than the threshold. The wireless device may transmit a message, and the message may comprise an indication of the average of the first RSRP values. The one or more second messages may comprise a command indicating that transmission of the SSBs is stopped. The wireless device may skip, based on the command, measurement of the SSBs during which the transmission of the SSBs is stopped. The wireless device may skip, based on the skipping the measurement of the SSBs, transmission of a measurement report. The one or more first messages may further indicate a reduced power threshold for cell measurement during an energy saving state. Transmitting the message may comprise transmitting a cell measurement report, and the cell measurement report may comprise a layer 3 filtered RSRP value. Determining the average of the adjusted RSRP values that are greater than the threshold may be after the receiving the one or more second messages. The wireless device may transmit a message, and the message may comprise wireless device assistance information requesting a transition of the base station from a non-energy-saving state to the energy saving state. The one or more second messages may comprise at least one of: downlink control information (DCI); a medium access control (MAC) control element (CE); and a radio resource control (RRC) message. The wireless device may receive, during an energy saving state and using one or more beams associated with a reference signal corresponding to an RSRP value of the first RSRP values, a downlink signal. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to communicate with the wireless device. A computer-readable medium may store instructions that, when executed, cause performance of the described method, additional operations, and/or include the additional elements.

A wireless device may perform a method comprising multiple operations. A wireless device may receive one or more first messages. The one or more first messages may indicate a threshold for cell measurement and a downlink transmission power of synchronization signal blocks (SSBs). The wireless device may receive one or more second messages. The one or more second messages may comprise an indication of a transition associated with a base station to an energy saving state and a command indicating that transmission of the SSBs is stopped. The wireless device may skip, based on the command, measurement of the SSBs during which the transmission of the SSBs is stopped. The wireless device may skip, based on the skipping the measurement of the SSBs, transmission of a measurement report. The wireless device may determine, for each of a plurality of reference signals, a reference signal received power (RSRP) value, before the receiving the one or more second messages. The wireless device may determine an average of RSRP values, for the plurality of reference signals, that are greater than the threshold. The wireless device may transmit a message comprising an indication of the average of the RSRP values. The one or more first messages may further indicate a reduced power threshold for cell measurement during an energy saving state. The wireless device may transmit a message, and the message may comprise wireless device assistance information requesting a transition of the base station from a non-energy-saving state to the energy saving state. The one or more second messages may comprise at least one of: downlink control information (DCI); a medium access control (MAC) control element (CE); and a radio resource control (RRC) message. The wireless device may receive a second command indicating that transmission of the SSBs is resumed. The wireless device may transmit, based measurement of the SSBs, a measurement report. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to communicate with the wireless device. A computer-readable medium may store instructions that, when executed, cause performance of the described method, additional operations, and/or include the additional elements.

A wireless device may perform a method comprising multiple operations. A wireless device may receive one or more messages. The one or more messages may indicate a downlink transmission power of synchronization signal blocks (SSBs) and a threshold for cell measurement. The wireless device may receive a command indicating a power offset of the downlink transmission power. The wireless device may measure, in response to receiving the command, reference signal received power (RSRP) values of the SSBs transmitted with the downlink transmission power. The wireless device may scale the RSRP values using the power offset. The wireless device may determine a first cell measurement based on averaging first RSRP values, of the scaled RSRP values, that are greater than the threshold. The wireless device may transmit a cell measurement report based on the first cell measurement. The command may comprise at least one of: downlink control information (DCI); medium access control (MAC) control element (CE); and radio resource control (RRC) message. The wireless device may measure the RSRP values based on the SSBs after receiving the command. The cell measurement report may comprise a layer 3 filtered RSRP value based on filtering the first cell measurement with a layer 3 filter. The layer 3 filtered RSRP value may not be based on one or more first RSRP values measured over the SSBs of the cell in the non-energy-saving state before receiving the command. The wireless device may reset in response to receiving the command. The layer 3 filter based on determining that the layer 3 filtered RSRP value may not be based on the one or more first RSRP values measured over the SSBs of the cell in the non-energy-saving state. The wireless device may measure the one or more first RSRP values based on receiving the SSBs in one or more first SSB measurement time windows of a SSB measurement time configuration (SMTC). The SSBs may be transmitted by a base station with a first downlink transmission power in the non-energy-saving state. The wireless device may obtain the layer 3 filtered RSRP value based on filtering the first cell measurement with a layer 3 filter coefficient associated with a layer 3 filter. The command may indicate a power offset of the SSBs for the cell in the energy saving state. The wireless device may measure the RSRP values based on receiving the SSBs in SSB measurement time windows of the SMTC. The SSBs may be transmitted by a base station with a second downlink transmission power determined based on a first downlink transmission power and the power offset. The first downlink transmission power may be for the cell in the non-energy-saving state. The threshold may be configured by the base station in a radio resource control message for the energy saving state. The radio resource control message may comprise the threshold for the cell measurement in the energy saving state and a second threshold for the cell measurement in the non-energy-saving state. The wireless device may receive configuration parameters of the SSBs of the cell in the non-energy-saving state. The wireless device may measure second RSRP values of the SSBs of the cell in the non-energy-saving state. The wireless device may average, as a second cell measurement, third RSRP values, greater than the second threshold, among the second RSRP values. The second threshold may be for the cell measurement in the non-energy-saving state. The wireless device may transmit second cell measurement report based on filtering the second cell measurement. The wireless device may receive the command at a first slot. The wireless device may measure the RSRP values based on receiving the SSBs at a second slot. A time gap between the first slot and the second slot may be greater than a time threshold for an application of a transition from the non-energy-saving state to the energy saving state. The SSBs may be transmitted by the base station at the second slot with a second downlink transmission power in the energy saving state. The time threshold may be configured in the messages. The wireless device may transmit, to a base station, a radio resource control message indicating the time threshold. The radio resource control message may comprise a wireless device capability information. The wireless device capability information may comprise the time threshold. The radio resource control message may comprise a wireless device assistance information. The wireless device assistance information may comprise the time threshold. The wireless device in a time duration between the first slot and the second slot, measuring second RSRSP values based on the SSBs being transmitted by the base station with first transmission power in the non-energy-saving state. The wireless device may receive a layer 3 filter coefficient for a measurement of the RSRP values. The filtering the first cell measurement may comprise: measuring second RSRP values of the SSBs in a second SSB measurement time window in the energy saving state; averaging, as a second cell measurement, third RSRP values, greater than the threshold, among the second RSRP values; and obtaining a layer 3 RSRP value based on filtering the first cell measurement and the second cell measurement based on the layer 3 filter coefficient. The filtering the first cell measurement may further comprise the messages. The messages may comprise configuration parameters of the SSB measurement time configuration (SMTC) for the cell measurement. The configuration parameters may comprise at least one of: a periodicity of a SSB measurement time window; a time offset of the SSB measurement time window relative to a start subframe of a system frame comprising the SSB measurement time window; and a duration of the SSB measurement time window. The command may comprise a command field with a number of bits, a codepoint of the command field indicating a power offset value of a plurality of power offsets, relative to a first transmission power of the cell in the non-energy-saving state. The plurality of power offsets may be preconfigured values. The command may comprise a DCI. The DCI may be different from at least one of: DCI format 2_0 for indication of slot format, available RB sets, COT duration and search space set group switching; DCI format 2_1 for indication of downlink pre-emption; DCI format 2_2 for indication of transmission power control (TPC) commands for PUCCH and PUSCH; DCI format 2_3 for indication of TPC commands for SRS transmissions; DCI format 2_4 for indication of uplink cancellation; and DCI format 2_6 for indication of power saving information outside DRX Active time for one or more wireless devices. The command may comprise a DCI. The DCI may have a same DCI size with at least one of: DCI format 2_0; DCI format 2_1; DCI format 2_2; DCI format 2_3; DCI format 2_4; and DCI format 2_6. The wireless device may transmit a wireless device assistance information. The wireless device assistance information may indicate a transition of the base station from a non-energy-saving state to an energy saving state. The wireless device may receive the command based on transmitting the wireless device assistance information indicating the transition. The wireless device assistance information may be a second RRC message transmitted from the wireless device to the base station. The wireless device assistance information may be an uplink control information (UCI) transmitted via a physical uplink channel to the base station. The energy saving state may comprise a second time duration when the SSBs may be transmitted with a reduced transmission power. The reduced transmission power may be determined based on the first downlink transmission power and the power offset value. The energy saving state may comprise a second time duration when the base station stops a transmission of at least one of: a physical downlink shared channel (PDSCH); and a physical downlink control channel (PDCCH). The energy saving state may comprise a second time duration when the base station stops the receiving uplink signals. The wireless device may transition a cell from a non-energy-saving state to an energy saving state based on receiving the command. The wireless device may receive the SSBs transmitted by the base station with a first downlink transmission power based on the base station being in a non-energy-saving state. The non-energy-saving state may comprise a time duration when the wireless device may receive from the base station downlink signals and may receive uplink signals. The downlink signals may comprise at least one of: one or more synchronization signal blocks (SSBs); SIBs; a physical downlink shared channel (PDSCH); a physical downlink control channel (PDCCH); a channel state information reference signal (CSI-RS); and a downlink demodulation reference signal (DM-RS). The uplink signals may comprise at least one of: channel state information (CSI) reports; a physical uplink shared channel (PUSCH); a physical uplink control channel (PUCCH); a sounding reference signal (SRS); and a random access channel (RACH). The messages may further comprise configuration parameters of a search space for transmitting a command. The command may comprise a power offset value for the transition. The search space may be a type 0 common search space. The configuration parameters may be comprised in master information block (MIB) message. The base station may transmit the MIB message via a physical broadcast channel (PBCH). The MIB message may indicate system information of the base station. The search space may be a type 0 common search space. The configuration parameters may be comprised in system information block 1 (SIB1) message. The base station may transmit the SIB1 message, scheduled by a physical downlink control channel. The SIB1 message may indicate at least one of: information for evaluating if a wireless device may be allowed to access a cell of the base station; information for scheduling of other system information; radio resource configuration information that may be common for all wireless devices; and barring information applied to access control. The search space may be a type 2 common search space. The type 2 common search space may be further used for downlink paging message transmission. The search space may be a type 3 common search space. The type 3 common search space may be further used for transmission, via a cell, of a second group common DCI with CRC bits scrambled by at least one of: INT-RNTI; SFI-RNTI; CI-RNTI; TPC-PUSCH-RNTI; TPC-PUCCH-RNTI; and TPC-SRS-RNTI. The type 3 common search space may be further used for transmission of a second group common DCI with CRC bits scrambled by at least one of: PS-RNTI; C-RNTI; MCS-C-RNTI; and CS-RNTI, in response to the cell being a primary cell of a plurality of cells of the base station. The configuration parameters may comprise a radio network temporary identifier (RNTI) for a transmission of the command. The command may be a group common DCI. The wireless device may receive the group common DCI based on cyclic redundancy check (CRC) bits of the DCI being scrambled by the RNTI. The command may have a same DCI format as a DCI format 1_0. The RNTI associated with the command may be different from a C-RNTI identifying a specific wireless device. The command may have a same DCI format as at least one of: DCI format 2_0; DCI format 2_1; DCI format 2_2; DCI format 2_3; DCI format 2_4; and DCI format 2_6. The RNTI associated with the command may be different from: a slot format indication RNTI (SFI-RNTI) associated with the DCI format 2_0; an interruption RNTI (INT_RNTI) associated with DCI format 2_1; a TPC-PUSCH-RNTI associated with a DCI format 2_2 for indication of transmission power control (TPC) commands for PUCCH and PUSCH; a TPC-PUCCH-RNTI associated with a DCI format 2_3 for indication of TPC commands for SRS transmissions; and a cancellation RNTI (CI-RNTI) associated with the DCI format 2_4; and a power saving RNTI (PS-RNTI) associated with the DCI format 2_6. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to communicate with the wireless device. A computer-readable medium may store instructions that, when executed, cause performance of the described method, additional operations, and/or include the additional elements.

A wireless device may perform a method comprising multiple operations. A wireless device may receive a command indicating a transition of a cell from the non-energy-saving state to an energy saving state. The wireless device may measure, based on the command, reference signal received power (RSRP) values of synchronization signal blocks (SSBs) of the cell in the energy saving state. The wireless device may determine a threshold for cell measurement in the energy saving state. The wireless device may determine a first cell measurement based on: averaging first RSRP values of the RSRP values in response the first RSRP values being greater than the threshold; and the highest RSRP value among the RSRP values in response to none of the RSRP values being greater than the threshold. The wireless device may transmit cell measurement report based on filtering the first cell measurement. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to communicate with the wireless device. A computer-readable medium may store instructions that, when executed, cause performance of the described method, additional operations, and/or include the additional elements.

A wireless device may perform a method comprising multiple operations. A wireless device may receive messages indicating a downlink transmission power of synchronization signal blocks (SSBs). The wireless device may receive a command indicating a power offset for the SSBs. The wireless device may measure, in response to receiving the command, RSRP values over the SSBs. The wireless device may scale the RSRP values based on the power offset. The wireless device may average, as a first cell measurement, first RSRP values, among the scaled RSRP values, greater than a threshold. The wireless device may transmit cell measurement report based on filtering the first cell measurement. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to communicate with the wireless device. A computer-readable medium may store instructions that, when executed, cause performance of the described method, additional operations, and/or include the additional elements.

A wireless device may perform a method comprising multiple operations. A wireless device may receive messages indicating a downlink transmission power of synchronization signal blocks (SSBs). The wireless device may measure, for obtaining a first reference signal received power (RSRP) value, the SSBs in a first SSB measurement window. The wireless device may transmit cell and beam measurement report based on the first RSRP values. The wireless device may receive a command indicating to stop a transmission of the SSBs. The wireless device may skip, in response to receiving the command, measuring the SSBs during which the SSBs are stopped. The wireless device may skip, based on skipping the measuring, transmitting the cell and beam measurement report. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to communicate with the wireless device. A computer-readable medium may store instructions that, when executed, cause performance of the described method, additional operations, and/or include the additional elements.

A wireless device may perform a method comprising multiple operations. A wireless device may measure first reference signal received power (RSRP) values based on synchronization signal blocks (SSBs) transmitted with a first power in a cell. The wireless device may average second RSRP values, greater than a first threshold for cell measurement in a non-energy-saving state, among the first RSRP values. The wireless device may determine a first layer 3 RSRP value for the cell based on the averaging the second RSRP values. The wireless device may transmit first cell measurement report based on the first layer 3 RSRP value. The wireless device may receive a command. The command may indicate a transition to an energy saving state and a second power of the SSBs for energy saving. The wireless device may measure third RSRP values based on the SSBs being transmitted with the second power. The wireless device may determine a second threshold for cell measurement in the energy saving state. The wireless device may average fourth RSRP values, greater than the second threshold, among the third RSRP values. The wireless device may determine a second layer 3 RSRP value based on the averaging the fourth RSRP values. The wireless device may transmit second cell measurement report based on the second layer 3 RSRP values. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to communicate with the wireless device. A computer-readable medium may store instructions that, when executed, cause performance of the described method, additional operations, and/or include the additional elements.

A wireless device may perform a method comprising multiple operations. A wireless device may receive a command indicating a transition of a cell from the non-energy-saving state to an energy saving state. The wireless device may measure, based on the command, reference signal received power (RSRP) values of synchronization signal blocks (SSBs) of the cell in the energy saving state. The wireless device may average, as a first cell measurement, first RSRP values, greater than a threshold, among the RSRP values. The threshold may be determined for cell measurement in the energy saving state. The wireless device may transmit cell measurement report based on filtering the first cell measurement. The wireless device may comprise one or more processors; and memory storing instructions that, when executed by the one or more processors, cause the wireless device to perform the described method, additional operations and/or include the additional elements. A system may comprise a wireless device configured to perform the described method, additional operations and/or include the additional elements; and a base station configured to communicate with the wireless device. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, or other 3GPP or non-3 GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs); and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the scope of the descriptions herein. Accordingly, the foregoing description is by way of example only, and is not limiting.

## Claims

1. A method comprising:
receiving, by a wireless device, one or more messages indicating:
an initial power threshold for cell measurement; and
a reduced power threshold for cell measurement that is lower than the initial power threshold for cell measurement;
receiving an indication of a transition, associated with a base station, to an energy saving state;
determining, for each of a plurality of reference signals, a reference signal received power, RSRP, value;
determining an average of RSRP values, for the plurality of reference signals, that are greater than the reduced power threshold; and
transmitting a message comprising an indication of the average of the RSRP values.

2. The method of claim 1, wherein the one or more messages further indicates a downlink transmission of synchronization signal blocks, SSBs, wherein the SSBs comprise the plurality of reference signals, and wherein the receiving the indication of a transition to the energy saving state comprises receiving a message comprising a power offset of the SSBs relative to the initial power threshold for cell measurement.

3. The method of any one of claims 1 to 2, further comprising:
receiving a command indicating that transmission of synchronization signal blocks, SSBs, is stopped;
skipping, based on the command, measurement of the SSBs during which the transmission of the SSBs is stopped; and
skipping, based on the skipping the measurement of the SSBs, transmission of a measurement report.

4. The method of any one of claims 1 to 3, wherein the transmitting the message comprises transmitting a cell measurement report comprising a layer 3 filtered RSRP value, wherein determining the average of the RSRP values that are greater than the reduced power threshold is after the receiving the indication of the transition, associated with the base station, to the energy saving state.

5. The method of any one of claims 1 to 4, further comprising:
transmitting a message comprising wireless device assistance information requesting a transition of the base station from a non-energy-saving state to the energy saving state.

6. The method of any one of claims 1 to 5, wherein the receiving the indication of the transition, associated with the base station, to the energy saving state comprises receiving at least one of:
downlink control information, DCI;
a medium access control, MAC, control element, CE; and
a radio resource control, RRC, message.

7. The method of any one of claims 1 to 6, further comprising:
receiving, during an energy saving state and using one or more beams associated with a reference signal corresponding to an RSRP value of the RSRP values, a downlink signal.

8. A method comprising:
transmitting, by a base station, one or more messages indicating:
an initial power threshold for cell measurement; and
a reduced power threshold for cell measurement that is lower than the initial power threshold for cell measurement;
transmitting an indication of a transition, associated with the base station, to an energy saving state; and
receiving a message comprising an indication of an average of reference signal received power, RSRP, values, for a plurality of reference signals, that are greater than the reduced power threshold.

9. The method of claim 8, wherein the one or more messages further indicates a downlink transmission of synchronization signal blocks, SSBs, wherein the SSBs comprise the plurality of reference signals, and wherein the transmitting the indication of a transition to the energy saving state comprises transmitting a message comprising a power offset of the SSBs relative to the initial power threshold for cell measurement.

10. The method of any one of claims 8 to 9, further comprising:
transmitting a command indicating that transmission of synchronization signal blocks, SSBs, is stopped;
skipping, based on the command, receiving measurement of the SSBs during which the transmission of the SSBs is stopped; and
skipping, based on the skipping the measurement of the SSBs, receiving transmission of a measurement report.

11. The method of any one of claims 8 to 10, wherein the receiving the message comprises receiving a cell measurement report comprising a layer 3 filtered RSRP value, wherein the receiving the message is after the transmitting the indication of the transition, associated with the base station, to the energy saving state.

12. The method of any one of claims 8 to 11, further comprising:
receiving a message comprising wireless device assistance information requesting a transition of the base station from a non-energy-saving state to the energy saving state, wherein the transmitting the indication of a transition to the energy saving state is based on receiving the message.

13. A computing device comprising:
one or more processors; and
memory storing instructions that, when executed by the one or more processors, cause the computing device to perform:
the method of any one of claims 1 to 7; or
the method of any one of claims 8 to 12.

14. A system comprising:
a wireless device configured to perform the method of any one of claims 1 to 7; and
a base station configured to perform the method of any one of claims 8 to 12.

15. A computer-readable medium storing instructions that, when executed, cause performance of:
the method of any one of claims 1 to 7; or
the method of any one of claims 8 to 12.

## Patentansprüche

1. Verfahren, das Folgendes umfasst:
Empfangen einer oder mehrerer Nachrichten durch eine drahtlose Vorrichtung, die Folgendes anzeigen:
einen anfänglichen Leistungsschwellenwert für die Zellmessung; und
einen reduzierten Leistungsschwellenwert für die Zellmessung, der niedriger ist als der anfängliche Leistungsschwellenwert für die Zellmessung;
Empfangen einer mit der Basisstation verbundenen Anzeige des Übergangs in einen Energiesparzustand;
Bestimmen eines Referenzsignal-Empfangsleistungs(RSRP, Reference Signal Received Power)-Werts für jedes einer Vielzahl von Referenzsignalen;
Bestimmen eines Durchschnitts der RSRP-Werte für die Vielzahl von Referenzsignalen, die größer als der reduzierte Leistungsschwellenwert sind; und
Übertragen einer Nachricht, die eine Anzeige des Durchschnitts der RSRP-Werte umfasst.

2. Verfahren nach Anspruch 1, wobei die eine oder mehreren Nachrichten ferner eine Downlink-Übertragung von Synchronisationssignalblöcken (SSBs) anzeigen, wobei die SSBs die Vielzahl von Referenzsignalen umfassen und wobei das Empfangen der Anzeige eines Übergangs in den Energiesparzustand das Empfangen einer Nachricht umfasst, die einen Leistungsversatz der SSBs relativ zum anfänglichen Leistungsschwellenwert für die Zellmessung umfasst.

3. Verfahren nach einem der Ansprüche 1 bis 2, ferner umfassend:
Empfangen einer Anweisung, die anzeigt, dass die Übertragung von Synchronisationssignalblöcken (SSBs) gestoppt wurde;
Überspringen, basierend auf der Anweisung, der Messung der SSBs, während der die Übertragung der SSBs gestoppt wird; und
Überspringen, basierend auf dem Überspringen der Messung der SSBs, der Übertragung eines Messberichts.

4. Verfahren nach einem der Ansprüche 1 bis 3, wobei das Übertragen der Nachricht das Übertragen eines Zellmessberichts umfasst, der einen gefilterten RSRP-Wert der Schicht 3 umfasst, wobei das Bestimmen des Durchschnitts der RSRP-Werte, die größer als der reduzierte Leistungsschwellenwert sind, nach dem Empfangen der mit der Basisstation verbundenen Anzeige des Übergangs in den Energiesparzustand erfolgt.

5. Verfahren nach einem der Ansprüche 1 bis 4, das ferner umfasst:
Übertragen einer Nachricht, die Informationen zur Unterstützung von drahtlosen Vorrichtungen umfasst, die einen Übergang der Basisstation von einem Nicht-Energiesparzustand in den Energiesparzustand anfordern.

6. Verfahren nach einem der Ansprüche 1 bis 5, wobei das Empfangen der mit der Basisstation verbundenen Anzeige des Übergangs in den Energiesparzustand das Empfangen mindestens eines der folgenden umfasst:
Downlink-Steuerungsinformationen, DCI;
ein MAC(Medium Access Control)-Steuerelement, oder
eine Funkressourcensteuerungs(RRC, Radio Resource Control)-Nachricht.

7. Verfahren nach einem der Ansprüche 1 bis 6, ferner umfassend:
Empfangen eines Downlink-Signals während eines Energiesparzustands und unter Verwendung eines oder mehrerer Strahlen, die mit einem Referenzsignal verbunden sind, das einem RSRP-Wert der RSRP-Werte entspricht.

8. Verfahren, das Folgendes umfasst:
Übertragen einer oder mehrerer Nachrichten durch eine Basisstation, die Folgendes anzeigen: einen anfänglichen Leistungsschwellenwert für die Zellmessung; und
ein reduzierter Leistungsschwellenwert für die Zellmessung, der niedriger ist als der anfängliche Leistungsschwellenwert für die Zellmessung;
Übertragen einer mit der Basisstation verbundenen Anzeige des Übergangs in einen Energiesparzustand; und
Empfangen einer Nachricht, die eine Anzeige eines Durchschnittswerts der Referenzsignal-Empfangsleistung (RSRP) für eine Vielzahl von Referenzsignalen umfasst, die größer als der reduzierte Leistungsschwellenwert sind.

9. Verfahren nach Anspruch 8, wobei die eine oder mehreren Nachrichten ferner eine Downlink-Übertragung von Synchronisationssignalblöcken (SSBs) anzeigen, wobei die SSBs die Vielzahl von Referenzsignalen umfassen, und wobei das Übertragen der Anzeige eines Übergangs in den Energiesparzustand das Übertragen einer Nachricht umfasst, die einen Leistungsversatz der SSBs relativ zum anfänglichen Leistungsschwellenwert für die Zellmessung umfasst.

10. Verfahren nach einem der Ansprüche 8 bis 9, ferner umfassend:
Übertragen einer Anweisung, die anzeigt, dass die Übertragung von Synchronisationssignalblöcken (SSBs) gestoppt wird;
Überspringen, basierend auf der Anweisung, des Empfangens der Messung der SSBs, während der die Übertragung der SSBs gestoppt wird; und
Überspringen, basierend auf dem Überspringen der Messung der SSBs, des Empfangens der Übertragung eines Messberichts.

11. Verfahren nach einem der Ansprüche 8 bis 10, wobei das Empfangen der Nachricht das Empfangen eines Zellmessberichts umfasst, der einen gefilterten RSRP-Wert der Schicht 3 umfasst, wobei das Empfangen der Nachricht nach dem Übertragen der mit der Basisstation verbundenen Anzeige des Übergangs in den Energiesparzustand erfolgt.

12. Verfahren nach einem der Ansprüche 8 bis 11, ferner umfassend:
Empfangen einer Nachricht, die Informationen zur Unterstützung von drahtlosen Vorrichtungen umfasst, die einen Übergang der Basisstation von einem Nicht-Energiesparzustand in den Energiesparzustand anfordern, wobei das Übertragen der Anzeige eines Übergangs in den Energiesparzustand auf dem Empfang der Nachricht basiert.

13. Computergerät umfassend:
einen oder mehrere Prozessoren; und
Speicher, der Anweisungen speichert, die, wenn sie von dem einen oder den mehreren Prozessoren ausgeführt werden, die Computervorrichtung dazu veranlassen, Folgendes auszuführen:
das Verfahren nach einem der Ansprüche 1 bis 7; oder
das Verfahren nach einem der Ansprüche 8 bis 12.

14. System umfassend:
eine drahtlose Vorrichtung, die so konfiguriert ist, dass sie das Verfahren nach einem der Ansprüche 1 bis 7 ausführt; und
eine Basisstation, die so konfiguriert ist, dass sie das Verfahren nach einem der Ansprüche 8 bis 12 ausführt.

15. Computerlesbares Medium, das Anweisungen speichert, die bei ihrer Ausführung Folgendes ausführen:
das Verfahren nach einem der Ansprüche 1 bis 7; oder
das Verfahren nach einem der Ansprüche 8 bis 12.

## Revendications

1. Procédé, comprenant le fait de :
recevoir, par le biais d'un dispositif sans fil, un ou plusieurs messages indiquant :
un seuil de puissance initial pour une mesure de cellule ; et
un seuil de puissance réduit pour une mesure de cellule, qui est inférieur au seuil de puissance initial pour la mesure de cellule ;
recevoir une indication d'une transition, associée à une station de base, vers un état d'économie d'énergie ;
déterminer, pour chacun d'une pluralité de signaux de référence, une valeur de puissance reçue de signal de référence, RSRP ;
déterminer une moyenne des valeurs RSRP, pour la pluralité de signaux de référence, qui sont supérieures au seuil de puissance réduit ; et
transmettre un message comprenant une indication de la moyenne des valeurs RSRP.

2. Procédé selon la revendication 1, dans lequel le ou les messages indiquent en outre une transmission en liaison descendante de blocs de signaux de synchronisation, SSB, dans lesquels les SSB comprennent la pluralité de signaux de référence, et dans laquelle la réception de l'indication d'une transition vers l'état d'économie d'énergie comprend le fait de recevoir un message comprenant un décalage de puissance des SSB par rapport au seuil de puissance initial pour la mesure de cellule.

3. Procédé selon l'une quelconque des revendications 1 à 2, comprenant en outre le fait de :
recevoir une commande indiquant que la transmission de blocs de signaux de synchronisation, SSB, est arrêtée ;
sauter, sur la base de la commande, la mesure des SSB au cours de laquelle la transmission des SSB est arrêtée ; et
sauter, sur la base du saut de la mesure des SSB, la transmission d'un rapport de mesure.

4. Procédé selon l'une quelconque des revendications 1 à 3, dans lequel la transmission du message comprend le fait de transmettre un rapport de mesure de cellule comprenant une valeur RSRP filtrée de couche 3, dans lequel la détermination de la moyenne des valeurs RSRP qui sont supérieures au seuil de puissance réduit a lieu après la réception de l'indication de la transition, associée à la station de base, vers l'état d'économie d'énergie.

5. Procédé selon l'une quelconque des revendications 1 à 4, comprenant en outre le fait de :
transmettre un message comprenant des informations d'assistance pour dispositif sans fil demandant une transition de la station de base d'un état sans économie d'énergie vers l'état d'économie d'énergie.

6. Procédé selon l'une quelconque des revendications 1 à 5, dans lequel la réception de l'indication de la transition, associée à la station de base, vers l'état d'économie d'énergie comprend le fait de recevoir au moins l'un des éléments parmi :
des informations de commande de liaison descendante, DCI ;
un élément de commande, CE, de commande d'accès au support, MAC ; et
un message de gestion de ressources radio, RRC.

7. Procédé selon l'une quelconque des revendications 1 à 6, comprenant en outre le fait de :
recevoir, au cours d'un état d'économie d'énergie, et à l'aide d'un ou plusieurs faisceaux associés à un signal de référence correspondant à une valeur RSRP parmi les valeurs RSRP, un signal de liaison descendante.

8. Procédé, comprenant le fait de :
transmettre, par le biais d'une station de base, un ou plusieurs messages indiquant :
un seuil de puissance initial pour une mesure de cellule ; et
un seuil de puissance réduit pour une mesure de cellule, qui est inférieur au seuil de puissance initial pour la mesure de cellule ;
transmettre une indication d'une transition, associée à la station de base, vers un état d'économie d'énergie ; et
recevoir un message comprenant une indication d'une moyenne des valeurs de puissance reçue de signal de référence, RSRP, pour une pluralité de signaux de référence, qui sont supérieures au seuil de puissance réduit.

9. Procédé selon la revendication 8, dans lequel le ou les messages indiquent en outre une transmission en liaison descendante de blocs de signaux de synchronisation, SSB, dans lesquels les SSB comprennent la pluralité de signaux de référence, et dans laquelle la transmission de l'indication d'une transition vers l'état d'économie d'énergie comprend le fait de transmettre un message comprenant un décalage de puissance des SSB par rapport au seuil de puissance initial pour la mesure de cellule.

10. Procédé selon l'une quelconque des revendications 8 à 9, comprenant en outre le fait de :
transmettre une commande indiquant que la transmission de blocs de signaux de synchronisation, SSB, est arrêtée ;
sauter, sur la base de la commande, la réception de la mesure des SSB au cours de laquelle la transmission des SSB est arrêtée ; et
sauter, sur la base du saut de la mesure des SSB, la réception de la transmission d'un rapport de mesure.

11. Procédé selon l'une quelconque des revendications 8 à 10, dans lequel la réception du message comprend le fait de recevoir un rapport de mesure de cellule comprenant une valeur RSRP filtrée de couche 3, dans laquelle la réception du message a lieu après la transmission de l'indication de la transition, associée à la station de base, vers l'état d'économie d'énergie.

12. Procédé selon l'une quelconque des revendications 8 à 11, comprenant en outre le fait de :
recevoir un message comprenant des informations d'assistance pour dispositif sans fil demandant une transition de la station de base d'un état sans économie d'énergie vers l'état d'économie d'énergie, dans laquelle la transmission de l'indication d'une transition vers l'état d'économie d'énergie est basée sur la réception du message.

13. Dispositif informatique, comprenant :
un ou plusieurs processeurs ; et
une mémoire stockant des instructions qui, lorsqu'elles sont exécutées par le ou les processeurs, amènent le dispositif informatique à mettre en œuvre :
le procédé selon l'une quelconque des revendications 1 à 7 ; ou
le procédé selon l'une quelconque des revendications 8 à 12.

14. Système, comprenant :
un dispositif sans fil configuré pour mettre en œuvre le procédé selon l'une quelconque des revendications 1 à 7 ; et
une station de base configurée pour mettre en œuvre le procédé selon l'une quelconque des revendications 8 à 12.

15. Support lisible par ordinateur stockant des instructions qui, lorsqu'elles sont exécutées, occasionnent la mise en œuvre :
du procédé selon l'une quelconque des revendications 1 à 7 ; ou
du procédé selon l'une quelconque des revendications 8 à 12.
